(19)

**Europäisches Patentamt**
**European Patent Office**
**Office européen des brevets**

(11) **EP 4 703 977 A1**

(12) **EUROPEAN PATENT APPLICATION**

(43) Date of publication:
**04.03.2026 Bulletin 2026/10**

(21) Application number: **25197755.9**

(22) Date of filing: **22.08.2025**

(51) International Patent Classification (IPC):
**G06N 5/01** (2023.01)    **G06N 10/60** (2022.01)
**G06N 3/126** (2023.01)

(52) Cooperative Patent Classification (CPC):
**G06N 10/60; G06N 5/01;** G06N 3/126

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **29.08.2024 GB 202412676**
**01.08.2025 GB 202512598**

(71) Applicant: **Phasecraft Limited**
**London Greater London W1T 4PW (GB)**

(72) Inventors:
• **CEPAITE, Ieva**
**London, W1T 4PW (GB)**
• **VAISHNAV, Niam**
**London, W1T 4PW (GB)**
• **ZHOU, Leo**
**London, W1T 4PW (GB)**
• **MONTANARO, Ashley**
**London, W1T 4PW (GB)**

(74) Representative: **Mathys & Squire**
**The Shard**
**32 London Bridge Street**
**London SE1 9SG (GB)**

(54) **QUANTUM-COMPUTATIONALLY ENHANCED OPTIMISATION ALGORITHMS**

(57)    The invention relates to methods and apparatuses for improving the efficiency of solving optimisation problems. The invention includes the use of a quantum computer to provide a warm start to a known optimisation algorithm, thereby resulting in the known algorithm starting from a better (more promising) location in the solution space. This better starting point allows the known algorithm to converge on a good (i.e. toward an optimum) solution quicker, e.g. in fewer steps, and to reach better solutions sooner than known methods involving cold starts.

FIG. 1

EP 4 703 977 A1

**Description**

<u>Field</u>

The present invention relates to improvements in solving classical optimisation algorithms and in particular to using the output of optimisation problems as a "warm start" to classical optimisation problems.

<u>Background</u>

Solving hard optimisation and constraint satisfaction problems has long been predicted to be a significant application of quantum computers. These problems, which are ubiquitous in industries such as logistics, telecommunications, and healthcare, are crucial for optimizing processes, reducing costs, and improving decision-making.

Traditional quantum approaches - going back to Grover's famous quantum unstructured search algorithm - require deep quantum circuits and hence inevitably necessitate fault-tolerance. The Quantum Approximate Optimisation Algorithm (QAOA) represents a promising alternative that may be more suitable for near-term quantum computers. Unlike Grover's algorithm, the focus of QAOA is the minimization of a cost function constructed as a sum of local costs. This approach offers several advantages:

- Taking advantage of the problem structure: QAOA makes use of the structure of the problem, allowing for more efficient solutions by leveraging local cost functions.

- Efficient implementation: These local costs can often be implemented highly efficiently in terms of quantum gates, making the algorithm more practical for current quantum hardware.

- Variational optimisation: The algorithm relies on parameters that can be optimized variationally in order to get the most out of near-term quantum hardware.

Despite these advantages, the limited capabilities of today's quantum hardware and the significant advancements that have been made in classical optimisation algorithms pose challenges for QAOA to outperform the best classical approaches directly. Quantum computers today are said to be in the NISQ (Noisy Intermediate Scale Quantum) era. NISQ quantum computers with physically reasonable error rates have at most hundreds of qubits, and can execute at most thousands of 2-qubit gates. Classical optimisation algorithms can be divided into exact algorithms (based on techniques such as branch-and-bound), which guarantee that an optimal solution can be found (but which may take exponential time), and heuristics, which make no such guarantees, but can run much quicker. State-of-the-art exact optimisation algorithms can solve arbitrary instances of many important optimisation problems - such as the MAX-CUT problem, which we will discuss below - on up to about 100 variables. State-of-the-art heuristics can solve instances on hundreds or thousands of variables to optimality in practice.

<u>Summary</u>

The present invention is directed to improving the efficiency of quantum computers when applied to classical optimisation protocols to arrive at an improved solution. To date, known approaches which aim to incorporate quantum computation into solving optimisation problems all focus on using a quantum computer to provide as complete a solution as possible to the optimisation problem. In recognition of the limitations of NISQ era quantum computers, developers of such systems have sometimes incorporated classically executed algorithms (i.e. enacted on a classical computer) in an attempt to "tidy up" the results output by the quantum computer using a bespoke algorithm.

The classically executed algorithms previously performed on the outputs of quantum processes are bespoke in the sense that the specifics of the problem being addressed, the quantum computer, and the encoding and operation of the quantum computation all feed into the nature of the errors in the output. Consequently, the classically executed algorithms which have been used to date tend to be highly specific and directed to fixing the errors in the output of the quantum part of the algorithm.. In other words, the overwhelming understanding in this field so far has been that the situation is best approached by providing the best available quantum algorithm to give a solution to the optimisation problem and then to prepare or find a second, bespoke, classical algorithm to apply appropriate corrections. This approach of relying on a quantum algorithm to produce a near-optimal solution and then making small modifications to that solution using a classical algorithm requires the quantum computer to be excessively accurate (i.e. beyond what is practical in the NISQ era), and fails to take full advantage of the capabilities of existing classical algorithms for approaching the optimisation problem..

By contrast, the present invention goes directly against this accepted understanding in the field. Instead of trying to correct the output from the NISQ quantum process, the core intuition is to realise that even approximate solutions provided by the quantum process encode useful and relevant information on the encoded problem. In particular, the quantum process has the effect of probing the solution space of the problem and tends to cluster around better solutions (by design of the quantum protocol). This means that even though noise and errors are present in the output from the quantum process, these can be viewed as greatly improved inputs to classical algorithms. This allows for the much larger computing power of classical computation, as well as the vast array of existing classical algorithms for solving classical optimisation problems can be leveraged by using the quantum output as a warm start. That is, instead of focussing on the noise, and trying to remove it, the focus of this document is to recognise that the output encodes valuable information and represents a much better starting point than is possible with a complete classical approach.

To develop this idea a little, note that many hard combinatorial optimisation problems have the feature that their solution space is difficult to navigate, with many local optima and few global optima (in some cases there may be just one global optimum). Many (though not all) classical algorithms for solving hard optimisation problems are based on starting with a random solution, and then navigating around that solution space from that initial solution. A quantum optimisation algorithm on the other hand can sample from relatively high-quality solutions (due to the design of quantum algorithms and the nature of employing a quantum computer in this context), which may be both closer to the globally optimal solution than a random solution would be, and may have diversity between the solutions which means that local search starting from that solution is less likely to get stuck in the same local minimum every time.

The upshot of considering these points together provides the intuition discovered by the inventors for why the presently disclosed approach works for a broad family of problems and algorithms. The present work provides a method for accelerating a classical algorithm based on starting with one or more initial solutions, which are then improved in some way. The improvement occurs in cases where these initial solutions are generated uniformly at random as well as where the improvement process is based on local search methods (e.g. tabu search).

In summary, the methods and apparatuses disclosed herein provide improved computational efficiency in solving a wide array of optimisation problems, leveraging approximate solutions derived from a quantum optimisation process by using the approximate solutions as high quality inputs ("warm starts") to known approaches (e.g. iterative search protocols) performed on classical computers.

Accordingly, disclosed herein is a method for improving the efficiency of solutions to optimisation problems, the method comprising:

(1) selecting an optimisation problem from a set of optimisation problems;

(2) selecting a known algorithm for solving the selected optimisation problem from a list of known algorithms, where each known algorithm in the list is seeded with a starting input and iteratively converges toward an improved solution;

(3) mapping the optimisation problem onto qubits of a quantum computer;

(4) performing, using the quantum computer, operations to derive an approximate solution to the optimisation problem;

(5) seeding the known algorithm using the approximate solution as the input and running the selected known algorithm to arrive at an improved solution.

As used herein, the set of known classical algorithm for solving the optimisation problem refers to known algorithms which are used as a complete approach to solving the optimisation problem. That is to say, that they are known to be used as algorithms which, starting from one or more randomly or semi-randomly selected start points, can be used to iterate towards a better solution. In practice, this may mean starting with an appropriate length string of randomised bits, for example. In particular, it is important to note that the bespoke algorithms discussed above which are used for "tidying up" quantum outputs are not considered "known algorithms for solving the optimisation problem", since they do not solve the optimisation problem, they merely clean up the output of a quantum algorithm.

As noted above, the use of the output from the quantum computer leads to a "warm start" for the known classical algorithm. This leads to improved efficiency in applying the known classical algorithm because the starting point is better than traditional approaches which seed the algorithm with random or semi-random starting points, so leads to faster convergence toward optimum solutions, or equivalently, arriving at a better position sooner when compared with random or semi-random "cold starts". All of this has the effect of greatly improving efficiency in the use of computational resources in tackling optimisation problems even though the same algorithm may be being used in each case - the warm start provided by the quantum computation of the present invention provides the efficiency gains.

As used herein, semi-random is used for situations in which obviously bad starts are culled prior to starting, but where large parts of the solution space are unsuitable for a start point because of the strong likelihood that one or more local minima exist near to a randomly assigned (post-cull) starting point, or where the sheer size of the solution space is so large that the distance from a randomly assigned (post-cull) starting point to a good solution is likely to be too large to have a substantial probability of tending toward an optimum solution for the vast majority of the solution space.

The nature of this invention, being that a warm start is provided, means that the invention is suited to a wide range of problems which rely on iterative search procedures, since provided a provably better starting point necessarily results in a more efficient use of resources to provide a better solution and faster than that same algorithm run from a cold (random or semi-random) start.

As an example, the known optimisation algorithm starting from a warm start may reach an equally optimal result (or indeed a better one) in a fraction of the time the same algorithm would from a cold start. This fraction may be 1/2, 1/10, or even of the order of 1/100 or smaller.

Optionally, the set of known algorithms includes: local search algorithms; genetic algorithms; and/or simulated annealing. These are examples of typical algorithms which are traditionally seeded with random or semi-random starting points, and which therefore (as noted above) are susceptible to improvement via the quantum-enhanced warm start disclosed herein.

Optionally the operations performed on the quantum computer to derive an approximate solution include using the quantum approximate optimisation algorithm. The Quantum Approximate Optimisation Algorithm (QAOA). As noted above, the application of QAOA allows the structure of the problem to be used in formulating the problem, so that the encoding of the problem on the quantum computer is formulated in a manner which takes account of the structure of the problem and because QAOA is more appropriate for implementing on current and near-term quantum computers (i.e. quantum computers of the NISQ era).

Optionally, using the QAOA includes identifying parameters ($\beta$, $y$) for use in the Quantum Approximate Optimisation Algorithm, QAOA, the method further comprising: receiving the optimisation problem to which QAOA is to be applied in a graph representation, the graph representation having a degree distribution representing the proportion of nodes $f_d$ having connectivity d in the graph representation, where d ranges from 1 to $d_{max}$; identifying an optimal set of parameters ($\beta^{opt}[d], \gamma^{opt}[d]$) for graphs having uniform connectivity d for one or more values of d based on the degree distribution; and applying a correction to the identified simplified optimal parameters, based at least in part on the degree distribution of the graph representation, to provide the output QAOA parameters ($\beta$, $\gamma$).

Here, the degree distribution can be thought of as e.g. a number of nodes $n_i$ which have connectivity i. This may be provided as a raw number or as a fraction of the total number of nodes N, i.e. $f_i = \frac{n_i}{N}$. The connectivity of nodes spans a range from 1 to some highest value, $d_{max}$, with potentially there being some connectivity values for which no node has that value.

The intuition in this approach is that while the exact calculation of the parameters ($\beta$, $\gamma$) is difficult, using optimal parameters from different graphs which have similar characteristics can nevertheless lead to good results. In particular, the inventors have identified regimes and characteristics which can be used to provide a reasonable value for the parameters ($\beta$, $\gamma$). Moreover, a correction can be made to account for the differences between the optimal result and the result for the actual graph for which the result is to be calculated.

Optionally, the QAOA comprises a depth p representing a number of layers in the QAOA, and wherein the parameters ($\beta$, $\gamma$) are identified for each layer separately. As noted above, this allows for the QAOA process to iteratively improve by running for multiple levels. Correspondingly, finding good parameters for each layer helps to drive the process toward outputting accurate results.

Optionally, identifying an optimal set of parameters includes receiving pre-calculated values ($\beta^{opt}[d], \gamma^{opt}[d]$) = ($\beta^{tree}[d], \gamma^{tree}[d]$) for d-regular tree graphs at values of d for which $f_d$ is nonzero in the graph representation and fitting the values to functions for each of $\beta$ and $\gamma$ in terms of d. The properties of d-regular tree graphs have been studied and, due to their regularity, their properties are stable. This allows their properties to be studied, and applied to other situations.

This formulation is based on the Fixed Angle Conjecture which states that for every regular graph, there is a set of QAOA angles which achieve a performance which is lower-bounded by some worst-case guarantee. By approaching the graph representation of the problem we are interested in under this formalism (even though the graph representation may be neither d-regular nor a tree graph) the useful result of lower bounding the performance can be leveraged into this new regime. The intuition developed by the inventors in this regard is that many graphs "look like" tree graphs locally (and in this local view tend not to have large variations in the connectivity of local nodes).

Optionally, the pre-calculated values are calculated by optimising a formula recursively defined in terms of expectation values of operators measured in the computational basis:

$$v_p(d, \beta, \gamma) = \frac{i\sqrt{d}}{2} \sum_{a,b} a_0 b_0 f(\boldsymbol{a}) f(\boldsymbol{b}) H_d^{(p)}(\boldsymbol{a}) H_d^{(p)}(\boldsymbol{b}) \sin\left[\frac{1}{\sqrt{d}} \boldsymbol{\Gamma} \cdot (\boldsymbol{ab})\right].$$

Here $v_p(d,(\beta,\gamma)$ is a measure of the quality of parameters $(\beta,\gamma)$ for a given depth d. A good set of parameters gives a value of around 1. The formula above is iterative in the sense that the form of **a, b,**f(**a**), and f(**b**)is defined as follows:

$$H_d^{(0)}(\boldsymbol{a});$$

$$H_d^{(m)}(\boldsymbol{a}) = \left(\sum_b f(\boldsymbol{b}) H_d^{(m-1)}(\boldsymbol{b}) \cos\left[\frac{1}{\sqrt{d}}\boldsymbol{\Gamma}\cdot(\boldsymbol{ab})\right]\right)^d,$$

where $1 \leq m \leq p$

Also **ab** is the entry-wise product, $(\boldsymbol{ab})_j = a_j b_j$, and **a, b** and $\Gamma$ are (2p + 1)-component vectors indexed as:

$$\boldsymbol{a} = \left(a_1, a_2, \ldots, a_p, a_0, a_{-p}, \ldots, a_{-2}, a_{-1},\right)$$

$$\boldsymbol{b} = \left(b_1, b_2, \ldots, b_p, b_0, b_{-p}, \ldots, b_{-2}, b_{-1},\right);$$

and

$$\Gamma_r = \gamma_r; \ \Gamma_0 = 0; \ \Gamma_{-r} = -\gamma_r$$

Finally, f(**a**) is defined in terms of the Pauli $X$ operator and the values for $\beta$, as follows:

$$f(\boldsymbol{a}) = \frac{1}{2}\langle a_1|e^{i\beta_1 X}|a_2\rangle \ldots \langle a_{p-1}|e^{i\beta_{p-1}X}|a_p\rangle\langle a_p|e^{i\beta_p X}|a_0\rangle$$

$$\times \langle a_0|e^{-i\beta_p X}|a_{-p}\rangle\langle a_{-p}|e^{-i\beta_{p-1}X}|a_{-(p-1)}\rangle \ldots \langle a_{-2}|e^{-i\beta_1 X}|a_{-1}\rangle$$

Where $a_i \in \{+1, -1\}$ enumerates the two computational basis states and:

$$\langle a_1|e^{i\beta_1 X}|a_2\rangle = \begin{cases} \cos(\beta) & \text{if } a_1 = a_2 \\ i\cdot\sin(\beta) & \text{if } a_1 \neq a_2 \end{cases}$$

This process provides a suitable framework for identifying optimal values for $(\beta,\gamma)$ in d-regular tree graphs.
Optionally, the functions (which may depend on $p$) are:

$$\gamma_{p=1}^{tree}[d] \sim \tan^{-1}\left(\frac{1}{\sqrt{d-1}}\right);$$

$$\gamma_{p\geq 2}^{tree}[d] \sim \frac{1}{\sqrt{d-1}};$$

and

$$\beta_p^{tree}[d] - \beta_p^{tree}[\infty] \sim \frac{1}{d}.$$

These are found to represent the scaling well.
Optionally, the correction based on the degree distribution is:

$$(\beta, \gamma) = \sum_d f_d d \cdot (\beta_p^{tree}[d], \gamma_p^{tree}[d])$$

In other words, the non-uniform degree distribution is corrected by calculating the optimum values for *d*-regular tree graphs for any value of *d* for which at least one node in the graph representation has that connectivity, and then taking a weighted average, using the degree distribution to give more weight to more common connectivities.

Optionally, identifying an optimal set of parameters includes taking optimal parameters $(\beta^{opt}[d], \gamma^{opt}[d]) = (\beta^{SK}, \gamma^{SK})$ from the Sherrington-Kirkpatrick (SK) spin glass model. This model converges to the *d*-optimal tree graph in the limit of infinite *d*, so in effect, this allows a "backscaling" from infinite *d* to the finite levels which we want.

Optionally, the correction based at least in part on the degree distribution of the graph representation includes identifying an average degree of connectedness, $\bar{d}$ for the graph representation, and wherein the correction is:

$$(\beta, \gamma) = \left( \beta^{SK}, \gamma^{SK} \cdot \tan^{-1} \left( \frac{1}{\sqrt{\bar{d} - 1}} \right) \right).$$

The SK model assumes a complete graph (i.e. all to all connectivity). These scaling values have been found to provide a good correspondence with optimal SK values.

In some examples, a first set of QAOA parameters $(\beta_1, \gamma_1)$ and a second set of QAOA parameters $(\beta_2, \gamma_2)$ are provided, and wherein the method further includes outputting QAOA parameters by combining the first and second sets of QAOA parameters. The output QAOA parameters may further be a linear combination of the first and second sets of QAOA parameters:

$$(\beta, \gamma) = \alpha \cdot (\beta_1, \gamma_1) + (1 - \alpha) \cdot (\beta_2, \gamma_2)$$

Here, the SK and tree-based approaches are combined. The inventors have identified that the use of both approaches in a weighted manner can provide a useful way to gain the benefits of each, with the value of $\alpha$ being a free parameter to control the relative weight of the SK and tree-based approaches.

The first set of QAOA parameters may be derived, e.g. by the tree-derived approach, for example, and/or the second set of QAOA parameters may be derived by the SK-based approach.

Optionally the graph representation includes edge weights $w_{ij}$ and a number of edges $|E|$ in the graph, and the method further includes rescaling the $\gamma$ parameter:

$$\gamma \to \frac{\gamma}{\sqrt{|E|^{-1} \sum_{ij} w_{ij}^2}}.$$

Where dividing by $|E|$ serves to normalise the scaling for the size of the graph, and the sum is over *unique i,j* pairs (so as to avoid double counting edges).

Optionally, the method may further include using the obtained $(\beta, \gamma)$ values to run the Quantum Approximate Optimisation Algorithm. This implements the values derived in this way, in the manner they are intended to be used.

In some cases, the values may not be calculated in the manner discussed above at each loop. Instead, a database may be consulted of optimal tree or SK values for various connectivities, *d*, or for problems in graph representation having the same or similar values. In such cases, the values may be received (rather than calculated), and used in a QAOA procedure.

The optimisation problem which is expressed in the graph representation may be a Maximum Independent Set, MIS, problem, a Maximum Cut, Max-Cut, or a Quadratic Unconstrained Binary Optimisation, QUBO, problem.

Optionally, the QAOA is applied to a Maximum Independent Set, MIS, optimisation problem, the method further comprising: receiving a MIS problem; receiving one or more values for a QAOA parameter $\gamma$, the value(s) being derived by fitting a function to optimum values, $\gamma^*$, calculated for graphs of different average connectedness, $\langle d \rangle$; and performing QAOA on the MIS problem, using the optimal $\gamma$ parameter(s).

Here, the MIS problem makes use of known optimum values, precalculated for given regimes, and applies them. This reduces complexity since the values can be simply retrieved, having been precalculated according to the methods discussed herein. As with the discussion above, this improves efficiency since an optimisation does not need to be performed each time the QAOA is to be run. Note that the MIS problem has been less studied than other graph-problems, so the finding of good parameters in this way represents a real step forward.

In line with the above discussion, the QAOA may be performed using $p \geq 1$ layers and a value for $\gamma_p$ is received for each layer.

Optionally, the optimal values, $\gamma*$, are calculated as a function of (d) by classically optimising QAOA circuits. That is, using classical optimisation processes to identify the optimal angles for each layer of a p layer QAOA process.

Optionally, the method further comprises performing a fitting procedure on the optimal values, $\gamma*$, as a function of $\langle d \rangle$, the fitting procedure comprising optimising values for $c_i; i = \{1 \ldots 4\}$ to provide a best fit between the calculated optimal values and the function:

$$c_1 + \frac{c_2}{\langle d \rangle^{c_3} + c_4}.$$

By preparing a function in this way, the dependence on d can be extracted and a reasonable value for the QAOA parameter can be obtained for the relevant average connectivity of the graph representation of the MIS problem.

The method may further comprise receiving one or more further QAOA parameters, $\beta$. Although the $\beta$ values change less than the $\gamma$ values (meaning they are less critical), it is still important to ensure that a good $\beta$ value is obtained. Once more, these may be provided for each layer, *p*.

Since the $\beta$ values are less sensitive than the $\gamma$ values, their calculation can be performed a little more loosely. Accordingly, the received value(s) for the one of more further QAOA parameters may be the average of the optimal $\beta$ obtained at a rounded average connectedness, $\langle d \rangle$ for the MIS graph:

$$\beta_{new} = \langle \beta_{opt} \rangle_{\langle d \rangle}.$$

These may again be calculated using classical optimisation processes. It is empirically found that $\beta$ changes less at higher values of *d*, so where a pre-calculated value has not been stored for a given use case, the highest value of *d*, which has been stored and which is lower than that value of *d* may be used instead.

Also disclosed herein is a computer apparatus for identifying parameters $(\beta, \gamma)$ for use in the Quantum Approximate Optimisation Algorithm, QAOA, the apparatus comprising: one or more processors configured to execute any of the methods discussed above.

Optionally, the method further comprises: prior to the mapping step, splitting the optimisation problem into two or more sub-problems; during the performing stage, solving each sub-problem using the quantum computer to derive approximate sub-solutions to each sub-problem and assembling each approximate sub-solution together to provide the approximate solution to the optimisation problem. In many cases, optimisation problems can be approximately solved in smaller pieces, such that the individual smaller solutions nevertheless encode information about good solutions to the problem as a whole because they represent good solutions to the sub-problem to which they relate. This usually results in the aggregate of the solutions to the sub-problems being itself a good approximation to the solution to the overall problem. Here the intuition is that a complete problem is often formed of subproblems which are weakly connected to other subproblems. This means that the effect of subproblems on each other in overall solutions is small (the subproblems only interact weakly with one another), so a good solution to each subproblem in these cases leads to a good solution to the overall problem.

Optionally, mapping the optimisation problem onto qubits of the quantum computer includes: identifying fundamental entities of the optimisation problem; and encoding information characterising each fundamental entity on a respective qubit of the quantum computer. This allows the qubits of the process to be associated with fundamental entities in a one-to-one correspondence, and thereby simplifies the structure of the quantum algorithm while keeping the form of the algorithm intuitive with regard to the optimisation problem being solved.

Optionally, the optimisation problem is a graph theory problem and the fundamental entities are vertices in a graph. Graph theory is a powerful tool for approaching many kinds of optimisation problem, and has the additional benefit that the arrangement of fundamental entities and interrelations between them can be mapped to vertices and edges, respectively, of a graph. Moreover, the physical layout of qubits on the quantum computer are characterised by their location relative to one another, and the links between them (here we mean that two qubits are linked if the hardware allows a gate to act on those two qubits without swapping or moving the qubits). In such cases, a mapping between fundamental entities and their respective qubits is based on the connectivity between the fundamental entities and the connectivity of qubits in the quantum computer.

Optionally, the performing step includes:

(a) identifying a set of quantum operations, T, to be performed between a plurality of qubits;

(b) identifying a graph distance, d(T), between the qubits on the quantum hardware across which each of the quantum operations in the set are to be performed;

(c) identifying a subset of the quantum operations for which the graph distance between each of the qubits corresponding to that quantum operation is 1, implementing those quantum operations, and removing each such operation from the set of quantum operations;

(d) performing one or more swap operations; and

(e) repeating steps (b) to (d) until all quantum operations in the set have been implemented.

Here the graph distance can be thought of as generally the minimum number of swap operations required to bring the qubits across which a given operation is to be performed into locations where that operation can be performed. For two qubits, this is the smallest number of swaps required to bring them into an adjacent (i.e. "linked") configuration. For operations which act across a larger number of qubits, there are various ways to consider how this should be calculated, which will depend on the hardware connectivity and the complexity of gates which can be implemented.

In step (c) a graph distance of 1 means identifying a subset of the quantum operations which can be implemented given the connectivity constraints of the quantum processor, which may mean pairwise direct links or other adjacency structures, depending on hardware connectivity.

For example, any multi-qubit gate (operating on two or more qubits) can be decomposed into one or more two-qubit gates. Therefore, where the operation acts across three qubits, the connectivity of the hardware allows for three qubits to all be adjacent, and three qubit gates are supported, one way to calculate the distance is to count the minimum number of swaps to bring the three qubits into a mutually linked arrangement. The alternative is to consider what the sequence of two qubit gates is which should be enacted across which pairs of qubits and which swap operations will be needed as part of that. These two will in general have different costs, and this concept can be extended to four or more qubit operations in a natural manner. In cases where the aggregate costs of multiple two-qubit gates is weighed against a single gate operating across more than two qubits additional penalty costs may be applied to account for the additional circuit depth typically required when deconstructing a single gate operating across more than two qubits into two qubit gates. In general however, D(T) is closely related to how far apart any of the qubits across which an operation is to be performed are from one another.

A way to think about this is that we say that an operation on k qubits can be performed if all the qubits are adjacent to each other in the connectivity graph of the processor. In practice, almost always, k-qubit operations are decomposed into 2-qubit gates. To implement these gates, in some cases, may still involve swap operations to move the qubits around to perform that operation.

More generally, as used herein, the term swap operation may mean one of a number of operations discussed below.

The first is a swap operation in which three CNOT gates are used between two qubits A and B (in the order A controls B $\rightarrow$ B controls A $\rightarrow$ A controls B) to swap the information encoded on qubits A and B. This is the most commonly used meaning.

A second meaning is to physically rearrange the qubits or their interconnections on the quantum hardware. This is limited by the constraints of the hardware, and may incur costs in implementing (most commonly a cost relating to noise and/or decoherence due to the time taken to physically change the arrangement).

The final meaning is that in some cases multiple required quantum operations may be combined into an in a more efficient manner than taking the operations as separate steps. For example, where the information on more than two qubits needs to be rearranged, it might be more efficient to enact this in a series of operations across all qubits involved rather than implementing the three CNOT gates required for each pairwise swap. In other examples, it may not be essential to use all three CNOTs to swap two qubits to interchange the desired information. When acting on two qubits in the state $|a\rangle|b\rangle$ (where a and b are each either 0 or 1), a CNOT gate from the first to the second qubit performs the operation $|a\rangle|b\rangle \rightarrow |a\rangle|a + b(mod\ 2)\rangle$. So if we follow this with a CNOT from the second to the first qubit, we get the state $|b\rangle|a + b(mod\ 2)\rangle$. This has transferred the information that was in the second qubit to the first qubit, and if we do not need to use the second qubit again, this is basically as good as doing a full SWAP operation (which would have required one more CNOT gate).

Optionally, step (d) includes:

(i) identifying all possible pairwise qubit swap operations;
(ii) for each possible pairwise qubit swap operation, computing a total graph distance D for all quantum operations in the set having implemented that pairwise qubit swap operation;
(iii) where a possible pairwise qubit swap operation reduces D, implementing a pairwise qubit swap operation which causes the greatest reduction in D; and
(iv) where no possible pairwise qubit swap operation reduces D, implementing a pairwise qubit swap operation which reduces a smallest graph distance d between a pair of qubits on the quantum hardware between which the quantum operations in the set are to be performed.

This development of the method allows the operations which can be performed easily at any given stage to be performed and struck off the list of operations to be performed. Then the procedure iterates through the possible swaps which can be performed and selected the one (or one of the ones) which leads to the best improvement of the arrangement (i.e. the arrangement which leaves the qubits involved in operations still to be performed as close as possible to other qubits across which those operations are to be implemented, in general). Where there is no clear best operation, the smallest individual distance is reduced as this brings at least one operation closer to being enacted. By looping though this method each operation to be performed will necessarily be performed, in a clear and efficient manner.

Optionally D is calculated as:

$$D = \sum_{T} d(T)^{q}$$

wherein q is a parameter selected to implement the optimisation problem, optionally wherein q = **1.** This provides a concrete distance function as well as a tuneable parameter to weight the effect of outliers of the distribution (that is, either unusually close or unusually distant qubits which must be operated on as part of an operation) and smoothen the process.

Optionally, prior to step (3), an efficient mapping is identified by: receiving the QAOA problem as a graph representation $G$ with vertices representing logical entities and edges representing logical interactions therebetween; receiving a quantum hardware graph, $H$, with vertices representing a physical layout of qubits and edges representing connections between qubits; constructing a graph $S(V, E)$ comprising a starting vertex $s$ representing each logical entity in $G$ mapped to a physical qubit in $H$; wherein: each vertex $v \in V$ other than s is a different partial circuit $C_i$ comprising one or more gates selected from: a swap interaction corresponding to a valid edge in H; and/or an interaction term representing a logical edge in G; and wherein each edge, E, in S joins pairs of partial circuits $(C_i, C_j)$ where $C_j$ includes the full ordered set of operations in $C_i$, followed by a set of disjoint swaps in H followed by one or more interaction terms from G; identifying a list of interactions, $L$, comprising every interaction term in G; initialising a set of frontier vertices {$n'$}, wherein each vertex $n'$ is joined to s by an edge E in S; setting the starting vertex s as a current vertex $n$, and exploring the graph S by: (i) selecting a vertex from the frontier of vertices {$n'$} and setting that vertex as the current vertex $n$; (ii) updating the set of frontier vertices {$n'$} by: (a) removing the current vertex $n$ from the set {$n'$}; and (b) adding all vertices joined to $n$ by an edge E in S to the set {$n'$}; (iii) comparing the set of interactions from G which are present in the partial circuit corresponding to the current vertex, $n$, with $L$; and, based on the comparison: (a) in the event that there are interactions in the list $L$ which are not present in the set of interactions from $G$ which are present in the partial circuit corresponding to the current vertex, $n$, repeating steps (i) to (iii) from the current vertex, $n$; or (b) in the event that every interaction in the list $L$ is present in the set of interactions from $G$ which are present in the partial circuit corresponding to the current vertex, $n$, ending the exploration of the graph, and outputting the partial circuits of the present vertex, $n$.

Since the problems discussed herein all have a graph representation, and the qubits of a quantum computer and their interconnections may also be viewed as a graph, it is natural to use the concepts from graph theory to identify mappings and procedures for ensuring that each term in the problem is executable by the quantum computer. In essence, this stems from the staggeringly large number of possible ways to map the problem onto a computer and to implement the various swaps interactions necessary (including the swap interactions needed to bring the qubits close enough to implement the term).

In this way a mapping between problem vertices, i.e. the logical entities in the problem which are represented by the vertices in $G$ are each mapped to a respective qubit. From here, the graph S is explored until all interactions have been performed. Note that this means that the exploration has arrived at a "target node". The exploration from node to node means (due to the manner in which S has been set up) including progressively more swap and interaction terms (specifically, at least one additional swap and a least one additional interaction term at each new node) until all interactions are present - at which point the method terminates, and outputs the partial circuit represented by that target node. This can be thought of as a method for finding target nodes, which is equivalent to finding a valid string of swaps and interactions which completes each interaction in $G$, consistently with the connectivity of the both the graph $G$ and the hardware layout $H$.

In some cases, edges in the graph $S$ also include weights, $W$, relating to the computational cost of traversing the edge. This information can be used to help make a selection of which node to move to on each loop of the method.

Additionally, or alternatively, the selection in step (ii) further depends on at least one of: a cost function $g$, representing a cost for the partial circuit represented by node $n$; and/or a cost function $h$, representing an estimated cumulative cost remaining before the list of interactions in $G$ is empty. These cost functions can be used to try to drive the search toward a more efficient search strategy. E.g. when $g$ is 0, we have a greedy search (take the best immediate option), and when $h$ is 0, we have a uniform cost search. Other cost models may be used, including applying a degree of randomness or weighted randomness.

Optionally, the selection in step (ii) precludes nodes already visited in prior steps. Additionally or alternatively, the selection in step (ii) precludes nodes including interactions in G which have already occurred in a partial circuit corresponding to a node already visited in prior steps. These features can help avoid looping.

Optionally, the method further comprises executing the method at least one additional time, wherein each additional execution of the method includes making at least one different selection in an execution of step (ii); and selecting the output circuit having the lowest computational cost. That is, a plurality of target nodes may be identified with multiple executions of the method, and the lowest cost (or otherwise most favourable) circuit identified in this way can be used. Note that on successive executions of the method, various options are available to drive the system to find a different target node, such as varying the cost functions $g$ and $h$, randomisation or partial randomisation (e.g. weighted randomisation) of the selection of the next node, for example.

Optionally the method may, further comprise identifying in the vertex $s$ any interactions in $G$ which correspond to an edge in $H$ and adding any such interactions in $G$ to the partial circuit corresponding to the node $s$ prior to exploring the graph $S$. This allows for interactions in $G$ to be accounted for before any swaps have been implemented.

Optionally, the starting vertex $s$ includes a mapping between logical entities in $G$ and physical qubits in $H$ which is selected to provide a promising starting point. This may be one in which a large number of interactions are implementable in the arrangement encoded in $s$, for example, or it may be one in which the swaps which will be required are relatively low. Procedures such as Line Laplacian approached and Quadratic Assignment Problems may help to identify beneficial assignments in this regard.

Optionally, having executed the method a first time, step (4) is repeated one or more additional times for the same optimisation problem and known algorithm to provide a plurality of approximate solutions forming a statistical sampling of a solution space for use in seeding the known algorithm. This allows for several solutions to be extracted, thereby sampling the solution space with a bias towards better/optimal solutions. Running step (4) sufficiently many times can allow an identification of clusters of starting points which are promising for seeding the classical algorithm.

Optionally, approximate solutions having a probability lower than a threshold value are discarded from the plurality of approximate solutions prior to use in seeding the known algorithm. Due to the nature of NISQ computing, there is always a risk of errors contaminating the data, In effect these result in solutions which are erroneously believed to be good solutions, but are in fact not. Here the core intuition is that errors are random, and while legitimate solutions will cluster around promising starting points, noise shifts these solutions in a random direction. Therefore, it follows that solutions which crop up often (or closely related solutions in a cluster) are more likely to be legitimate, while the random effect of noise will result in clustering with a very low probability. Therefore, when a statistical sampling has been extracted, low probability solutions are more likely to be due to noise/errors, and can be discarded, resulting in an overall improved output.

Optionally, the threshold is set as a fraction of the highest probability found in the statistical sampling, optionally wherein the fraction is 1/10. This can adjust the output to account for flatter distributions. Rather than setting a fixed value for discarding unlikely outputs, the threshold scales to the most likely outputs, thereby resulting in a focus on the more likely results found by the quantum part of the process.

Optionally, each of the plurality of approximate solutions is used to seed the known algorithm during further executions of step (5). Once a statistical sample has been extracted, the multiple outputs forming part of the sample (after optionally discarding the low-probability solutions) can be used to seed the known algorithm, confident in the knowledge that each starting point provided in this way is a warm start, having the advantages discussed above.

Also disclosed herein is an apparatus for improving the efficiency of solutions to optimisation problems, the apparatus comprising:

a quantum computer, communicatively coupled to a classical computer, the apparatus configured to:

(1) receive an input at the classical computer, the input selecting an optimisation problem from a set of optimisation problems;

(2) receive, at the classical computer, a selection of a known algorithm for solving the selected optimisation problem from a list of known algorithms, where each known algorithm in the list is seeded with a starting input and iteratively converges toward an improved solution;

(3) map, using the classical computer, the optimisation problem onto qubits of the quantum computer;

(4) perform, using the quantum computer, operations to derive an approximate solution to the optimisation problem;

(5) extracting the approximate solution from the quantum computer and seeding, using the classical computer, the known algorithm using the approximate solution as the input and running the selected known algorithm to arrive at an improved solution. In addition, the apparatus may be arranged to enact any of the methods set out above. This provides an apparatus for enacting the methods described above. In addition, a software product is also disclosed which causes a computer system to enact the methods described above.

The apparatus may further be arranged to implement any of the methods discussed above.

Also disclosed herein is a non-transient computer readable medium comprising instructions which cause a computer to enact any of the methods disclosed above. To be specific, the instructions may include instructions for performing classical computations on a classical computer, and also instructions which are executable by a controller for interfacing with a quantum processor, which in turn supplied control signals to the quantum processor in accordance with the instructions, and in line with the procedures discussed herein. The control signals are used to manipulate qubits, cause interactions, etc. in order to implement a quantum circuit and so forth. In addition, the controller may receive information from the quantum processor in terms of measurements, and the instructions may include portions for receiving these measurements for further ruse in calculations, or for output to a user, as the case may be.

Brief description of the Figures

The invention will now be described with reference by example only to the figures in which:

FIG. 1 is a flow diagram representing a method disclosed herein;

FIG. 2 is a schematic of the ibm_torino device topology;

FIG. 3 is a plot illustrating an improvement over known methods when a swap protocol disclosed herein is used in the novel methods disclosed herein;

FIG. 4 shows plots illustrating the improvement of a classical MAX-CUT algorithm after low probability results have been discarded from the output of the quantum process disclosed herein;

FIG. 5 illustrates the speed up the improvement of a classical Tabu search algorithm seeded with warm starts as in the present invention compared with random bitstrings;

FIG. 6 illustrates the improvement where Least Norm filtering is applied, compared with raw hardware outputs;

FIG. 7 illustrates the same data as in FIG. 6, where an additional low energy filter has been applied to both the filtered and raw data;

FIG. 8 shows the same data as in FIG. 7 where an additional frequency filter has been applied to each dataset; and

FIG. 9 shows exemplary hardware on which the methods may be executed.

FIGs 10a and 10b show boxplots evaluating the performance of the 'balanced' approach for Max-Cut graphs and the MIS fitting prediction method;

FIG. 11 shows three scatter plots of the optimal and guessed values of $\gamma_j^p$ for total number of layers $p$ = 3 and $j$ = 1,...,3;

FIG. 12 shows a graph evaluating the performance of GNN predicted parameters against those optimized using a classical optimizer;

FIGs 13a and 13b show the $Q$-factor from warm-starting the PalubeckisMST1 algorithm implemented in MQLib for unweighted MaxCut;

FIG. 14 shows two equivalent circuits in which an operation can be enacted with a reduced number of CNOT gates;

FIGs 15a and 15b show the number of additional CNOT gates required to implement one layer of QAOA for random 3-regular graphs with between 20 and 70 vertices;

FIGs 16a and 16b show the number of additional CNOT gates required to implement one layer of QAOA averaged over random 3-regular graphs;

FIGs 17a and 17b show the $Q$-factor plot showing the speed-up in Tabu search convergence when using QAOA warm-starts over the PalubeckisMST1 algorithm;

FIGs 18a and 18b show plots of the $Q$-factor (equation (14)) when comparing the use of QAOA warm-starts obtained from the IBM hardware with the hamming filter and LNF readout error mitigation applied;

FIG. 19 shows plots of the mean approximation ratio (equation (25)) across all enhanced IBM graphs of size 41 and across 1000 optimizations;

FIG. 20 compares the expected runtimes of several of the best heuristics described in [15] as well as CPLEX to the QAOA warm-started version of PalubeckisMT1;

FIG. 21 shows the $Q$-factor from warm-starting the the PalubeckisMST1 algorithm implemented in MQLib for unweighted MaxCut with samples obtained using classical emulation of the QAOA algorithm;

FIGs 22a and 22b show the $Q$-factor from warm-starting the PalubeckisMST1 algorithm using $p = 6$ QAOA with the same set of Erdös-Rényi graphs;

FIGs 23a and 23b show the $Q$-factor from warm-starting the the PalubeckisMST1 algorithm implemented in MQLib for unweighted MaxCut with samples obtained using classical emulation of the QAOA algorithm;

FIG. 24 shows the $Q$-factor from warm-starting the the FESTA2002VNSPR algorithm implemented in MQLib for unweighted MaxCut with samples obtained using classical emulation of the QAOA algorithm;

FIGs 25a and 25b shows the $Q$-factor from warm-starting the the FESTA2002VNSPR algorithm implemented in MQLib for unweighted MaxCut with samples obtained using classical emulation of the QAOA algorithm;

FIGs 26a and 26b shows the $Q$-factor from warm-starting the the FESTA2002VNSPR algorithm implemented in MQLib for unweighted MaxCut with samples obtained using classical emulation of the QAOA algorithm;

FIGs 27a and 27b show the $Q$-factor from warm-starting the the FESTA2002VNSPR algorithm using classically emulated p = 6 QAOA;

FIG. 28 shows the $Q$-factor from warm-starting the the PalubeckisMST1 algorithm implemented in MQLib with samples obtained from running the QAOA algorithm;

FIG. 29 is a flow chart illustrating use of the improved parameters derived in accordance with the present disclosure;

FIG. 30 is a flow chart illustrating calculation of the improved parameters for use in QAOA in accordance with the present disclosure; and

FIG. 31 is a flow chart illustrating a mapping/routing procedure in accordance with the present disclosure.

Detailed description

The present invention introduces an approach which is referred to herein as quantum-enhanced optimisation, where noisy samples from a near-term quantum algorithm such as QAOA are used as a "warm start" to accelerate classical optimisation algorithms. This enables a quantum speedup to be obtained before quantum computers are competitive with classical ones at solving the entirety of a hard instance directly. By leveraging the strengths of both classical and quantum computing, the present approach aims to take advantage of the potential of NISQ devices in order to enhance classical optimisation methods, making it possible to tackle complex optimisation challenges more effectively and efficiently.

In the present approach, the aim is to achieve quantum-enhanced optimisation by applying a quantum algorithm (e.g., the QAOA algorithm) to generate samples that are input into a classical algorithm. The procedure is as follows:

1. Optionally the overall problem is divided into small subproblems;

2. Each subproblem is approximately solved efficiently using a quantum computer, which produces a list of relatively low-cost solutions;

3. These low-cost solutions are combined to produce a list of potential solutions to the overall problem;

4. These solutions are used as starting points ("warm starts") for a classical heuristic;

5. The classical heuristic finds a good solution to the overall problem, ideally an optimal one, more quickly than it would have done without the warm start.

Each of these steps involves key technical decisions and the implementation of several underlying technical components to ensure high-quality results.

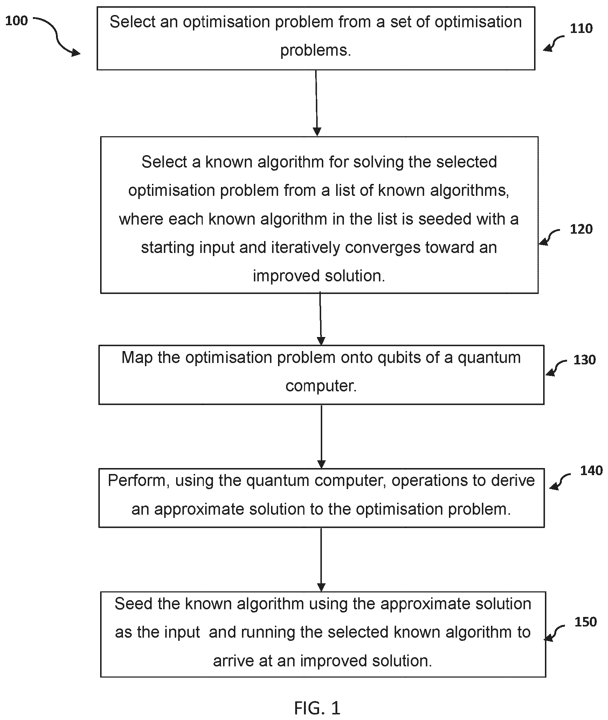

FIG. 1 illustrates a flow chart 100 for executing the methods described herein.

The method begins at step 110 in which an optimisation problem is selected from a set of optimisation problems. That is to say that the problem to be solved is selected.

Next, at step 120 a known algorithm for solving the selected optimisation problem is selected from a list of known algorithms, where each known algorithm in the list is seeded with a starting input and iteratively converges toward an improved solution. Here the choice as to which known algorithm is used is a free choice for the user, but typically a known algorithm, which performs well in the context of the size, complexity, etc. of the problem and within any hardware constraints which the user is operating under, will be a good choice.

As examples, the set of known algorithms include: local search algorithms; genetic algorithms; and/or simulated annealing.

At step 130 the optimisation problem is mapped onto qubits of a quantum computer. As noted above, the QAOA is a particularly convenient approach and can allow the optimisation problem to be mapped onto qubits of the quantum computer in a one-to-one correspondence between qubits and fundamental entities of the optimisation problem. This allows the qubits of the process to be associated with fundamental entities in a one-to-one correspondence, and thereby simplifies the structure of the quantum algorithm while keeping the form of the algorithm intuitive with regard to the optimisation problem being solved.

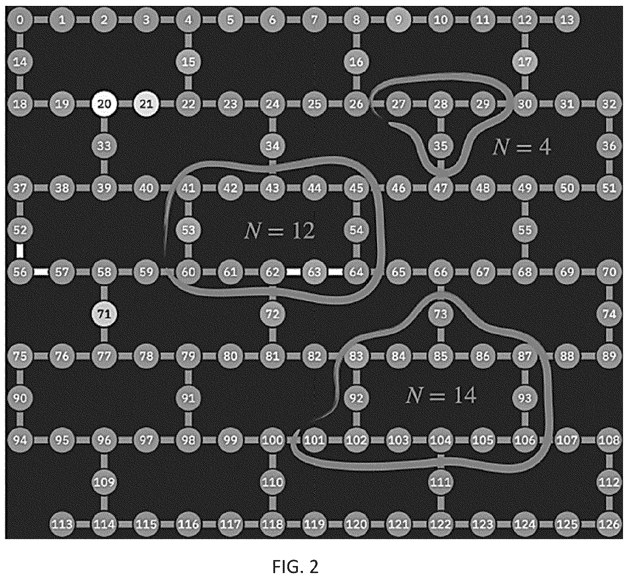

In FIG. 2, examples of subgraphs of the IBM device that were used for validating the method, overlaid over the IBM ibm_torino device topology are shown. For N≥12 vertices the graphs all include at least one cycle of size 12. This illustrates an available topology on which the present method may be executed, in part.

Returning to FIG. 1, at step 140 the quantum computer performs operations to derive an approximate solution to the optimisation problem.

Once a mapping is chosen, the procedure generates a quantum circuit which is made up of a sequence of swap gates, interspersed with terms (i.e. operations across two or more qubits). At any given time, the procedure maintains a list of terms that have not yet been implemented. Whenever terms can be implemented, because the corresponding qubits are connected to each other in the hardware graph, we immediately implement the terms and remove them from the list of terms.

Let the distance $d(T)$ of a term $T$ be defined as the shortest path in the hardware interaction graph between the two qubits on which it acts. If the distance is 1, then the term can be implemented immediately; otherwise, at least one swap is needed to implement it. Then we define an overall distance function $D$ as

$$D = \sum_T d\,(T)^q$$

for some real number $q$ which is a parameter of the algorithm. In practice, taking $q = 1$ - in which case $D$ is just the total distance of terms - is already quite effective; however, choosing $q < 1$ can be advantageous by prioritising bringing close terms together rather than those at a greater distance.

The algorithm proceeds as follows, having first identified a set of quantum operations, T, to be performed between a plurality of qubits and identified a graph distance, d(T), between the qubits on the quantum hardware across which each of the quantum operations (also called terms herein) in the set are to be performed:

1. Identify a subset of the quantum operations for which the graph distance between each of the qubits corresponding to that quantum operation is 1. Implement all terms at distance 1. Once a term has been implemented, that term is removed from the set of quantum operations. If there are no terms remaining, terminate the algorithm.

2. Identify all possible pairwise qubit swap operations. For all possible swaps (corresponding to edges in the hardware graph) compute the overall distance $D$ following applying that swap to all of the terms.

3. If there exists a swap which reduces the overall distance, apply the swap that minimises the overall distance and go to step 1.

4. If there is no such swap, apply a swap that reduces the distance of the term that was the lowest distance, and go to step 1.

The final step of the algorithm is a fallback in case the best swap leaves the total distance unchanged (for example, by decreasing the distance of one term, but increasing the distance of another). That is, repeating the steps until all quantum operations in the set have been implemented so that the fall back in step 1 (terminate if the list is empty) bites and the loop ends.

While this sets out a specific method for efficiently implementing the swaps, in general it will be necessary to performing one or more swap operations, which may be selected in a different manner to that set out above. Nevertheless the use of the specific swap protocol as set out above has a marked effect on reducing the number of CNOT gates required to implement each layer of the QAOA algorithm.

The algorithms discussed herein generate a quantum circuit which is expressed as a sequence of terms interspersed with swap operations. On typical quantum hardware, swap operations are implemented via a sequence of three controlled-not (CNOT) gates. For this reason efficient swap protocols are important as using fewer swaps reduces the overall number and depth of the quantum circuit. In cases where a swap operation occurs before or after a term on the same qubits, advantageously the combination of the swap and the term can also be implemented via three CNOT gates.

A related algorithm and software tool, termed 2QAN, for implementing terms in a Hamiltonian in an arbitrary order using swap operations is known. This algorithm also uses the above optimisation technique for merging swap operations with terms. However, the presently disclosed approach differs by using an overall distance function which takes into account the distances of all terms, whereas 2QAN always aims to reduce the distance of the lowest-distance term (which in our algorithm is just a fallback). Thus our approach may be expected to enable large numbers of terms to be implemented more quickly.

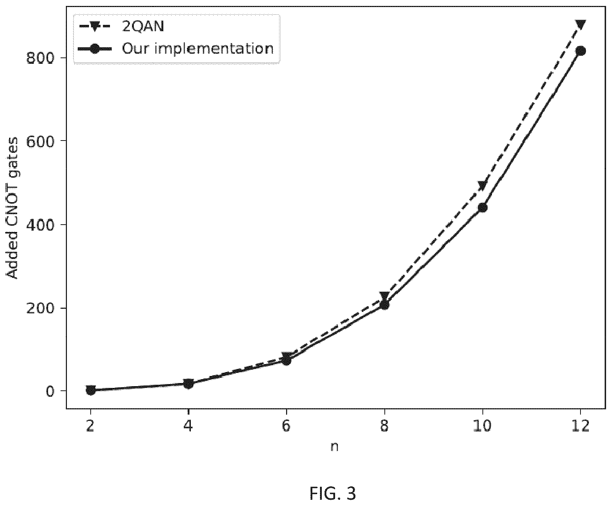

In FIG. 3, for example shows the number of additional CNOT gates required to implement one layer of QAOA for a random 3-regular graph on $n^2$ vertices, on an n x n square lattice. Each point is averaged over 10 random graphs. These tests use q=0.5 in the distance computation, i.e.

$$D = \sum_T d\left(T\right)^{0.5}$$

FIG. 3 illustrates the cost associated with our approach compared with 2QAN. We measure the cost in terms of the number of additional CNOT gates added, to take into account the benefit of merging swap operations with terms. For n $\geq$ 6, the improvement of the present technique over 2QAN is in the range 7.6% to 11.6% in this example.

Finally, returning to FIG. 1, at step 150 the known algorithm is seeded using the approximate solution as the input and running the selected known algorithm to arrive at an improved solution.

While even a single output very likely represents a good warm start, and therefore an improvement on a randomly chosen start point for the known algorithm, it will be appreciated that providing more than one starting point using the method of FIG. 1 can help to probe the solution space for the selected optimisation problem where, due to the nature of the quantum processing, outputs tend to cluster around good starting points for the classical algorithm.

Therefore, each of the plurality of approximate solutions derived from repeated executions of step 140 may be used to seed the known algorithm during further executions of step (5). Once a statistical sample has been extracted, the multiple outputs forming part of the sample (after optionally discarding the low-probability solutions - see below) can be used to seed the known algorithm, confident in the knowledge that each starting point provided in this way is a warm start, having the advantages discussed above.

A key advantage of the present approach is that it returns reasonable results even on a noisy quantum computer, because with a very high level of noise, the quantum algorithm is expected to sample uniformly random bit-strings, which reduces to the current classical algorithm. Therefore any computation which is not so noisy as to fully randomise the bit strings is likely to lead to an improvement. However, where error mitigation can be applied to the calculation the improvement may be even better.

One challenge associated with the use of error-mitigation is that the quantum algorithm is sampling from an unknown distribution over solutions, rather than computing the expectation value of an observable. This rules out the use of many known error-mitigation techniques. Nonetheless, there are some methods which are still applicable, both more general ones and those more specific to the structure of QAOA:

- **Readout-error mitigation:** mitigation of errors which occur due to faulty measurements;

- **Low energy filtering:** using knowledge of the cost function which determines better or worse solutions to the optimisation problem, it is possible to discard low-quality (high-cost) bit-strings;

- **Frequency filtering:** due to the expected sparsity of the distribution over measurement outcomes in QAOA, it is possible to discard bit-strings which occur with low probability and thus are likely more high-cost.

In the case of readout-error mitigation, a popular method is the application of an 'inverse matrix' to the distribution of measurements obtained from an experiment in an attempt to invert an error channel due to faulty measurements. This can be done by first constructing a set of calibration matrices, which are obtained from the two ancillary quantum circuits performed alongside each QAOA experiment. The ancillary circuits allow one to estimate the probability that the value of a qubit measurement is flipped ($0 \rightarrow 1$ or vice versa) during measurement and this information is then used to approximately invert the errors caused by such flips.

The process of computing and applying the inversion matrix can be computationally costly, as in principle such a matrix grows exponentially with the number of qubits. In recent years, several techniques have been developed to bypass this computational bottleneck by exploiting, for example, the sparsity of the measurement distribution. In this work, we use one such recent approach, titled 'Least Norm Filter' (LNF).

While LNF is a general method that can be applied to any set of measurements without prior knowledge about the quantum circuit from which the distribution was sampled, in the case of QAOA we have the ability to distinguish better quality - lower cost - measurement samples due to the nature of the algorithm. This allows us to perform a more heuristic method of error-mitigation, which consists of discarding some fraction of the samples obtained from QAOA which have a higher cost associated with them. The remaining lower-cost bit-strings can then be used as warm-starts, which are liable to lead to faster convergence of the local search heuristics. We refer to this method as 'energy filtering', since the notion of cost is generally referred to as 'energy' in the context of quantum systems and our goal is to filter the samples in a way that only leaves those with lower energy.

We also introduce a novel technique which is targeted at quantum sampling algorithms: the removal of samples which have a low probability in the measured distribution. The intuition behind this approach is that we expect the distribution over optimal, lowest-cost solutions in an arbitrary graph to be sparse in the space of all possible solutions. QAOA with increasing layers is expected to produce sparse distributions over optimal or near-optimal solutions, with high-cost bit-strings occurring with small or negligible probability. Thus, we expect that discarding low-probability samples from the QAOA output will lead to more low-cost strings which will act as better warm-starts for classical heuristics.

The way we choose to implement this technique is by first choosing a threshold probability below which samples are to be thrown away and then iteratively lowering this probability if we find that no samples remain after the filtering is performed. For example, one might choose to throw away any samples which occur less than 0.01% of the time. However, if the sample distribution is close to uniform and all samples have very low probability of occurring, then this might remove all of the samples. In this case, one can lower the threshold and repeat the filtering. Other examples use more probable (i.e. more commonly output) solutions as a benchmark, and set the threshold at a fraction of the probability of these more probable solutions.

Therefore, in the method of FIG. 1, approximate solutions having a probability lower than a threshold value may be discarded from the plurality of approximate solutions prior to use in seeding the known algorithm, as part of the frequency filtering idea. Due to the nature of NISQ computing, there is always a risk of errors contaminating the data, In effect these result in solutions which are erroneously believed to be good solutions, but are in fact not. Here the core intuition is that errors are random, and while legitimate solutions will cluster around promising starting points, noise shifts these solutions in a random direction. Therefore, it follows that solutions which crop up often (or closely related solutions in a cluster) are more likely to be legitimate, while the random effect of noise will result in clustering with a very low probability. Therefore, when a statistical sampling has been extracted, low probability solutions are more likely to be due to noise/errors, and can be discarded, resulting in an overall improved output.

The threshold value may be set as a fraction of the highest probability found in the statistical sampling, optionally wherein the fraction is 1/10. This can adjust the output to account for flatter distributions. Rather than setting a fixed value for discarding unlikely outputs, the threshold scales to the most likely outputs, thereby resulting in a focus on the more likely results found by the quantum part of the process.

CASE STUDY: MAX-CUT

As a specific example of the techniques described above, the MAX-CUT algorithm is studied to illustrate the application of the various ideas described herein.

Any classical heuristic that relies on being seeded with a random bit-string has potential to be accelerated via our approach. For example, many algorithms start with a uniformly distributed bit-string, then attempt to improve on this via a local search procedure. Categories of algorithms where our approach may work include:

- Local search algorithms;
- Genetic algorithms (where the quantum samples give an initial population);
- Simulated annealing.

Each classical algorithm may be assessed on a case-by-case basis to determine the extent to which the presently disclosed methods accelerate it, and the best manner in which to achieve the efficiency and time savings.

In this example, for concreteness we will focus on applying our approach to the well-studied MAX-CUT problem, where the goal is to find a partition of the vertices in a graph into two sets such that the number of edges between the sets is maximised. Formally, in this problem the goal is to compute:

$$\min_{x \in \{\pm 1\}^n} \sum_{(i,j) \in E} x_i\, x_j$$

for a set of edges $E$ corresponding to a graph on $n$ vertices. However, we emphasize that quantum-enhanced optimisation is not limited to this specific problem. For example, our approach is equally applicable to the more general quadratic unconstrained binary optimisation (QUBO) problem, which is defined as:

$$\min_{x \in \{\pm 1\}^n} \sum_{(i,j) \in E} w_{ij}\, x_i x_j$$

for some weights $w_{ij} \in \mathbb{R}$.

As noted above, the invention disclosed herein may benefit in some cases from splitting the problem into a set of sub-problems, solving those sub-problems independently and then reassembling each sub-problem into an approximate overall solution. This can help in tackling large problems on quantum computers with limited qubits, or other limitations seen in the NISQ era.

There are multiple ways of dividing into subproblems: for example, recursive/hierarchical decomposition, partial expansion of a backtracking tree, and simply dividing the input graph into subgraphs. Focusing on the last of these, a classical clustering algorithm can be used to divide up the graph to minimize connections between subgraphs.

Then a solution to the overall problem can be found by simply concatenating the returned solutions to the subproblems. However, this may not lead to a high-quality answer immediately. This is because of the overall $\mathbb{Z}_2$ symmetry of MAX-CUT: for each solution to a subproblem we can get an equally good solution to that subproblem by flipping all the bits (and QAOA will choose each of the two solutions with equal probability), yet the quality of an overall solution built from combining solutions to multiple subproblems depends on the choice of bit flips for each one.

To produce a low-cost solution to the overall problem, one can optimize over all flips to the bits of subproblems. This optimisation problem turns out to correspond to a QUBO instance on an effective graph whose vertices correspond to subproblems, with weighted edges whose weights are determined by the edges between subproblems. It has been proposed that this overall QUBO problem could be solved itself by using QAOA. Here, we instead observe that in general this problem will be small enough that it can be solved exactly and efficiently using a classical heuristic for MAX-CUT/QUBO problems.

For the remainder of this document, when describing our techniques and results, for simplicity we will consider the case where the overall problem we are solving does not need to be split up and recombined. However, all of our methods apply in the more general cause where the quantum algorithm produces solutions to subproblems that are then combined.

In the table below, a selection of algorithms is proposed (selected from a systematic review of many state-of-the-art heuristics from three categories - Local search algorithms; Genetic algorithms (where the quantum samples give an initial population); and Simulated annealing). In that review the performance of each is evaluated across several metrics using a custom library of problem instances, and is ranked, with an average rank provided. Here, we will focus on accelerating an algorithm from this review called "PalubeckisMST1".

This is one of the highest-performing classical heuristics for MAX-CUT in the comprehensive analysis given in the systematic review, summarised in the table below and is based on the use of a uniformly random bit-string as input.

Its choice as a benchmark is further helped by the fact that its core is a local search heuristic 'Tabu search', which is an important subroutine of several other, high-performing algorithms in the review which could be warm-started with QAOA. Each algorithm was designed with either the MAX-CUT or QUBO problem in mind, but due to the fact that a simple transformation exists between the two problems, either can be addressed using any of the algorithms in the list.

| Algorithm name | Algorithm type | Problem type | Average rank |
|---|---|---|---|
| PalubeckisMST1 | Local search (Tabu) | QUBO | 15.2 |
| Festa02V | Local search (variable neighbourhood search) | MAX-CUT | 13.8 |
| Lu10 | Genetic algorithm with local search (Tabu) | QUBO | 13.1 |
| Beasley1998SA | Simulated Annealing | QUBO | 30.8 |

Many algorithms, such as PalubeckisMST1, have the following structure:

   1. Repeat the following procedure $R$ times:

      a. Generate a random bit-string $s$;
      b. Perform a local (or somewhat non-local) search procedure starting from $s$, and stop after $T$ iterations.

The overall cost of this algorithm scales like $R \times T$. The choice of the threshold $T$ is crucial to enable the highest performance. In general, an optimal value of $T$, i.e. the smallest necessary to reach an optimal solution, is not known for a given algorithm and problem instance. Here, we observe that when using quantum samples as input, it can be advantageous in reducing $T$. This is because the samples are designed to be lower-cost solutions than random bit-strings, so stopping the algorithm earlier than when initialising with uniformly random strings can still lead to an equally optimal, or perhaps even better, output.

A metric to determine the efficiency of different sets of bitstrings for initialising a heuristic is an inspection of the fraction of optimal solutions $F_{opt}(T)$ returned by the algorithm for a given number of iterations $T$. Ideally, one would hope to minimise $T$ while simultaneously maximising the fraction of optimal solutions returned by the heuristic. This leads to a metric or 'cost' associated with a limit on the number of iterations that the algorithm can run for:

$$C(T) = \frac{T}{F_{opt}(T)}$$

One can understand this cost function as corresponding to a notion of 'expected runtime' of the algorithm given a set of initial solutions to start each repetition $R$ from. The value of $T$ which minimises $C(T)$, $T^* = \mathrm{argmin}_T C(T)$, is the optimal number of iterations which minimises the expected overall runtime. Thus, this cost function allows for the estimation of $T^*$ for a given problem instance and a set of initial warm start solutions.

If the set of bit-strings that initialise the heuristic are low-cost (as we hope is the case with bit-strings produced using QAOA), then it is likely that during each run of the algorithm it will converge to the optimal solution faster than when starting from uniformly random bit-strings. Thus, for the same problem instance, we expect the minimum of $C(T)$ to be lower for low-cost initial bit-strings when compared to a random initialisation, leading to a more efficient performance of the heuristic. A good metric to quantify this efficiency improvement or 'speed-up', is to compute the ratio of the two minima obtained using different initialisation strategies:

$$Q = \frac{\min_T C_{\text{random}}(T)}{\min_T C_{\text{warm-start}}(T)},$$

where $C_{\text{warm-start}}(T)$ corresponds to the cost function when using warm-start bit-strings and $C_{\text{random}}(T)$ corresponds to initialising with uniformly random bitstrings instead. If the value of $Q$ is greater than 1, then using warm-starts should require a lower value of $T^*$ to achieve the same level of optimality that a random initialisation would. The larger $Q$ is, the larger the quantum-classical speedup is.

When QAOA is applied to MAX-CUT, each qubit in the quantum computer corresponds to one vertex in the graph. The QAOA algorithm is made up of a number of layers. Each layer consists of the 2-qubit quantum gates $e^{i\theta_{jk}Z_jZ_k}$ for each edge $(j,k) \in E$, where $\theta_{jk}$ are parameters which may be chosen variationally (to minimise the cost) or based on a predetermined strategy, followed by some 1-qubit quantum gates which are, in general, much easier to implement. We will call each of the 2-qubit quantum gates a *term*. As terms commute, they can be implemented in any order. However, most quantum hardware platforms impose connectivity constraints such that not all edge terms can be implemented without the use of swap operations to reorganise the terms (or, equivalently, the qubits). Here, we describe an approach based on a modification of the idea first presented in for implementing the required edge terms on a given hardware connectivity using swap networks.

Assume that each vertex of the graph is associated with an arbitrary qubit, and let the connectivity of the hardware (across which qubits gates can be implemented) be specified by a graph called the hardware graph. The *qubit mapping* problem of how best to associate vertices with qubits can be solved in a number of ways, and the algorithm below is agnostic to which method is used. One effective and straightforward solution is to use the algorithm for implementing the required terms itself to generate a mapping. The final assignment of vertices to qubits at the end of the algorithm is used as an initial mapping for another iteration of the algorithm. To initialise this process, a random mapping can be used.

In order to evaluate the ingredients introduced in the previous section, we implemented our method both in a classical emulator of a quantum computer and on quantum hardware. We split our evaluation into two parts: a test of our overall warm start approach (together with error mitigation), and a test of our swap network procedure.

We explored graphs with unit edge-weights of increasing size which matched the topology of the IBM ibm_torino 127-qubit quantum chip, on which the experiments were performed. Examples of the graphs implemented can be found in FIG. 1. We remark that, as the IBM hardware connectivity graph is bipartite, an optimal cut in any such subgraph can be found efficiently by a greedy algorithm. However, the PalubeckisMST1 algorithm (which works differently to this greedy algorithm) is not necessarily able to find this optimal cut.

We first optimized the QAOA parameters variationally on a classical processor by computing the expected energies of its output, using an efficient tree tensor network code for larger instances, and then implemented the resulting parameterised quantum circuits. In each experiment, whether simulated or implemented on hardware, we sampled 10000 bit-strings, which would either be used directly as warm-starts, or post-processed using the techniques described in previous Sections.

We used the metric $Q$, introduced in Sec. 3.3, to assess the effectiveness of our warm-starts. As a reminder, $Q$ is the ratio of two different expected runtimes for a local search heuristic algorithm on a given instance, when intialised using different bit-strings. If the bit-strings are low-cost, we expect them to speed up the convergence of the local search by a factor $Q$. In this case, we refer to the metric as $Q_{QAOA}^{MST1}$ to denote the fact that we are comparing expected runtimes when warm-starting with QAOA samples versus random samples, as in the case of the bare PalubeckisMST1 algorithm from the table above.

In order to estimate $Q_{QAOA}^{MST1}$, we performed 1000 MAX-CUT optimisations on each graph instance using both random initial bit-strings and those obtained from QAOA, with a very large iterations cutoff used in each optimisation in order to guarantee that the optimisations converged to the optimal solution. We kept track of the number of iterations required in each case to reach the optimal cut for the graph and used those statistics to estimate the expected runtime of the algorithm for a given set of initial strings. For smaller graphs of the sizes that we investigated, it was possible to determine the optimal solution ahead of time, meaning that we could assess the fraction of optimisations which achieved an optimum after some number of iterations.

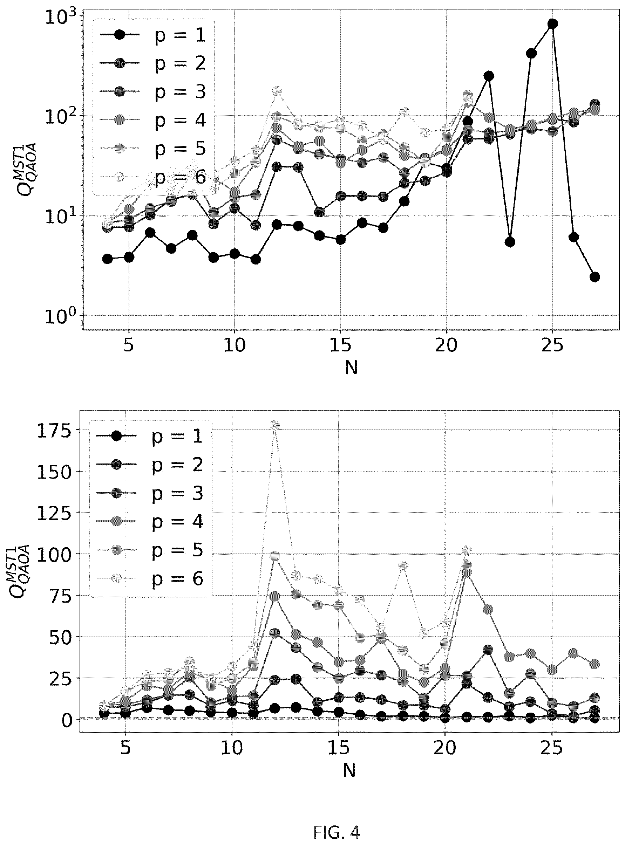

In FIG. 4 we plot the value of $Q_{QAOA}^{MST1}$ in the case where the QAOA warm-start samples were obtained by emulating the quantum algorithm classically. Classical simulations of the QAOA algorithm are possible for small-enough graph instances, in this case up to 27 vertices. We use samples obtained from simulations of QAOA to warm-start the PalubeckisMST1 algorithm implemented in MQLib and compare the expected runtimes to the case where random initial strings are used (top plot in FIG. 4). We also implement the frequency filter described above on the simulated samples and find that they substantially improve the results as the problem size increases (bottom plot in FIG. 4).

Due to the limitations on efficiency in simulating large quantum systems with classical processors, we could only produce samples for graphs with up to 27 vertices. The results are promising, with up to nearly 200-fold decreases in expected runtime when using QAOA samples observed and, in some cases, nearly 1000-fold speedups when the frequency-filtering technique was implemented. Importantly, we do not observe values of $Q_{QAOA}^{MST1}$ below 1, meaning that the warm-started version of PalubeckisMST1 never performs worse than in the case of random samples.

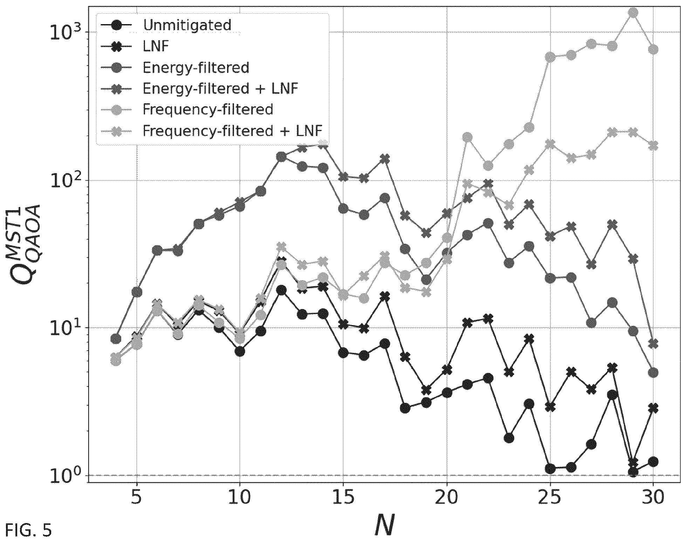

We then implemented the same circuits on the IBM ibm_torino 127-qubit quantum chip (see FIG. 2) and performed an equivalent analysis using samples obtained from the quantum hardware. In this case, for each graph we ran the quantum circuit several times and aggregated the mean performance across runs, due to varying levels of noise in the system across different days. For smaller graphs (up to 21 vertices) this was done 4 times, while for larger graphs we ran each experiment twice. We demonstrate the results in the case of QAOA with 4 variational layers in FIG. 5 for graphs with up to 30 vertices, where we see a speed up of Tabu search when using QAOA warm-starts (with p=4 QAOA layers) over the PalubeckisMST1 algorithm which is initialised with random bit-strings.

We find that the results are positive, with samples from QAOA outperforming random initialisations even in the case where no error-mitigation is applied, but we do see a decrease in improvement as the system size increases, likely due to accumulating decoherence on the quantum device. We compare different error mitigation techniques, such as Least Norm Filter (LNF), energy-filtering the samples as well as frequency-filtering the samples, as described above.

The effects of this noise are shown to be somewhat mitigated by the readout-error-mitigation method Least Norm Filter, discussed above. We also implement the energy-filtering approach, which involves keeping only 1000 lowest-cost samples (out of 10000) from each run as potential warm-starts and which shows roughly an order of magnitude improvement over the raw samples, making the resulting runtime speed-up comparable to that of the noiseless classical emulation. Finally, when implementing our novel frequency-filtering approach, we find an exponentially growing speedup over random bit-strings with increasing system size.

We also demonstrate the cumulative improvement of the results as progressively more error mitigation techniques are applied. We collate results showing the level of improvement over classical algorithms achieved for each of the error-mitigation techniques we tested (readout error mitigation, energy filtering and frequency filtering).

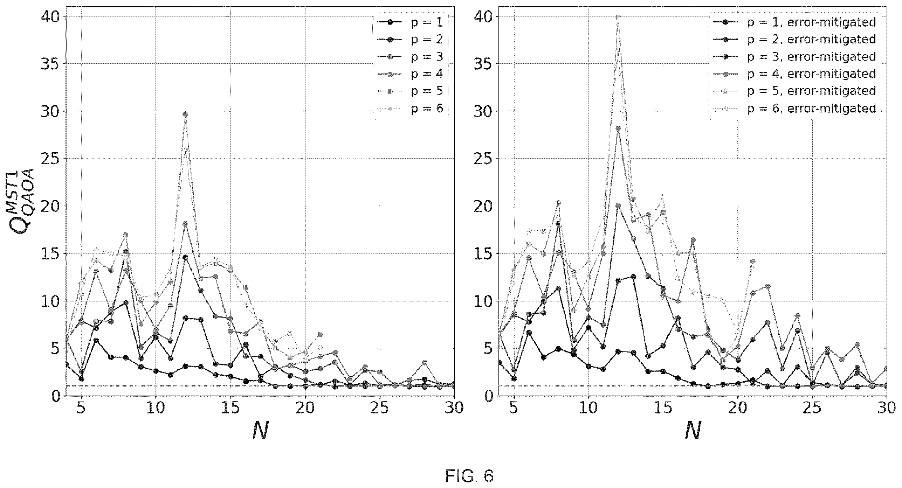

FIG. 6 shows a plot of the improvement over classical MST1, using raw samples from hardware (left) and readout-error-mitigated samples (LeastNorm Filter from libs_qrem) (right). These results are the mean improvement obtained across several runs.

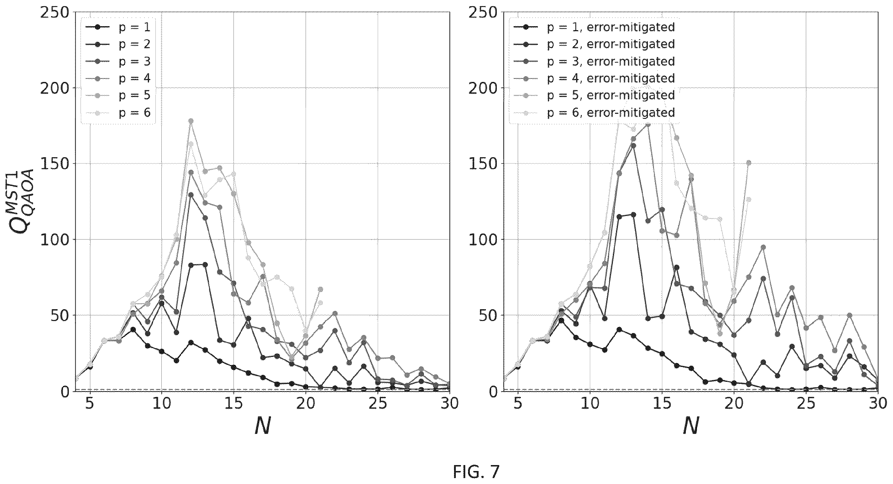

FIG. 7 shows a plot of the same data as in FIG. 6, but using 1000 samples with lowest energy from the raw 10000 samples obtained in the hardware. The plot on the left is filtering applied to raw data while the plot on the right is filtering applied to readout-error-mitigated data.

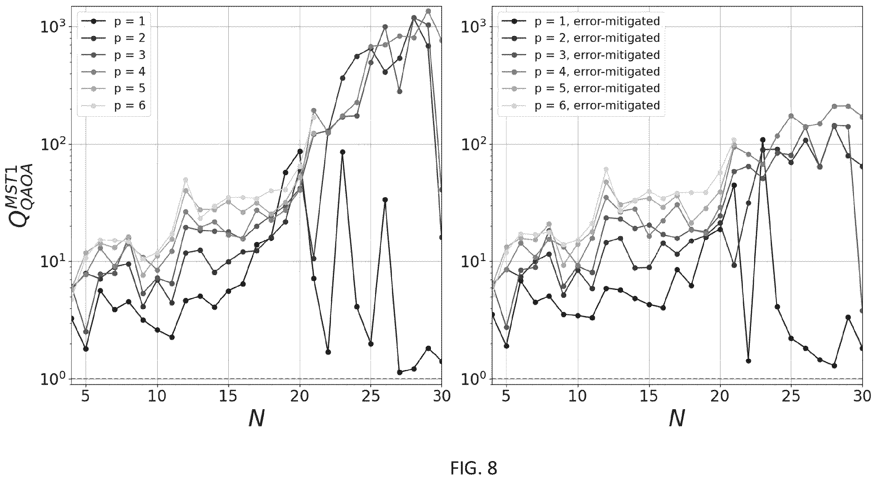

In FIG. 8, the plots show the data of FIG. 7, but filtering the samples based on their frequency in the hardware output. The algorithm that does this first checks if there are any samples with counts above 5 and only keeps those. Else it checks for counts above 4 and so on until either the data is filtered, or we have a uniform distribution across all samples and all of it is kept. The plot on the left is filtering applied to raw data while the plot on the right is filtering applied to readout-error-mitigated data.

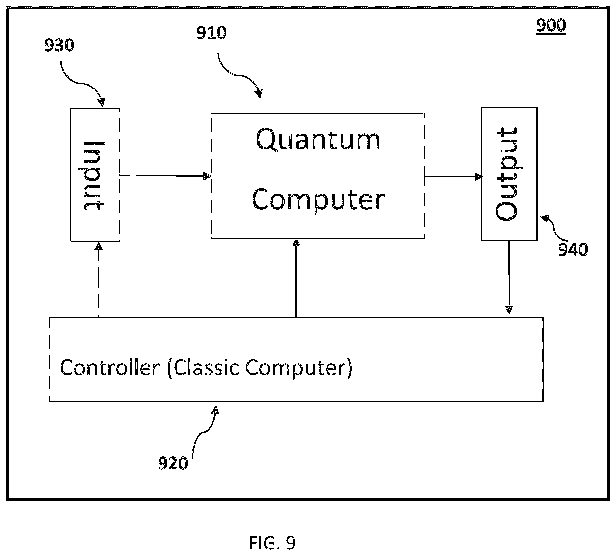

Turning finally to FIG. 9, which illustrates a hardware implementation suitable for enacting the presently described methods. Here, a classical computer 920 and a quantum computer 910 are communicatively coupled to one another. This allows the classical computer 910 to process information and supply control signals, for example via input 930. In other examples, the quantum computer may be controlled by a separate controller.

In operation, the classical computer receives an input selecting an optimisation problem from a set of optimisation problems and also received a selection of a known algorithm for solving the selected optimisation problem from a list of known algorithms.

The classical computer 920 is operable to map the optimisation problem onto qubits of the quantum computer 910. This allows the quantum computer 910 to perform operations to derive an approximate solution to the optimisation problem. Once an approximate solution is complete, the classical computer 920 is operable to receive this approximate solution, for example via output 940.

At this stage, the classical computer 920 is operable to use the approximate solution as a warm start input to the selected known algorithm. As noted above this warm start provides better solutions while using the classical compute resources efficiently.

Additional developments to the ideas above may be found in the following sections.

We use as an example an approach which we term quantum-enhanced optimization, where noisy samples from a near-term quantum algorithm such as QAOA are used as a "warm start" to accelerate classical optimization algorithms. This could enable a quantum speedup to be obtained before quantum computers become competitive with classical ones at solving the entirety of a hard instance directly. By leveraging the strengths of both classical and quantum computing, our approach aims to take advantage of the potential of NISQ devices in order to enhance classical optimization methods, making it possible to tackle complex optimization challenges more effectively. In our approach, we use a quantum algorithm (in particular, the QAOA algorithm, although any other quantum algorithm could be used) to generate samples that are input into a classical algorithm. The procedure is as follows:

1. The overall optimization problem is divided into small subproblems;

2. Each subproblem is approximately solved efficiently using a quantum computer, which produces a list of relatively low-cost solutions;

3. These low-cost solutions are combined to produce a list of potential solutions to the overall problem;

4. These solutions are used as starting points ("warm starts") for a classical heuristic;

5. The classical heuristic finds a good solution to the overall problem, ideally an optimal one, more quickly than it would have done without the warm start.

Each of these steps involves a number of technical decisions and the implementation of several underlying technical components to ensure high-quality results. Quantum-enhanced optimization has a number of appealing properties:

1. Any classical heuristic that relies on being seeded with a random bit-string has potential to be accelerated via our approach. For example, many algorithms start with a uniformly distributed bit-string, then attempt to improve on this via some kind of search procedure. Categories of algorithms where our approach may work include, but are not limited to, local search algorithms, genetic algorithms and simulated annealing. Further, to get an advantage over the original classical algorithm, the quantum algorithm only needs to produce a more useful input than a uniformly random bit-string.

2. The quantum-enhanced algorithm should degrade gracefully with noise, as in the case of completely catastrophic noise, it simply produces a uniformly random bit-string.

3. The quantum computer is only used once, at the start of the algorithm, and samples can be stored offline and used later.

4. Because the quantum computer is used only to generate classical samples, a large problem can be divided into smaller subproblems, which can be solved and the solutions recombined.

5. The quantum computer is used for sampling, rather than measuring observables. This is harder to simulate using classical methods, and gives hope that we can produce distributions with interesting correlations. Indeed, generating samples from even constant-depth QAOA is hard for classical algorithms [6] (given some reasonable computational complexity assumptions), whereas expectation values of local observables can be computed in time $O(1)$.

In this context the inventors have implemented a full software pipeline that instantiates the approach above, and tested its performance in emulation and on IBM quantum hardware. To obtain good performance, the following new technical ingredients have been developed:

1. Approaches to efficiently choosing QAOA parameters without needing to optimize them variationally. A key aspect of quantum-enhanced optimization is that the quantum part should run quickly - using the quantum computer adds an overhead compared with the original classical optimization algorithm, and if this overhead is too large, any quantum speedup would be lost. If the variational optimization part of QAOA is removed, the quantum computer only needs to be accessed once, at the start of the algorithm. Here we introduce new methods for choosing good QAOA parameters for Max-Cut and Maximum Independent Set (MIS), two well-studied NP-hard graph problems, and more general Quadratic Unconstrained Binary Optimisation (QUBO) problems.

2. New methods for implementing the QAOA algorithm on quantum hardware. Although the QAOA algorithm has a very simple structure, it can still be challenging to implement the required gates for a given hardware connectivity. Here we develop two new solutions to this "mapping and routing" problem on quantum hardware, one of which is a greedy approach based on a variant of a method used in the context of fermionic swap networks [16], the other of which is based on the A* algorithm.

3. New error mitigation methods. To achieve high-quality experimental results on quantum hardware requires error mitigation. However, many standard error mitigation methods used in the literature cannot be used in our context, as we use the quantum computer for sampling bit-strings, rather than computing observables. As well as using existing techniques for readout error mitigation, we introduce new methods for filtering the set of samples retrieved based on frequency and/or energy.

These approaches are evaluated via a metric which we term the "Q-factor", which measures the ratio between the running time of the original classical algorithm and the quantum-enhanced classical algorithm. We find that, both in experiments on quantum hardware and in emulation, in some cases, the quantum-enhanced running time is up to a factor of ~ 1000 lower than the original classical running time. In addition, the running time improvement increases with problem size, up to instances on 30 qubits on quantum hardware.

Examples of the application of these methods may be found in Table I, below, showing the relationship between the Max-Cut/QUBO formulations of NP graph problems of the type addressed herein. These have applications to e.g. power grid applications, travelling salesman type problems, and other problems amenable to casting in graph-theory formalisms.

**Table I**

| Power network problem | Graph-theoretic problem | Relation to Max-Cut / QUBO |
|---|---|---|
| Maximal power section [28] | Max-Cut | Direct application of Max-Cut |
| Optimal islanding scheme [54] | Minimal balanced cut | Modification of Max-Cut |
| Critical node detection [29] | Maximum Independent Set Minimal vertex cover | QUBO formulation (Eq. (11)) |
| PMU placement [8] | | Conjugate problem to the MIS |

**Quadratic Unconstrained Binary Optimization**

The cost Hamiltonian described in Eq. (5), whose ground state is traditionally the goal of QAOA, corresponds to a particular structure of classical optimization problems: Quadratic Unconstrained Binary Optimization (QUBO). A QUBO problem is defined as:

$$max \quad x^T Q x + c^T x \tag{6}$$

$$x \in \{0,1\}^n, Q \in \mathbb{R}^{n \times n}, c \in \mathbb{R}^n. \tag{7}$$

QUBOs can be used to express many well-known NP-complete problems over binary variables given a particular choice of Q and c [23]. In this work we will primarily focus on Max-Cut and Maximum Independent Set (MIS), two well-studied graph-theoretic problems in the context of QAOA, defined by a particular structure of Q and c. The relationship between a QUBO formulation and a spin Hamiltonian whose ground state is the solution to the QUBO is provided via a simple mapping between the variables $x$ and the expectation values of operators Z.

**Max-Cut**

The goal of Max-Cut is to find a partition of the vertices in a graph into two sets such that the number of edges between the sets is maximised. Formally, for a graph $G(V,E)$ with $|V| = n$, the goal is to compute:

$$\min_{z \in \{\pm 1\}^n} \sum_{(i,j) \in E} w_{ij} z_i z_j ,$$

for some weights $w_{ij} \in \mathbb{R}$ and $w_{ij} \geq 0$. Note that this is a more general version of the commonly stated Max-Cut problem wherein the weights $w_{ij}$ are all set to 1. In the QUBO formulation, this problem becomes:

$$\max_{x \in \{0,1\}^n} w_{ij} \left( \sum_{i \in V} d_i x_i - \sum_{(i,j) \in E} x_i x_j \right)$$

where $d_i$ is the degree of the $i^{th}$ vertex and the coefficients of the quadratic and linear terms in x are captured by Q and c in the QUBO formulation (equation (6)).

What remains to address this problem using QAOA is to define a Hamiltonian whose ground state encodes the solution(s) to the Max-Cut problem:

$$H_{MC} = \sum_{(i,j) \in E} w_{ij} Z_i Z_j . \tag{8}$$

**Maximum Independent Set (MIS)**

The goal of the MIS problem for a given graph is instead to determine its largest possible independent set - one where no two vertices in the set are connected by an edge. The MIS problem can be formally stated as follows:

$$\max_{x \in \{0,1\}^n} \sum_{i \in V} x_i \tag{9}$$

$$s.t. \ \forall (i,j) \in E, \qquad x_i + x_j \leq 1. \tag{10}$$

This can then be expressed in the standard QUBO formulation by changing it to a maximisation problem with an added Lagrange multiplier $\lambda$:

$$\max_{x \in \{0,1\}^n} \left( \sum_{i \in V} x_i - \lambda \sum_{(i,j) \in E} x_i x_j \right) \tag{11}$$

where $\lambda > 1$ is a penalty term that can be modified in order to change the optimization landscape of the problem instance. The cost Hamiltonian for this problem can be formulated as:

$$H_{MIS} = \sum_{i \in V} \left( \frac{1}{2} - \frac{\lambda d_i}{4} \right) Z_i + \frac{\lambda}{4} \sum_{(i,j) \in E} Z_i Z_j \,, \tag{12}$$

where $d_i$ is the degree of the $i^{th}$ vertex.

### Reductions to other graph-theoretic problems and applications to power networks

The Max-Cut problem has many direct applications in a real-world setting, including image segmentation [24], declustering of files [25] and circuit layout design [26], among many others. In addition, it turns out that many other fundamental problems in graph theory can easily be reduced to this problem. Max-Cut is NP-complete, so a vast number of other problems can be reduced to it in principle - but for some graph-theoretic problems, the reduction is particularly simple and lends itself to implementation on quantum hardware. In the case of QUBO, it corresponds directly to the problem of the 'Ising spin glass', which covers a broad range of NP problem formulations and applications [23].
Several graph problems which can be formulated via either a Max-Cut reduction or a QUBO include the minimum balanced cut and minimum vertex cover. These, as well as the Max-Cut problem itself and the MIS, which were discussed above, turn out to have a direct relation to problems of practical importance in power network design and optimization. These problems are summarised in Table 1 above.

### Accelerating classical heuristics

The approach herein can be applied to accelerate many classical heuristic algorithms for QUBO problems (equation (6)). The work [15] offers a systematic review of many state-of-the-art heuristics from all three key categories of algorithms that may be accelerated by our method: local search, genetic algorithms and simulated annealing. The authors evaluate the performance of each across several metrics using a custom library of problem instances. In this work, we will largely focus on accelerating an algorithm from this review called "PalubeckisMST1", which was originally published in [13]. This algorithm, and its variations, is one of the highest-performing heuristics for Max-Cut in the comprehensive analysis given in [15] (see Table 2 below) and is based

| Algorithm name | Algorithm type | Problem type | Average rank in [15] |
|---|---|---|---|
| PalubeckisMST1 [13] | Local search (Tabu) | QUBO | 15.2 |
| Festa02V [14] | Local search (variable neighborhood search) | Max-Cut | 13.8 |
| Lu10 [31] | Genetic algorithm with local search (Tabu) | QUBO | 13.1 |
| Beasley1998SA [32] | Simulated Annealing | QUBO | 30.8 |

on the use of a uniformly random bit-string as input. Its choice as a benchmark is further helped by the fact that its core is a local search heuristic "Tabu search", which is an important subroutine of several other, high-performing algorithms in the review.
**Table II** - A selection of algorithms which could be warm-started with QAOA listed in [15]. Each was designed with either the Max-Cut or QUBO problem in mind, but due to the fact that a simple transformation exists between the two problems, either can be addressed using any of the algorithms in the list.

We consider various metrics with which to measure the level of speedup achieved by our approach. Many heuristic algorithms, such as "PalubeckisMST1", have the following structure:

1. Repeat the following procedure R times:

    (a) Generate a random bit-string s;
    (b) Perform a local (or somewhat non-local) search procedure starting from $s$, and stop after $T$ iterations.

A metric to determine the efficiency of different sets of bit-strings for initialising a heuristic is an inspection of the fraction of optimal solutions $F_{opt}(T)$ returned by the algorithm for a given number of iterations $T$. Ideally, one would hope to minimise $T$ while simultaneously maximising the fraction of optimal solutions returned by the heuristic. This leads to a metric or 'cost' associated with a limit on the number of iterations that the algorithm can run for:

$$C(T) = \frac{T}{F_{opt}(T)}, \qquad (13)$$

where $T$ is the number of iterations and $F_{opt}(T)$ is the probability of returning an optimal solution after $T$ iterations. As the expected number of repetitions required to find an optimal solution is $1/F_{opt}(T)$, and each repetition uses $T$ iterations, $C(T)$ is the expected number of iterations required to find the optimal solution. Minimising $C(T)$ over $T$ makes the algorithm find an optimal solution as quickly as possible. In practice $F_{opt}(T)$ can be estimated as the fraction of optimal solutions found, taken over many repetitions of the algorithm.

When initialized with QAOA-generated samples, the cost is expected to decrease. Thus, for the same problem instance, we expect the minimum of $C(T)$ to be lower for low-cost initial bit-strings when compared to a random initialisation, leading to a more efficient performance of the heuristic.

A good metric to quantify this efficiency improvement or 'speed-up', is to compute the ratio of the two minima obtained using different initialisation strategies:

$$Q = \frac{\min_{T} C_{random}(T)}{\min_{T} C_{warm-start}(T)}, \qquad (14)$$

where $Q > 1$ indicates a speedup, e.g. $Q = 2$ implies that the warm-starts made the algorithm converge twice as quickly as the case where random bit-strings were used. We will refer to this metric as the $Q$-factor. In practice, we can compute the $Q$-factor by running a large number of optimizations for the same problem instance with a large limit set for the total number of iterations $T_{total}$ using either random initialisation or QAOA warm-starts and then using those statistics to obtain $F_{opt}(T)$ for all $T < T_{total}$.

**Division into subproblems and recombination**

There are multiple ways of dividing a large optimization problem into subproblems: for example, recursive/hierarchical decomposition, partial expansion of a backtracking tree, and simply dividing the input graph into subgraphs. In this work we focus on the last of these, which is a natural _t to our quantum-enhanced approach.

A classical clustering algorithm can be used to divide up the graph to minimize connections between subgraphs. Then a solution to the overall problem can be found by simply concatenating the returned solutions to the subproblems. However, in the case of the Max-Cut problem, this may not lead to a high-quality answer immediately. This is because of the overall $\mathbb{Z}_2$ symmetry of Max-Cut: for each solution to a subproblem we can get an equally good solution to that subproblem by flipping all the bits (and QAOA will choose each of the two solutions with equal probability), yet the quality of an overall solution built from combining solutions to multiple subproblems depends on the choice of bit flips for each one.

To produce a low-cost solution to the overall problem, one can optimize over all flips to the bits of subproblems. This optimization problem turns out to correspond to a QUBO instance on an effective graph whose vertices correspond to subproblems, with weighted edges whose weights are determined by the edges between subproblems. It was proposed in [33] that this overall QUBO problem could be solved itself by using QAOA. Here, we instead observe that in general this problem will be small enough that it can be solved exactly and efficiently using a classical heuristic for Max-Cut or QUBO problems.

For the remainder of this document, when describing our techniques and results, for simplicity we will consider the case where the overall problem we are solving does not need to be split up and recombined. However, all of our methods apply in the more general case where the quantum algorithm produces solutions to subproblems that are then combined.

**Parameter-setting techniques**

One of the key factors in the performance of QAOA is the choice of parameters $\gamma$ and $\beta$ at each layer. In the simplest case, when $p = 1$, we can compute the output state energies efficiently using an analytic approach [34], bypassing the need for parameter-prediction. However, for $p > 1$, this is no longer the case, and more involved methods become necessary, as will be discussed below.

In order to evaluate the performance of the prediction methods set out herein, we use a rescaled approximation ratio metric:

$$AR^*(\beta,\gamma) = 1 - \frac{E_{p,QAOA}(\beta,\gamma) - \lambda_{min}}{\lambda_{max} - \lambda_{min}}$$

Where $E_{p,QAOA}(\beta,\gamma)$ is the energy of a state obtained using QAOA with $p$ layers and some parameters $(\beta,\gamma)$, which were computed via a prediction method, or classical optimization. The parameters $\lambda_{min}$, $\lambda_{max}$ are the minimum and maximum eigenvalue of the cost Hamiltonian respectively, for a particular QUBO instance. Thus, the AR* metric is 1 when the obtained QAOA state is the ground state of HC and 0 when it is the maximally excited state.

**Weighted Max-Cut**

The weighted Max-Cut Hamiltonian (Eq. (8)) is made up of only *ZZ* interactions corresponding to the edges of a given problem graph. Due to its simplicity, it is a very well-studied problem in the field of quantum optimization [4, 35, 36].

**Arbitrary edge weights**

Handling arbitrary edge weights All of the methods discussed below can be applied in the case of unweighted Max-Cut, where all of the edge weights are equal to 1. However, in order to account for arbitrary edge weights $w_{ij}$, it is necessary to rescale the $\gamma$ parameters as follows [37]:

$$\gamma \to \frac{\gamma}{\sqrt{|E|^{-1} \sum_{ij} w_{ij}^2}}. \tag{15}$$

Such a rescaling applies to all of the methods discussed further in this section when a weighted Max-Cut is being considered.

**Dweight Method**

The Dweight method builds on the fixed-angle conjecture [38] and uses optimal parameters obtained for $d$-regular tree graphs. We pre-calculated the optimal parameters $\gamma^{tree}[d]$ and $\beta^{tree}[d]$ for $1 \le p \le 6$ and $d \in [1,10] \cup \{20\}$ (i.e. for $d$ values of each integer from 1 to 10, as well as for $d = 20$) by optimizing the energy formula from [7]:

$$v_p(d,\beta,\gamma) = \frac{i\sqrt{d}}{2} \sum_{a,b} a_0 b_0 f(a) f(b) H_d^{(p)}(a) H_d^{(p)}(b) \sin\left[\frac{1}{\sqrt{d}} \boldsymbol{\Gamma} \cdot (\boldsymbol{ab})\right].$$

Here $v_p(d,\beta,\gamma)$ is a measure of the quality of parameters $(\beta,\gamma)$ for a given depth $d$. A good set of parameters gives a value of around 1. The formula above is iterative in the sense that the form of $\boldsymbol{a}, \boldsymbol{b}, f(\boldsymbol{a})$, and $f(\boldsymbol{b})$ is defined as follows:

$$H_d^{(0)}(\boldsymbol{a});$$

$$H_d^{(m)}(\boldsymbol{a}) = \left(\sum_{\boldsymbol{b}} f(\boldsymbol{b}) H_d^{(m-1)}(\boldsymbol{b}) cos\left[\frac{1}{\sqrt{d}}\boldsymbol{\Gamma}\cdot(\boldsymbol{ab})\right]\right)^d,$$

where $1 \leq m \leq p$

Also $\boldsymbol{ab}$ is the entry-wise product, $(\boldsymbol{ab})_j = a_j b_j$, and $\boldsymbol{a}$, $\boldsymbol{b}$ and $\boldsymbol{\Gamma}$ are $(2p + 1)$-component vectors indexed as:

$$\boldsymbol{a} = \left(a_1, a_2, \ldots, a_p, a_0, a_{-p}, \ldots, a_{-2}, a_{-1},\right)$$

$$\boldsymbol{b} = \left(b_1, b_2, \ldots, b_p, b_0, b_{-p}, \ldots, b_{-2}, b_{-1},\right);$$

and

$$\Gamma_r = \gamma_r; \ \Gamma_0 = 0; \ \Gamma_{-r} = -\gamma_r$$

Finally, $f(\boldsymbol{a})$ is defined in terms of the Pauli $X$ operator and the values for $\beta$, as follows:

$$f(\boldsymbol{a}) = \frac{1}{2}\langle a_1|e^{i\beta_1 X}|a_2\rangle \ldots \langle a_{p-1}|e^{i\beta_{p-1}X}|a_p\rangle\langle a_p|e^{i\beta_p X}|a_0\rangle$$

$$\times \langle a_0|e^{-i\beta_p X}|a_{-p}\rangle\langle a_{-p}|e^{-i\beta_{p-1}X}|a_{-(p-1)}\rangle \ldots \langle a_{-2}|e^{-i\beta_1 X}|a_{-1}\rangle$$

Where $a_i \in \{+1, -1\}$ enumerates the two computational basis states and:

$$\langle a_1|e^{i\beta_1 X}|a_2\rangle = \begin{cases} cos(\beta) & if \ a_1 = a_2 \\ i\cdot sin(\beta) & if \ a_1 \neq a_2 \end{cases}$$

For unseen degrees, we predict the optimal parameters using the following observed scaling of $\gamma^{tree}[d]$ and $\beta^{tree}[d]$:

$$\gamma_1^{tree}[d] \sim tan^{-1}\left(\frac{1}{\sqrt{d-1}}\right), \ \ \gamma_p^{tree}[d] \sim \frac{1}{\sqrt{d-1}} \ \ for \ \ p > 2,$$

and

$$\beta_p^{tree}[d] - \beta_p^{tree}[\infty] \sim \frac{1}{d}. \tag{16}$$

Finally, the predicted parameters for any given graph are weighted averages based on the degree distribution:

$$(\boldsymbol{\gamma}, \boldsymbol{\beta}) = \sum_d w_d d\cdot(\gamma^{tree}[d], \beta^{tree}[d]), \tag{17}$$

where $w_d$ are weights derived from the graph's degree distribution. This approach is particularly effective for graphs with heterogeneous degree distributions.

**SKatan Method**

The SKatan method is based the fact that $\lim_{d\to\infty}\left(\sqrt{d}\gamma^{tree}[d], \beta^{tree}[d]\right) = (\gamma^{SK}, \beta^{SK})$, where $(\gamma^{SK}, \beta^{SK})$ are optimal parameters for the Sherrington-Kirkpatrick (SK) spin glass model [3, 19]. Following the proposal of parameter setting in [47, 50], we rescale the analytic SK optimal parameters using the observed scaling (16) of parameters observed in $d$-regular graphs and information about the average degree of the given graph to predict:

$$(\boldsymbol{\gamma}, \boldsymbol{\beta}) = \left(\gamma^{SK} \, tan^{-1}\left(\frac{1}{\sqrt{d-1}}\right), \beta^{SK}\right). \qquad (18)$$

**Balanced Approach**

The balanced approach combines elements of Dweight and SKatan to optimize for both regular and irregular graphs. Parameters are computed as a weighted average of the Dweight and SKatan predictions:

$$(\boldsymbol{\gamma}, \boldsymbol{\beta}) = \alpha \cdot (\gamma^{SKatan}, \beta^{SKatan}) + (1 - \alpha) \cdot \left(\gamma^{Dweight}, \beta^{Dweight}\right), \qquad (19)$$

where $\alpha$ is a tuning parameter that balances the contributions of the two methods, generally set to 0.5 throughout the rest of this paper, although other options are clearly easily available.

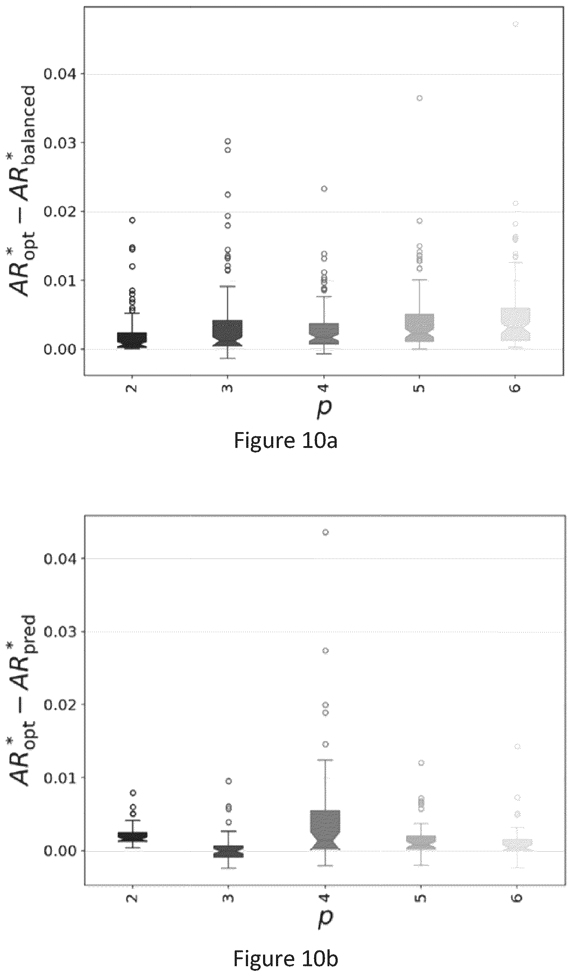

We evaluate the 'balanced' method in FIG. 10, where we compare the rescaled approximation ratio metric AR* defined above of states obtained using predicted parameters and those which have been optimized using a classical optimizer. We find that the median error in energy is on the order of 0.01%, even as the number of QAOA layers increases, with some graphs performing even better with the predicted parameters than those which have been optimised. The largest error is on the order of around 4%.

The boxplots in FIGs 10a and 10b evaluate the performance of the 'balanced' approach from Eq. (19) for Max-Cut graphs (left) and the MIS fitting prediction method (right). We plot the difference in AR* between the states obtained using optimised QAOA angles (AR*opt) and those obtained using either prediction method across 100 Erdös-Rényi graphs with N E [20, 25] nodes and edge probabilities chosen between 0.1 and 0.9. In the case of Max-Cut, the edge weights are randomly uniformly generated from the range [-1, 1], while the MIS case is unweighted.

**Maximum Independent Set**

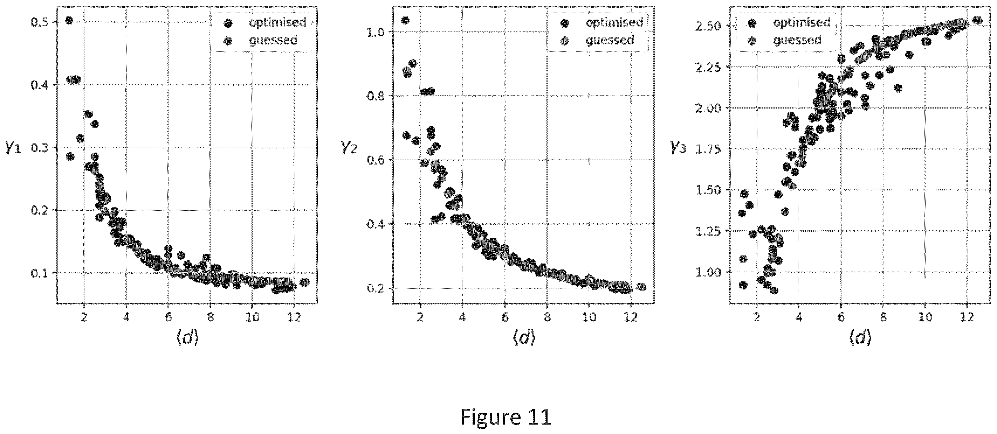

In the case of Maximum Independent Set (MIS), the cost Hamiltonian in Eq. (5) contains local $Z$ operators in each of the qubits in addition to the $ZZ$ edge interactions. Unlike Max-Cut, it is a model that has been studied far less in the literature and thus lends itself less readily to analysis based on previous results. However, initial investigation appears to indicate that the QAOA angle schedules which minimise the energy of its Hamiltonian (Eq. (12)) contain some structure across different problem instances relating to their average degree. This is exemplified in FIG. 11, where for $p = 3$ layers of QAOA, the relationship between the average degree of the problem graph and the value of y is either monotonically increasing or decreasing overall in a smooth fashion.

The case of the plots in FIG. 11 is consistent across all, or at least the first few layers of QAOA for $p \leq 6$. This allows one to model the functional relationship between the average degree of a graph instance $\langle d \rangle$ and the value of $\gamma_j^p$, where $j$ is the index of the layer and $p$ is the total number of layers in the current instantiation of QAOA. We found that the best fit can be modelled via four parameters $\{c_i\}_{i=1,...,4}$:

$$c_1 + \frac{c_2}{\langle d \rangle^{c_3} + c_4} \qquad (20)$$

where the values of $c_i$ can be determined using a simple fitting algorithm like scipy's curve_fit. The resulting set of parameters ci is used to predict new values of $\gamma$ for previously unseen problem instances. We perform the parameter fitting on a set of 105 Erdös-Rényi graphs ranging in size from 10 to 20 nodes and with edge probabilities set to 0.2 - 0.7 for each size. We then test the predictions on new instances of the same size as well as larger systems up to $N = 25$ vertices.

The scatter plots of FIG. 11 show the optimal and guessed values of $\gamma_j^p$ for total number of layers $p = 3$ and $j = 1,...,3$ labelling each layer, versus the average degree of the graph instance (d). Each point corresponds to a different graph, with the navy scatter plot showing the optimized values obtained via an emulation and the L-BFG-S algorithm as discussed in the text while the red points are the values predicted for new graph instances using the methods described herein.

Such a simple relationship between the optimal values of $\gamma$ and graph degree does not, however, hold throughout. As $p$ increases, the first few layers do not deviate much from the functional form in Eq. (20), but the final layers lose this clean relationship with $\langle d \rangle$. We treat these extraneous cases by instead using a symbolic regression tool, PySR [40] to find the best functional fit via a mean-square error loss function. We find that while such a functional relationship is not always possible with a low loss value, the error in angle predictions does not appear to lead to a significant error in the final state energy of the QAOA output. This may be an indication of the optimal parameters 'converging' after a number of layers, with the last few layers corresponding to extra degrees of freedom that do not impact the output of the algorithm as much as the first few.

In the case of the mixing Hamiltonian parameters $\beta$, we observe less of an obvious relationship between the degree of the graph instance and their optimal values. However, we note that the variation in $\beta$ across instances is a lot less pronounced than in the case of $\gamma$. Owing to this, for new graph instances, we simply use the average of the optimal $\beta$ obtained for the rounded average degree of the graph:

$$\beta_{new} = \langle \beta_{optimal} \rangle_d. \tag{21}$$

For a new graph with some average degree d, we round d to its nearest integer and use the average $\beta$ obtained for that degree as a prediction. The maximum degree is capped to 12 and any graph with higher average degree simply uses the $\beta$ value for $d$ = 12. In general, using the highest available pre-calculated value has been found to be suitable where the average degree of the graph being studied exceeds the highest calculated degree. This is similar to our approaches in the MaxCut case, where we assume that for graphs with large degree and with $p < 7$ QAOA layers, the optimal $\beta$ parameters will converge enough for the error to be negligible. We evaluate the MIS prediction method in FIGs 10a and 10b, as in the case of Max-Cut, and find that it performs exceedingly well, occasionally outperforming the classical optimization even in the case of $p$ = 6 layers of QAOA. This is a testament to how difficult it can be to perform variational optimization of QAOA parameters even in the case where a circuit can be simulated classically.

**General QUBOs**

Most of the results in this work focus on weighted MaxCut and MIS problem instances - however, it is fruitful to develop a parameter prediction method for more general QUBOs, where the Q and c in Eq. (6) can be arbitrarily chosen. This would allow our quantum-enhanced optimization methods to be implemented efficiently for a far larger family of optimization problems, as well as offering insights into the performance of QAOA in new regimes which have not previously been studied.

While there are guiding principles that might help with such a task like in the examples of Max-Cut and MIS - e.g. the decrease of angle magnitude with increasing system size or the relationship between optimal angles and the degree distribution of the problem graph - the sheer size of the parameter landscape is too large to attempt a similar analysis for arbitrary QUBOs. However, this does not mean that some regression-based or statistical approaches would not be useful, given their effectiveness for the case of Max-Cut and MIS.

With this in mind, we explore the possibility of using graph-neural-networks (GNNs) [41] to predict near-optimal QAOA parameters for arbitrary QUBO problems. GNNs are a family of neural networks that can operate naturally on graph-structured data, reducing the size of the learned function landscape by taking advantage of symmetries in the domain of the training data, which in this case are graphs representing QUBOs. As the optimal QAOA parameters should remain unchanged under a relabelling of the graph nodes, GNNs offer an efficient way to learn the underlying patterns relating QUBO instances to optimal QAOA parameters, with the potential of scaling well across increasing problem sizes. We note that GNNs have been applied to study parameter prediction for QAOA in previous works [42-44], however these studies were limited in their scope both with respect to problem size and the problem types that were explored.

In our implementation, we train a separate GNN for each number of QAOA layers, $p$ = 2 up to $p$ = 6. We generate training data by optimizing QAOA parameters for Erdos-Renyi graphs with edge probabilities sampled from the range [0.1, 0.9] for graphs with up to 20 nodes. The edge and node weights are randomly generated based on a set of structured and unstructured QUBO problems, including MaxCut and MIS, with weight amplitudes constrained to be in [-1, 1]. We find that the GNNs produce high-quality predicted QAOA parameters even when trained on only several thousand graphs for each model, scaling well on test graphs which are larger than those in the training data.

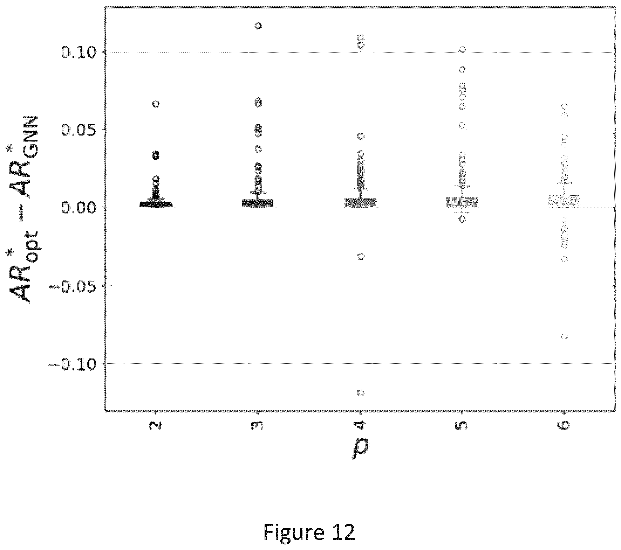

FIG. 12. Evaluates the performance of GNN predicted parameters against those optimized using a classical optimizer. We plot boxplots showing the difference between AR* values obtained using either method for each number of QAOA layers across all 250 random QUBO graphs. In FIG. 12 we plot the difference in AR* between states obtained when using optimized QAOA parameters ( $AR^*_{opt}$ ) and those predicted by the GNN models ( $AR^*_{pred}$ ) across 250 random Erdos- Renyi QUBO graphs with N E {20, ... , 25} nodes and edge probabilities sampled from [0.1, 0.9].

The QUBO node and edge weights making up Q and c, all in the range [-1, 1] are generated by either sampling all of them from a uniform distribution in the total range, or by fixing either the node/edge weight while generating the edge/node weights randomly, respectively. While these graphs do not capture the full range of possible QUBO problems, they lend some credence to the ability of our GNN models to predict near-optimal parameters in a wider range of QUBO structures.

## Hardware Implementation and Optimization

When QAOA is applied to a graph problem like Max-Cut or MIS, each qubit in the quantum computer corresponds to a vertex in the graph $G = (V, E, w)$. Thus, each QAOA cost Hamiltonian layer consists of 2-qubit quantum gates $e^{iw_{jk}\gamma^i Z_j Z_k}$ for each edge $(j, k) \in E$, where $w_{jk}$ is the weight associated with the edge in a weighted graph problem (with $w_{jk} = 1$ in the unweighted case) and $\gamma^i$ the $i^{th}$ variational parameter corresponding to the $i^{th}$ layer of QAOA. In the case of MIS, the cost Hamiltonian layer will have an additional set of local $e^{i\gamma_j Z_j}$ operators corresponding to each vertex of the graph $j \in V$. We will call each of the 2-qubit quantum gates a *term*. As the terms for cost Hamiltonians with the type of structure found in Eq. (5) commute, they can be implemented in any order. However, most quantum hardware platforms impose connectivity constraints such that not all edge terms can be implemented without the use of swap operations to re-organise the terms (or, equivalently, the qubits). The order in which the terms are implemented and the swap operations required is known as the routing problem.

Furthermore, we also need to assign each vertex in the problem instance to a hardware qubit on the device. Let the connectivity of the hardware (across which qubits gates can be implemented) be specified by a graph called the hardware graph. The qubit mapping problem of how best to associate vertices with qubits can be solved in a number of ways, and the routing algorithms below are agnostic to which method is used. One effective and straightforward solution is to use the algorithm for implementing the required terms itself to generate a mapping [45]. The final assignment of vertices to qubits at the end of the algorithm is used as an initial mapping for another iteration of the algorithm.

## Qubit Mapping

We begin by devising an initial mapping which we can pass to the routing algorithm. The simplest method one can use to do this is to generate a random assignment of vertices to qubits. A more efficient approach may be to provide the routing algorithm with a more informed initial guess which may require less effort to optimize. The next few sections discuss methods to do this.

## Line Laplacian

The first approach aims to assign the vertices of the problem graph to the hardware graph in a way that minimises the distance between any two qubits which need to interact.

Let $G(V, E)$ be an undirected graph, then the Laplacian matrix $L \in \mathcal{M}_{|V| \times |V|}(\mathbb{R})$ is defined to be:

$$L_{i,j} = \begin{cases} deg(v_i), & if \ i \neq j \\ -1, & if \ (v_i, v_j) \in E \\ 0, & otherwise. \end{cases} \tag{22}$$

This is a symmetric positive definite matrix, with smallest eigenvalue 0 with eigenvector 1, the "all ones" vector. Assuming the graph is connected the 0-eigenspace is 1 dimensional, and the unit eigenvector with the second smallest eigenvalue is known as the Fiedler vector, which can be used for partitioning and clustering of graphs [47].

Suppose we want to map the vertices of the graph G to a line, which can be represented as a function $f : V \to \mathbb{R}$, such that we minimise the distance between connected nodes. This is a minimisation problem as described in [48]:

$$arg \min_f \left( f(v_i) - f(v_j) \right)^2$$

$$s.t. \ \sum_{v \in V} \left( f(v) \right)^2 = 1, \ \sum_{v \in V} f(v) = 0. \tag{23}$$

The first constraint normalises the output so the resulting positions on the line are not all 0, and the second constraint means that the resulting positions are not all equal. Writing $f$ for the vector $(f(v_1),..., f(v_n))$, we can rewrite the objective function as $f^T L f$, and so the solution to this optimization problem is precisely the Fiedler vector. We can use this to determine a mapping from the problem graph G of Max-Cut to the hardware graph $H$. The process proceeds as follows:

1. Find a sequence $S = (s_1,...,s_{|VG|})$ of distinct vertices in $H$ of length $|V_G|$ such that any adjacent pair of vertices in the sequence are connected by an edge in $H$.

2. Determine the Fiedler vector $\boldsymbol{f}$ of the graph $G$, treated as an unweighted graph.

3. Order the vertices of G by the corresponding component of $\boldsymbol{f}$.

4. Assign the $k^{th}$ vertex in the ordered sequence to $s_k$.

This will place the graph vertices on a line, such that the sum of the distances between any two qubits which need to interact is minimised. This works well for hardware graphs which are sparsely connected, as it does not take into account the full connectivity of the graph $H$.

### 6.1.2 Quadratic Assignment Problem

An alternative approach is to try to assign vertices in the problem graph to qubits in a way that maximises the total number of edges which overlap. Let $V_G$ and $V_H$ be the vertices in the problem graph and hardware graph respectively, and $d_G: V_G \times V_G$ - {0,1} and $d_H: V_H \times V_H \rightarrow$ {0,1} be the indicator functions of $E_G$ and $E_H$ respectfully. We want to find the maximum value over all injections $f: V_G \rightarrow V_H$ of:

$$\sum_{u,v \in V_G} d_G(u,v) d_H\big(f(u), f(v)\big) \qquad (24)$$

This is an instance of the quadratic assignment problem [49], a combinatorial optimization problem which aims to assign facilities to locations in a way that minimise the cost of flowing between facilities. For the precise reduction, we require $|V_G| = |V_H|$ and a bijection between the vertex sets, which is not always the case in our context, but we can expand $G$ by adding extra unconnected nodes that can map to anywhere on the hardware. This is still an NP-hard problem [50], but there are heuristic methods that rapidly obtain an approximately optimal solution, for example in [51]. Also, as we are using this as an input to the routing algorithm, we can tolerate a suboptimal solution and improve it with the routing method.

### 6.2 Routing

Once we have the initial layout of the vertices on the hardware graph, we need to apply swap operations to reorganise the qubits so that the required interactions are possible on the constrained hardware. We provide various methods to do this:

### 6.2.1 Greedy algorithm

Here, we describe an approach based on a modification of an idea first presented in [16] for implementing the terms in a fermionic quantum Hamiltonian using fermionic swap networks.

Once a mapping is chosen, our procedure generates a quantum circuit which is made up of a sequence of swap gates, interspersed with terms. At any given time, the procedure maintains a list of terms that have not yet been implemented. Whenever terms can be implemented, because the corresponding qubits are connected to each other in the hardware graph, we immediately implement the terms and remove them from the list of terms.

Let the distance $d(T)$ of a term $T$ be defined as the shortest path in the hardware interaction graph between the two qubits on which it acts. If the distance is 1, then the term can be implemented immediately; otherwise, at least one swap is needed to implement it. Then we define an overall distance function D as

$$D = \sum_T d(T)^q$$

for some real number $q$ which is a parameter of the algorithm. In practice, taking $q = 1$ - in which case $D$ is just the total distance of terms - is already quite effective; however, choosing $q < 1$ can be advantageous by prioritising bringing close terms together rather than those at a greater distance.

The algorithm proceeds as follows:

1. Implement all terms at distance 1. If there are no terms remaining, terminate the algorithm.

2. For all possible swaps (corresponding to edges in the hardware graph) compute the overall distance D following applying that swap to all of the terms.

3. If there exists a swap which reduces the overall distance, apply the swap that minimises the overall distance and go to step 1.

4. If there is no such swap, apply a swap that reduces the distance of the term that was the lowest distance, and go to step 1.

The final step of the algorithm is a fallback in case the best swap leaves the total distance unchanged (for example, by decreasing the distance of one term, but increasing the distance of another).

The above algorithm generates a quantum circuit which is expressed as a sequence of terms interspersed with swap operations. On typical quantum hardware, swap operations are implemented via a sequence of three controlled-not (CNOT) gates. In cases where a swap operation occurs before or after a term on the same qubits, advantageously the combination of the swap and the term can also be implemented via three CNOT gates. This is discussed in more detail in below.

A related algorithm and software tool, termed 2QAN, for implementing terms in a Hamiltonian in an arbitrary order using swap operations was presented in [52]; this algorithm also uses the above optimization technique for merging swap operations with terms. However, our approach differs by using an overall distance function which takes into account the distances of all terms, whereas the algorithm of [52] always aims to reduce the distance of the lowest-distance term (which in our algorithm is just a fallback). Thus our approach may be expected to enable large numbers of terms to be implemented more quickly.

### 6.2.2 A-star

An alternative approach is to formulate this routing problem as a graph traversal problem, and apply search methods from such as A* (A-star) [53] to solve it. These heuristic methods are very general, and have been used in the optimisation of quantum circuits before for the qubit mapping problem [54]. In general, these methods take a directed weighted graph $S(V, E, W)$, a starting node $s \in V$ and set of target nodes $T \subseteq V$, and output a path from $s$ to any $t \in T$ with small total weight. For the routing problem, given a problem graph $G$ and hardware graph $H$, the graph we are exploring contains:

- $V$ is the set of partial circuits containing a sequence of swap gates interspersed with terms, such that all the swaps are valid edges in $H$ and all of the interactions correspond to logical edges in $G$.

- There is an edge $(C_1, C_2) \in E$ between two partial circuits $C_1$ and $C_2$ if we can form $C_2$ from $C_1$ with a set of disjoint swaps in $H$, followed by some interactions from $G$.

This is an exponentially sized graph as there are many possible partial circuits, and so we are unable to store it all at once. Therefore, many graph search algorithms will explore this state space locally, starting at s and iteratively picking neighbours until a node in $T$ is found. This requirement enforces the neighbours of a node to be easily computable as well, as at every step of the algorithm we need to determine where it can explore next. A nice feature of $S$ in this problem is that it is a tree, as for every partial circuit there is only one path to reach it - the sequence of swap and interaction layers it contains. This means we do not have to worry about revisiting nodes during our search.

The start node is the empty circuit with the logical vertices in $G$ being assigned physical qubits in $H$. A partial circuit is in the set of target nodes $T$ if every edge in $G$ corresponds to an interaction in the circuit which is valid with respect to the connectivity of $H$. Equivalently, if we attach a list of unimplemented interactions to each partial circuit in $V$, we have reached a target node when this list is empty.

The A* algorithm is a heuristic algorithm that explores this graph $S$ one node at a time, maintaining a frontier of possible nodes which could be explored next. Every time a node $n \in V$ is explored, it is removed from the frontier and all $n' \in V$ such that $(n, n') \in E$ are added to the frontier, unless $n \in T$ at which point the algorithm terminates. The choice of the next node to explore in the frontier is dependent on two factors, the current cost of the partial circuit in the current node $g: S \to \mathbb{R}$, and an estimate for the cost required to reach the target set $T$, $h: S \to \mathbb{R}$. More generally the cost can also depend on the path taken from *s* to *n*, but as *S* in our case is a tree, it suffices to define it to only depend on the node *n*. For a given frontier, the A* algorithm will choose the node *n* such that $f(n) = g(n) + h(n)$ is minimised, so *f* is a heuristic estimate for the length of the shortest path from s to any $t \in T$ that passes through n.

There are multiple cost functions and heuristics that we can use, which have effects on the optimality and runtime of the algorithm. The choice of cost function is also dependent on what the optimisation target is, whether it is gate count or depth of the circuit. This means that the A* algorithm encompasses many different graph search methods by choosing different functions for *g* and *h*. For example, by taking $h \equiv 0$ we get uniform cost search, where the node that will be explored will always be the one with the smallest current cost. This guarantees optimality, but without a heuristic to guide the search it can potentially run very slowly. The other extreme is taking $g \equiv 0$, called greedy search, where we only use the heuristic to guide the search. This is likely to be suboptimal, but good heuristics will mean it can find valid paths to *T* very quickly.

For the cost *g* of a partial circuit, we can simply use the total number of swaps required in the circuit to run the quantum algorithm. This is a good metric when the number of gates in the circuit is important, as every swap will require 3 CNOT gates to implement on typical quantum hardware. Alternatively, we can group disjoint swaps together that can act at the same time to get an estimate of the depth of the partial circuit.

The choice of heuristic *h* is a difficult question that comes with many trade-offs. The optimal heuristic *h\** is the heuristic that precisely is the length of the shortest path from a node *n* to *T*. This is often intractible to compute exactly and so little use in practice, but any heuristic satisfying $0 \leq h \leq h^*$ is called admissible and when used in the A* algorithm will lead to an optimal path [55]. Furthermore, the closer *h* and *h\** are, the faster the algorithm will find the optimal path. Despite this, non-admissible heuristics can still be effective at finding close to optimal paths much faster.

One heuristic that we can use is the same total distance measure used in the greedy approach:

$$D = \sum_T d(T)^q$$

for some real number *q* which is a parameter of the algorithm. This is not admissible, as one swap can make multiple interactions closer together in the hardware, and therefore *D* may potentially overestimate the number of swaps required. We expect further improvements in both runtime and optimality can be made in this framework by choosing better heuristics.

**Graph choice and efficient SWAPs**

In order to reduce quantum resource requirements when implementing our circuits on the IBM superconducting hardware, one can tailor the graph problem instances to match the connectivity of the devices they are implemented on. More precisely, given the heavy-hex connectivity graphs of the IBM devices $G_{IBM}(V,E)$, we generate problem instances of the form $G'(V',E', W)$ where *G'* is an induced subset of $G_{IBM}$ with weighted edges according to the set of weights *W* and $V' \subseteq V$.

This method of generating graphs removes the requirement for qubit swapping, as each edge in the problem graph corresponds to a physical coupling on the device. However, this also leads to relatively sparse graphs with simple structure which does not allow us to test our scheme on more interesting problem instances.

In order to enhance the problem instances without increasing the two-qubit gate counts too much, we combine the *ZZ* interactions in the cost Hamiltonians of Eq. (8) and Eq. (12) with the necessary SWAP interactions which allow for additional edges to be added to the graph instances while requiring less total two-qubit gates.

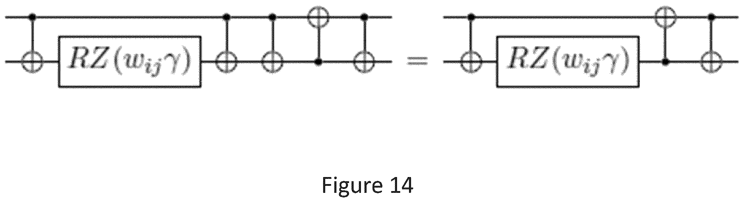

This is illustrated in FIG. 14. If one wishes to perform a *ZZ* interaction between qubits *i* and *j* corresponding to an edge $(i,j) \in E$ of the problem graph, followed by a swap of qubits *i* and *j,* one can simplify the entire operation as shown in FIG. 14, in which the circuit on the right removes 2 unnecessary CNOT operations relative to the circuit on the left, which on the IBM hardware is equivalent to 4 native CZ two-qubit operations. This is a simple reduction, but an additional trick allows for the efficient construction of problem instances with added edges between vertices that are a distance of two edges away from each other, leading to a far richer set of problem instances to test on. The method for doing this is as follows:

1. Given a subgraph of the device graph $G'(V',E',W)$, select a set of edges $E_{SWAP} \subset E$ which will act as SWAP edges, allowing each vertex in the edge to access the neighbouring vertices of the other.

2. Generate a set of new edges $E_{new}$ as follows: for each $(i,j) \in E_{SWAP}$, add $\{(i,j')\}_{j' \in \mathcal{N}(j) \setminus \{i\}}$ and $\{(i',j)\}_{i' \in \mathcal{N}(i) \setminus \{j\}}$ to $E_{new}$, where $\mathcal{N}(i)$ is the set of all neighbouring vertices of *i*. We assume that for every vertex *i* incident to an edge in $E_{SWAP}$, all neighbours $\mathcal{N}(i) \setminus \{j\}$ are not incident to an edge in $E_{SWAP}$.

3. When implementing QAOA, for odd number of layers, first implement the *ZZ* interactions corresponding to the edges $E'\backslash E_{SWAP}$, followed by a set of combined *ZZ* and SWAP interactions for each of the edges in ESWAP. Finally, perform a *ZZ* interaction corresponding to each new edge in $E_{new}$.

4. In the case where the number of layers is even, perform the three steps in reverse, such that the qubit information ends up back in the original physical qubits that it began in at the start of the algorithm.

5. If the QAOA algorithm is run for total p which is odd, instead of swapping back the qubits at the end, keep track of the SWAPs and perform post-processing on the output bit-strings to recover the correct measurements corresponding to the un-SWAPped qubits.

**Error Mitigation Techniques**

Readout error mitigation

Due to the noisy nature of near-term quantum devices, the samples obtained when running QAOA are likely to suffer from errors, leading to suboptimal, higher-energy outputs. We address this issue with several error-mitigation techniques which use both information about the physical error rates of the quantum device as well as expected properties of high-quality solutions.

When it comes to error-mitigation for the outputs of quantum computer, many methods are tailored towards improving estimates of the expectation value of some observable. For our purposes, we require error-mitigation techniques which can instead improve the measured samples directly, making many popular methods like Zero-Noise-Extrapolation [56] or Clifford-Data Regression [57] less applicable. Instead, we implement a well-known technique for readoutnoise mitigation which involves applying the inverse of a noise calibration matrix to the output sample distribution. This noise calibration matrix is constructed using an efficient protocol which requires an estimate of readout error in the computational basis of each qubit involved in the quantum circuit [58]. More precisely, for each qubit one needs to construct a 'correction matrix':

$$\Lambda = \begin{bmatrix} 1-p & q \\ p & 1-q \end{bmatrix}$$

where $p, q \in [0,1]$ are the probabilities of incorrectly measuring a $|0\rangle$ and $|1\rangle$ state respectively. These probabilities can be obtained by simply running two simple circuits on the qubits used in the computation and collecting their statistics: a circuit initialised to the all-0 state and one initialised to an all-1 state via the application of *X* operators on each of the qubits.

The inverse of this matrix, $\Lambda^{-1}$, tensored together for all qubits, can be used to correct for readout errors, as its action on the output measurement distribution of a quantum circuit inverts the classical bitflip errors estimated by $\Lambda$. In practice, however, this method is quite computationally intensive as the tensor product of each $\Lambda^{-1}$ for every qubit grows exponentially with the number of qubits.

In our experiments, we use an efficient implementation of the correction matrix inversion method which relies on the sparsity of the output bit-string distributions of the quantum circuit in order to reduce both memory and runtime requirements, first presented in [59] by Yang et al. In their work, the authors introduce several readout-error-mitigation 'filters' based on previous innovations like the SGS algorithm [60] and new improvements. In our experiments, we implement the least norm filter (LNF) presented in their work, which numerically showed the greatest trade-off between improvement in output bit-strings and the computational resources required for implementation.

**QAOA bit-string refinement**

While low-energy bit-strings for an NP-hard problem like Max-Cut or MIS are difficult to generate, it is fairly straightforward to compute the energy of a bit-string once it is obtained. This allows us to employ several further 'filtering' techniques for the bit-string distributions obtained from running QAOA on hardware.

- Energy-filtering: We compute the energies of all the samples obtained from QAOA efficiently and keep only the 10% of bit-strings with the lowest energy.

- Frequency-filtering: We keep only the bit-strings which have the highest frequency in the QAOA output distribution, based on some threshold frequency (set to 0.05%, or at least 5 occurrences in 10000 samples). If no bit-strings occur with a frequency above the threshold, then the threshold is lowered until some do. If the QAOA output is a uniform distribution over bit-strings, no filtering is applied. This filter is informed by the intuition that a 'good' QAOA output should concentrate around bit-strings that either are or approach the solution string. On the other hand, if errors occur on the QAOA output, each resulting bitstring is likely to occur with low probability.

- Hamming-filtering: As in energy-filtering, we select only the lowest-energy bit-strings, but a lower percentage (1%) and choose another 9% of strings closest in Hamming distance to those low-energy strings. This filtering is informed by the local search structure of the classical algorithms which we aim to accelerate. Strings which have low Hamming distance to the solution, or at least to a high-quality string, are likely to lead to faster convergence.

**Experimental Results**

We have implemented the above approach in a full software pipeline that allows for finding the solutions of large and complex Max-Cut instances using emulated or real quantum hardware.

Emulated results

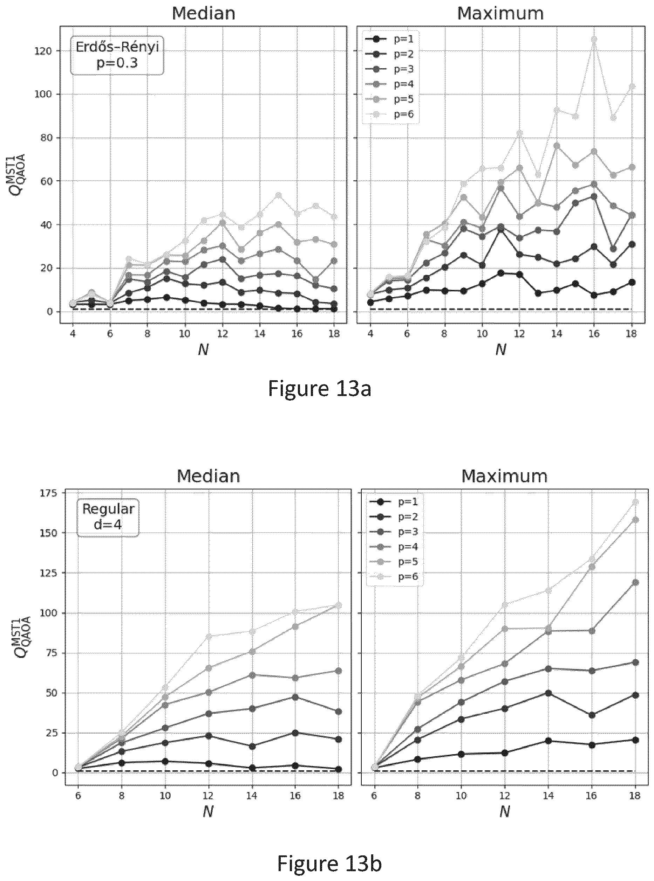

In order to test our method, we first explore the unweighted Max-Cut problem using a classical emulator of a quantum computer. We investigate cases with total number of QAOA layers is $1 \leq p \leq 6$, using both classically optimized QAOA parameters and predicted parameters as discussed above.
After sampling bitstrings from the QAOA algorithm, we use them to warm-start the PalubeckisMST1 algorithm implemented in MQLib [15] and compare its performance with initialising with random samples by using the Q-factor from Eq. (14). If the bit-strings are low-cost, we expect them to speed up the convergence of the local search by a factor Q. In this case, we refer to the metric as $Q_{QAOA}^{MST1}$ to denote the fact that we are comparing expected runtimes when warm-starting with QAOA samples versus random samples, as in the case of the bare PalubeckisMST1 algorithm from Table II. In order to estimate $Q_{QAOA}^{MST1}$, we perform Max-Cut optimizations on each graph instance using both random initial bit-strings and those obtained from QAOA, with an iterations cut-off of $T_{total} = 5 \times 10^5$ used in each optimization, in order to guarantee that the optimizations converge to the optimal solution by the end of each run. We keep track of the number of iterations required in each case to reach the optimal cut for the graph and used those statistics to estimate the expected runtime of the algorithm for a given set of initial strings. We keep track of the number of iterations required in each case to reach the optimal cut for the graph and used those statistics to estimate the expected runtime of the algorithm for a given set of initial strings.
First, we explored the performance of our approach on randomly generated graphs. Consider FIGs 13a and 13b, which shows the Q-factor from warm-starting the PalubeckisMST1 algorithm implemented in MQLib [15] for unweighted MaxCut with samples obtained using classical emulation of the QAOA algorithm using the 'balanced' approach for predicting angles for randomly generated Erdös-Rényi graphs with edge probability $p = 0.3$ (FIG. 13a) and regular graphs with degree $d = 4$ (FIG. 13b) for graphs with between $4 \leq N \leq 18$ nodes. We obtain 1000 samples from the classical emulator, and estimate the speedup using the Q-factor from Eq. (14) using an iterations cut-off of $T_{total} = 5 \times 10^2$ as this was sufficient to always reach the optimal solution for all problem instances of this size.
We see increase in the Q-factor as we increase the number of layers of QAOA and increase the problem size in both the median and maximum cases, achieving a Q-factor of over 100 for Erdös-Rényi graphs of size $N \geq 16$ and up to 170 for regular graphs. For small number of layers $p$, we see the performance starting to decrease in the median case for larger problem sizes as the ansatz is not expressive enough to get good samples to use as a warm-start. The scaling is also much clearer for the regular instances, where there is a consistent increase in Q-factor as the problem size increases. This is likely because the angle prediction is based on results for constant degree graphs.
We see a positive scaling as we increase both the number of vertices in the problem graph and increase the number of layers of QAOA, up to 175 for the largest graphs on 18 vertices. The regular graphs performed better, where the average speedup factor for Erdös-Rényi graphs was at most 60 compared to over 100 for regular graphs, which may be due to the 'balanced' approach for predicting angles is partially based on graphs of constant degree. As the problem size increases, we also see for small numbers of QAOA layers p the Q-factor starting to decrease again, which could be because the ansatz is not expressive enough to provide samples which are useful as a warm-start. This is especially visible for the Erdös-Rényi graphs. A full set of results, including experiments accelerating the FESTA2002VNSPR algorithm, may be found below.
Overall, these results indicate that on a perfect quantum computer, we will be able to achieve a significant speedup by warm-starting classical heuristics on a large class of problem instances.
Next, we investigate instances of increasing size which match the topology of the IBM ibm_torino 133-qubit quantum chip, on which our hardware experiments are performed. In this case, we optimize the QAOA parameters variationally on a classical processor by computing the expected energies of its output, using an efficient tree tensor network code [7, 61] for larger instances, and then implement the resulting parameterised quantum circuits. We remark that, as the IBM hardware connectivity graph is bipartite, an optimal cut in any such subgraph can be found efficiently by a greedy algorithm. However, the PalubeckisMST1 algorithm (which works differently to this greedy algorithm) is not necessarily able to find this optimal cut.

Return briefly to FIG. 4, which shows that classical simulations of the QAOA algorithm are possible for small-enough graph instances, in this case up to 27 vertices. We use samples obtained from simulations of QAOA to warm-start the PalubeckisMST1 algorithm implemented in MQLib [15] and compare the expected runtimes to the case where random initial strings are used (upper plot in FIG. 4). We implement the frequency filter on the simulated samples and find that they substantially improve the results as the problem size increases (lower plot in FIG. 4). The instability for p = 1 can be explained by the fact that as the problem sizes increase, lower total number of layers p might not lead to as high a concentration in good-quality strings.

In FIG. 4 we plot the value of $Q_{QAOA}^{MST1}$ in the case where 10000 QAOA warm-start samples were obtained by classically emulating the quantum algorithm, where the Q-factor is again obtained with $T_{total} = 5 \times 10^2$ and estimated across 1000 optimisations. The results show up to nearly 200-fold decreases in expected runtime when using QAOA samples observed and, in some cases, nearly 1000-fold speedups when the frequency-filtering technique (described above) is implemented. Importantly, we do not observe values of $Q_{QAOA}^{MST1}$ below 1, meaning that the warm-started version of PalubeckisMST1 never performs worse than in the case of random samples.

**Circuit Optimization Results**

Next we compare the complexity of the quantum circuits obtained using our greedy algorithm and our A* heuristic. We compare these on the task of implementing one layer of the QAOA algorithm for random 3-regular graphs of various sizes, on a quantum computer with both $10 \times 10$ square lattice connectivity and the heavy-hex connectivity on 127 qubits, for example on the ibm_sherbrooke device. We initialise the vertex-to-qubit mapping in a random layout.

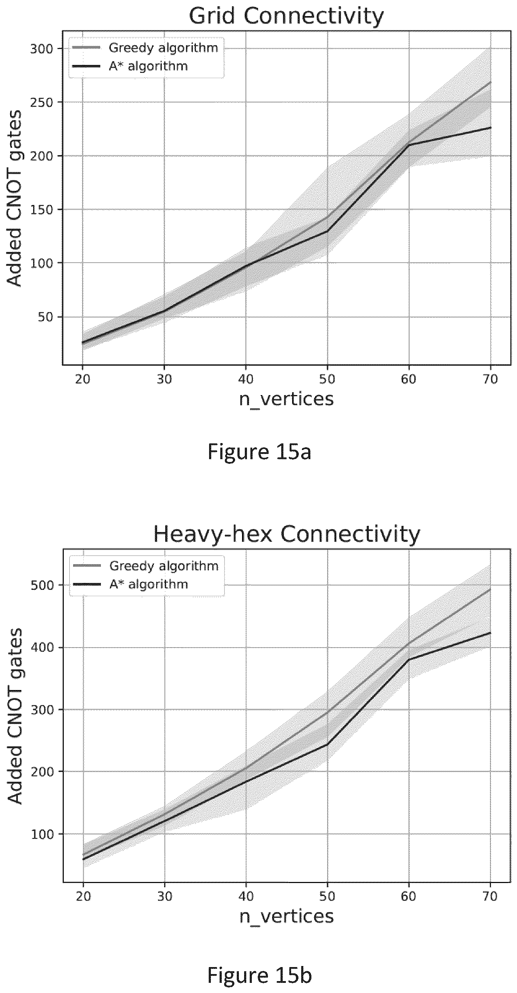

Consider FIGs 15a and 15b, showing the number of additional CNOT gates required to implement one layer of QAOA for random 3-regular graphs with between 20 and 70 vertices, using both the greedy algorithm and the A* heuristic using q = 1 in the distance computation and starting with a random initial vertex to qubit mapping. Each point on the line is averaged over 5 graphs, with the shaded area showing the minimum and maximum costs found for a given graph size. With the grid connectivity (FIG. 15a), for $N > 40$ vertices we see an improvement between 1.3% and 15.8% for the A* heuristic. With the heavy-hex connectivity (FIG. 15b), we see an improvement between 6.5% and 17.4% for the A* heuristic over all instance sizes.

In FIG. 15, we see the total distance heuristic with $q = 1$. On average, the circuits are more costly to implement using the heavy-hex connectivity as it is less connected compared to the grid, and so requires more swaps and hence CNOT gates.

We also compare the performance of the different initial vertex-to-qubit mappings. We lay out random 3-regular graphs with between 20 and 50 vertices on a quantum computer with a $10 \times 10$ square lattice connectivity, and we run both the greedy and A* heuristic routing methods for 20 iterations, each time using the final mapping found by the routing algorithm as the initial mapping in the next iteration as described above.

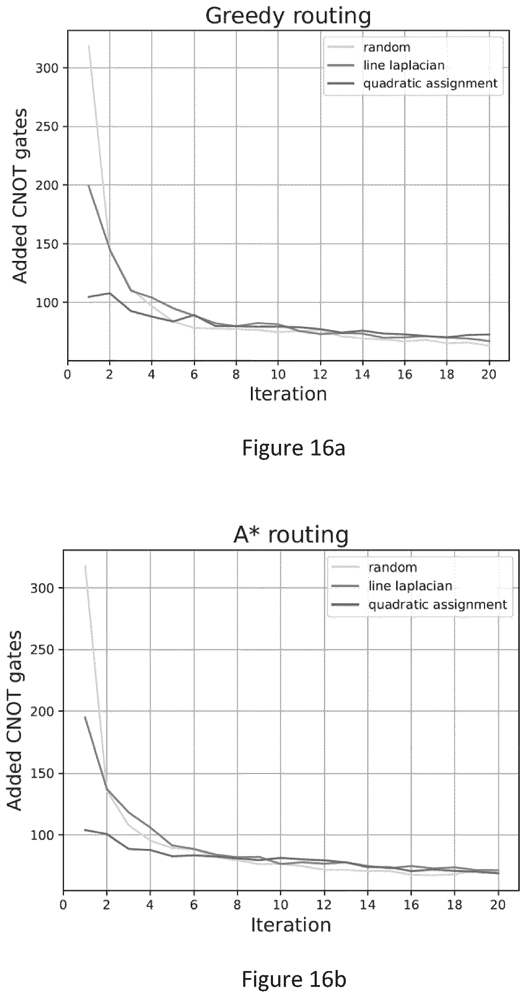

Consider FIGS 16a and 16b showing the number of additional CNOT gates required to implement one layer of QAOA averaged over random 3-regular graphs with between 20 and 50 vertices on quantum hardware with grid connectivity on a $10 \times 10$ grid. Each qubit mapping method is used as the initial input to the first iteration of multiple applications of the routing process, using the final mapping of the routing process as the initial mapping of the next iteration. Each line is averaged over all graph sizes, with 5 graphs of each size. With both the greedy (FIG. 16a) and A* heuristic (FIG. 16b) routing algorithms, we see for the first iteration a 38% decrease for the line Laplacian layout and 67% decrease for the quadratic assignment layout in the number of extra CNOTs required. To reach the same number of extra CNOTs as the quadratic assignment method after 2 iterations, it takes the random initial layout 4 iterations for the greedy routing algorithm and 6 iterations for the A* routing algorithm.

In FIGs 16a and 16b we see that when the number of iterations is less than 5, the quadratic assignment mapping method results in the fewest number of extra CNOT gates. After around 5 iterations, all three methods begin to give similar CNOT counts as the mappings have converged. This means that when using the quadratic assignment method with 2 iterations we get the same number of added CNOTs as using a random initial layout with around 6 iterations. We also see that while most of the improvement in CNOT count occurs at the first few iterations, in the greedy routing method marginal gains can still be made even at 20 iterations, whereas in the A* heuristic it converges on the optimal mapping by around 15 iterations.

**Hardware results**

IBM topology graphs

In order to test our approach on quantum hardware, we first run experiments on graphs matching the IBM topology, like those tested in emulation above. Since we are not limited by classical compute, we are able to push the system sizes to up to $N = 30$ vertices. In this case, as in emulation, the edge weights are all set to 1 and the graphs are chosen to maximise the number of cycles for the number of vertices.

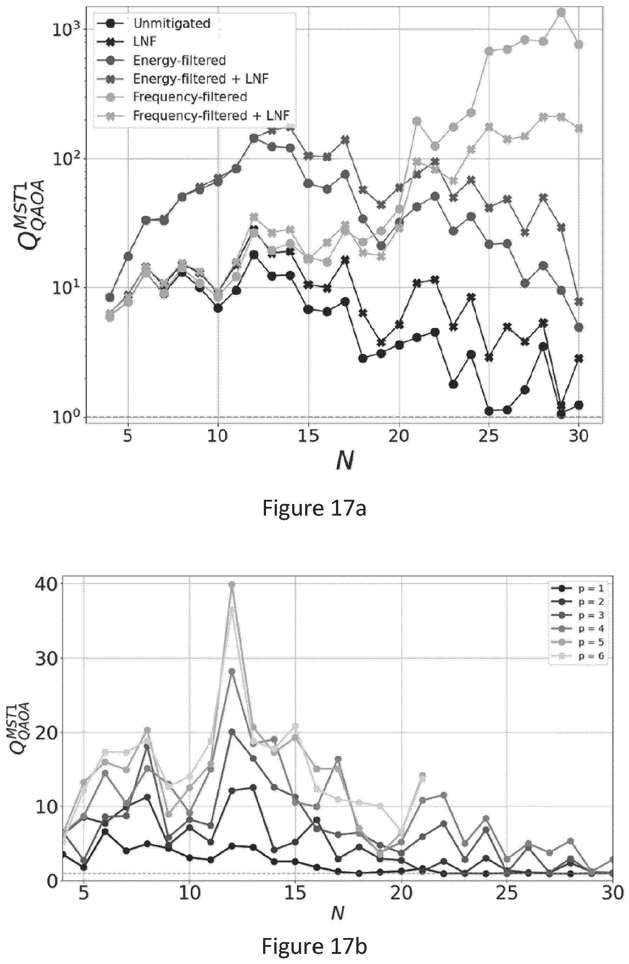

In FIGS 17a and 17b, a Q-factor plot is presented showing the speed-up in Tabu search convergence when using QAOA warm-starts over the PalubeckisMST1 algorithm which is initialised with random bit-strings. In (a) we show results for $p = 4$ and compare different error mitigation techniques, such as Least Norm Filter (LNF), energy-filtering the samples as well as frequency-filtering the samples. In (b) we plot the results for warm-starting with QAOA using $1 \leq p \leq 6$ total layers across all graphs, with the shaded regions indicating the minimum and maximum Q-factor achieved across 5 sets of hardware samples. Note that the data for $p = 5$ and $p = 6$ is incomplete due to compute limitations of the tree tensor network method in obtaining optimal angles.

In FIGs 17a and 17b the QAOA samples used in the plot are obtained for $p = 4$ layers with the variational parameters obtained via an efficient tree tensor network optimization. The FIGs showcase the effects of the LNF readout error mitigation, presented above, as well as the effects of the various bit-string filters. The LNF error mitigation consistently improves the speedup in most cases, barring the large-problem-size and frequency-filter data. We find that the frequency filter performs extraordinarily well, with the speedup over random samples increasing rapidly with increasing system size. We can attribute this increase to the fact that the pool of bit-strings gets smaller as the noise in the hardware samples increases, but also that the frequency filter picks out high quality bit-strings. This smaller pool of high-quality warm-starts leads to a higher likelihood of the classical algorithm converging faster to the optimal solution. This effect further explains the shift in speedup improvement from energy-filtered strings to frequency-filtered strings as the size of the problem increases: the energy filter is consistently picking a pool of 1000 bit-strings out of the 10000 samples obtained from the hardware, which get slightly less effective as the noise increases with problem size. On the other hand, the frequency filter leaves fewer and fewer samples to be used as warm-starts as the noise increases, but as these are high quality samples, the classical algorithm benefits from them more.

**Enhanced IBM topology graphs**

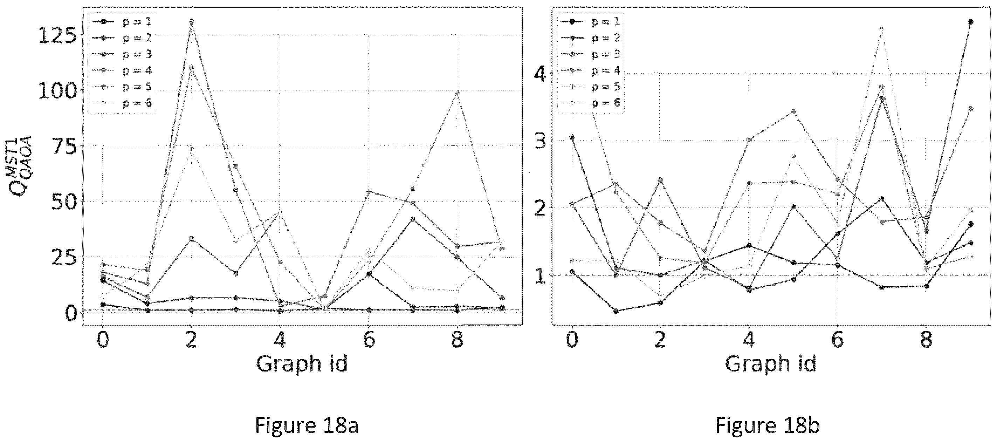

In addition to the IBM topology graphs, with unit weights on the edges, we also investigate Max- Cut instances of SWAP-enhanced graphs with the edge weights randomly sampled as follows: $w_{ij} E [-1,1]$. The SWAP-enhanced graphs are constructed as described below, with edges added in an efficient way which reduces the total two-qubit gate count. We investigate 20 graph instances: a set of 10 graphs with 24 vertices and 40 edges with the same topology and different randomly generated sets of weights $W_i$ on the edges $\{G_{24}(V,E, W_i)\}_{i=1,...10}$ and a set of 10 graphs with 41 vertices and 68 edges constructed in the same fashion: $\{G_{41}(V,E,W_j)\}_{j=1,...10}$. The insets in FIGs 18a and 18b show the graph topologies of the two types of graphs. In order to obtain the QAOA parameters for each of the graph instances, we use the angle prediction methods discussed above, owing to the large sizes of the graphs. We then implement the QAOA algorithm with predicted parameters on IBM's ibmq_torino 133 qubit platform and post-process the bitstrings using the LNF readout error mitigation filter as well as the various classical filtering techniques described above. We then run 1000 optimizations with tabu search using either PalubeckisMST1 initialised with random bitstrings or warm-started with the outputs of the QAOA algorithm.

FIGs 18a and 18b shows plots of the Q-factor (Eq. (14)) when comparing the use of QAOA warm-starts obtained from the IBM hardware with the hamming filter and LNF readout error mitigation applied versus random bit-strings (PalubeckisMST1). In (a) we plot the results for the 24 vertex graph with additional edges added via ZZ-SWAP interactions as described in the text while in (b) we plot results for the similarly enhanced 41-vertex graph (see insets for the graph topologies). The Q-factor is obtained from 1000 optimizations each initialised either with a QAOA warm-start or a random bitstring.

We find that the Q-factor is largest when using the hamming filter along with LNF readout error mitigation and we plot the results for this case in FIG. 18 for both graphs. Unsurprisingly, we find that the largest speedup of over 100 $\times$ is found for one of the smaller, 24 vertex graphs, as the effects of decoherence are much larger in the 41 vertex case. However, we still observe an almost 5-fold speedup for some of the larger graphs, even in the case where $p = 6$ QAOA layers are used, requiring over 1000 native two-qubit gates.

Furthermore, we find that the hamming filter generally leads to better approximation ratios of the graph instances near the end of the protocol. The approximation ratio for a graph instance at T iterations is defined as:

$$AR^* = \frac{C^{Max-Cut}(T)}{C_{Opt}^{Max-Cut}} \qquad (25)$$

where $C^{Max-Cut}(T)$ is the value of the Max-Cut cost function, here treated as a maximisation of the cut value, obtained by the optimizer after $T$ iterations and $C^{Max-Cut}_{Opt}$ is the true optimal value.

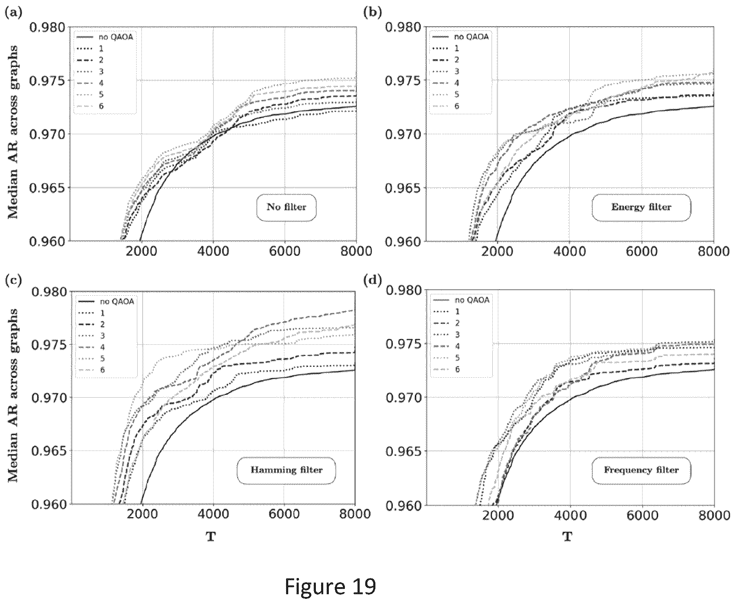

FIG. 19 shows a plot of the mean approximation ratio (Eq. (25)) across all enhanced IBM graphs of size 41 and across 1000 optimizations for a given number of iterations $T$ each using either QAOA or random initial bit-strings for the PalubeckisMST1 algorithm. The random initialisation results are plotted in black. We compare the cases with (a) just using the QAOA samples, (b) using samples with frequency filtering applied, (c) using samples with the hamming filter applied and (d) using only the 1000 lowest energy samples (out of 10000). We compare the outcomes for different post-processing filtering techniques and with the LNF readout error mitigation applied. We find that in the case of the hamming filter, QAOA warm-starts lead to a better final approximation ratio across $T$ in all cases except for $p = 1$ QAOA layers.

Finally, in order to compare our method to other heuristc algorithms as well as state-of-the art solvers like CPLEX [62], we run a modified version of the $Q$-factor experiments, where instead of running a single local search with a given warm-start for a single optimization instance, we use the warm-starts as a resource pool and run the local search algorithms several times during one optimization, re-starting from a different warm-start every time. This means that the algorithm terminates not after a set number of iterations, but after some time limit, which in our case we set to 0.5 seconds. We begin timing the algorithm after we generate the set of resource warm-start and random bit-strings and then compute the expected runtime of Eq. (13) using time in seconds instead of iterations $T$ as the variable.

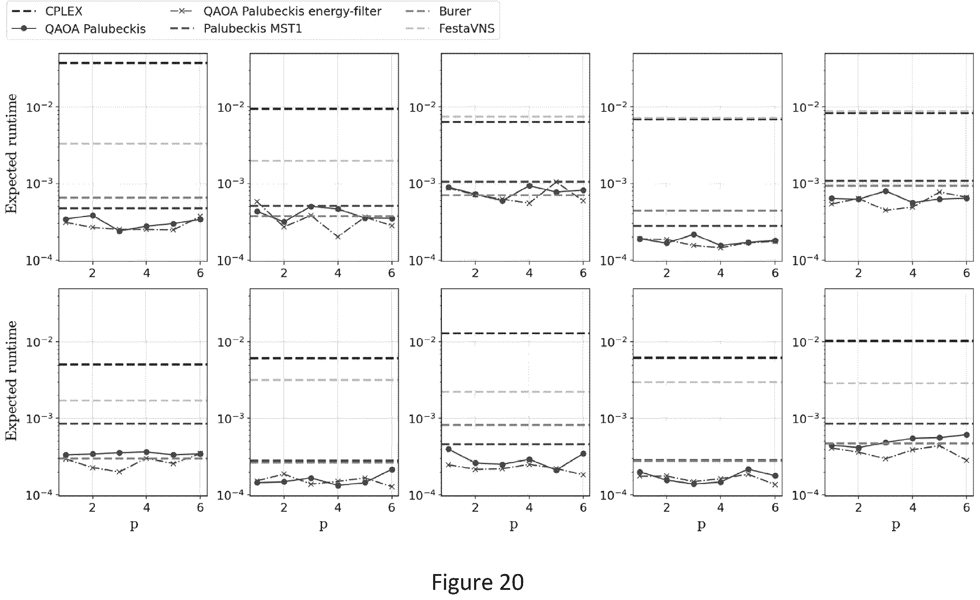

In FIG. 20, we plot the results for all of the 10 large graphs with 41 vertices, comparing the expected runtimes of several of the best heuristics described in [15] as well as CPLEX [62] to the QAOA warm-started version of PalubeckisMT1. Each plot corresponds to a graph instance of size 41. The QAOA bit-strings used for the experiments are post-processed with the energy filter. The horizontal dashed lines correspond to the expected runtimes (Eq. (13)) of each of the optimization algorithms without any modifications from their original implementation, while the circle and cross plots correspond to expected runtimes when initialising Palubeckis with QAOA samples obtained from a run with p QAOA layers (without and with energy filtering, respectively).

Note that these plots are comparing expected runtimes without the time required to generate/obtain the resource bit-strings for each case.

We compare the expected runtime across 500 optimizations of the warm-started PalubeckisMST1 algorithm with energy-filtered QAOA samples with some of the best-performing classical heuristics from [15] like Burer [12], FestaVNS [14] and PalubeckisMST1 as well as with the runtime of the state-of-the-art branch-and-bound based solver Gurobi. We find that the QAOA warm-started **abu** search converges faster for some graph instances than any of the classical methods, although the caveat is that this runtime comparison does not include the time taken to generate the warm-starts or random samples in either case, meaning it is not a fair final comparison. However, this existing speed-up lends credence to the idea that for larger and harder problem instances, there is a quantum advantage using our method, as the QAOA runtime for only a few layers is expected to grow far more slowly than the runtime of any classical method for increasing problem size.

**Further results**

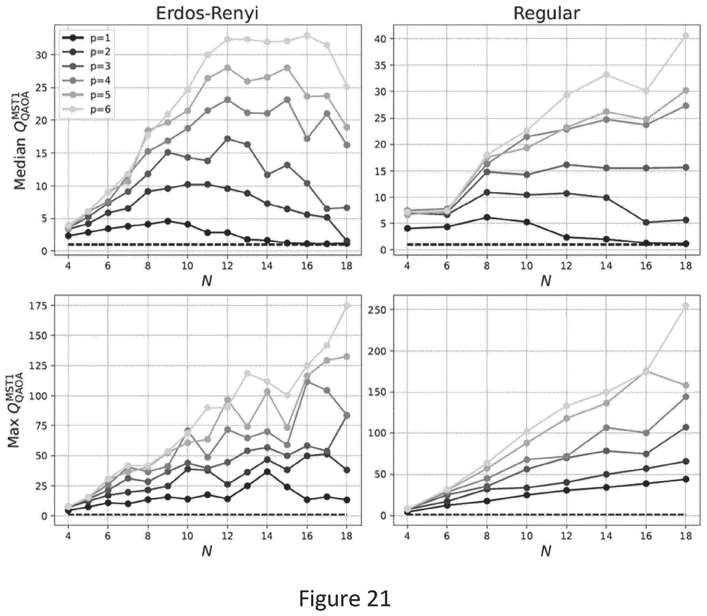

Additional results are now presented to supplement the comments above. These are made with general reference to FIGs 21 to 33, which show:

FIG. 21: The Q-factor from warm-starting the PalubeckisMST1 algorithm implemented in MQLib [15] for unweighted MaxCut with samples obtained using classical emulation of the QAOA algorithm for randomly generated Erdös-Rényi graphs (left) and regular graphs (right). Each point averages over 10 graphs for every edge probability between 0.1 and 0.9 for Erdös-Rényi graphs and every average degree between 1 and $N - 2$ for random regular graphs. We plot the average Q-factor (top) and the maximum Q-factor over any graph of a given size (bottom). We see a speedup of up to a factor of 175 for Erdös- Rényi graphs and 250 for random regular graphs, and on average a factor of 40 and 60 respectively, when using 6 layers of QAOA. On a perfect quantum computer, we see that we get a larger Q-factor when we increase both system size up to $N = 18$ and number of layers of QAOA up to $p = 6$.

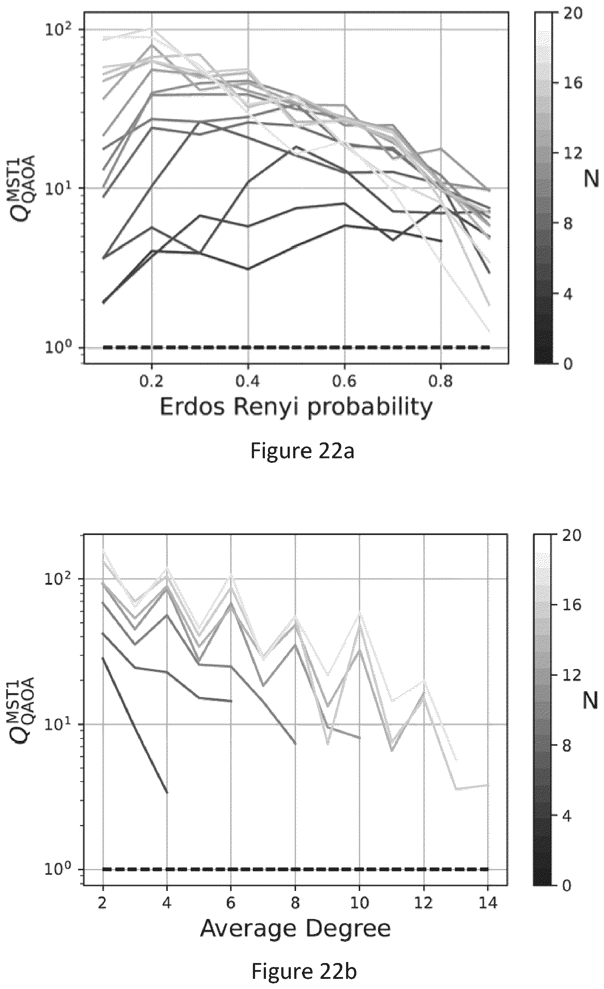

FIGs 22a and 22b show the $Q$-factor from warm-starting the PalubeckisMST1 algorithm using $p = 6$ QAOA with the same set of Erdös-Rényi graphs (FIG. 22a) and regular graphs (FIG. 22b) as FIG. 21, as a function of the density of the graph. In general, the denser the graph is the smaller the speedup that is obtained, indicating either QAOA performs worse or classical solvers perform better with denser graphs. For small problem sizes, we initially see the $Q$-factor increase as the density increases, which is likely because the classical solvers can very rapidly solve the problem for small, sparse graphs. Even degree random regular graphs also appear to perform better than odd degree graphs across all instance sizes.

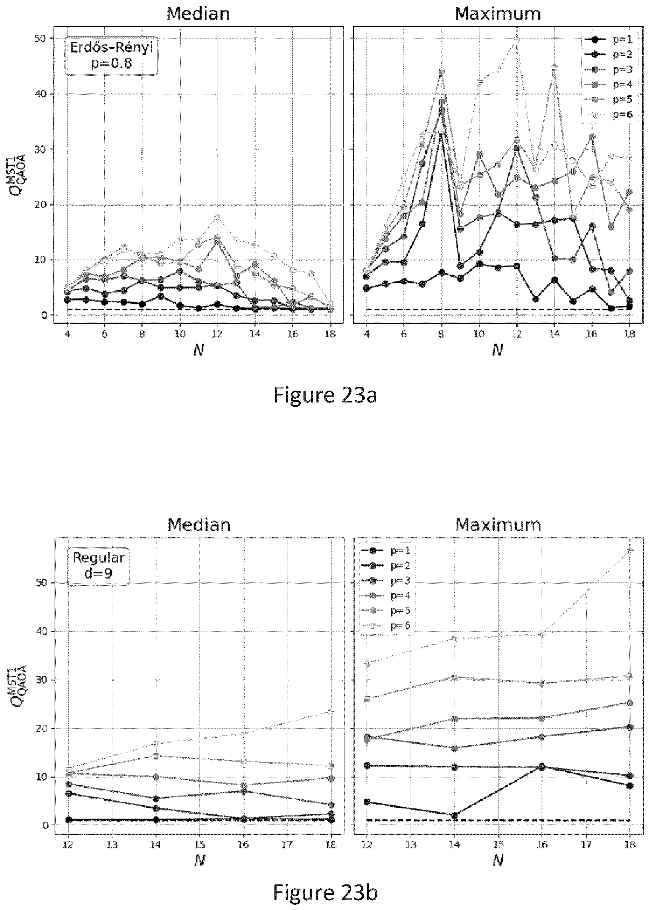

FIGs 23a and 23b show the $Q$-factor from warm-starting the the PalubeckisMST1 algorithm implemented in MQLib [15] for unweighted MaxCut with samples obtained using classical emulation of the QAOA algorithm using the 'balanced' approach for predicting angles for 10 randomly generated Erdös-Rényi graphs for edge probability $p = 0.8$ (FIG. 23a) and 10 regular graphs with degree $d = 9$ (FIG. 23b). These are denser problem instances compared to FIGs 13a and 13b, and we see a much worse performance only achieving a median $Q$-factor of around 20. The scaling with $N$ is less evident in this case, where as the problem size grows we no longer see a consistent increase the $Q$-factor. The maximum $Q$-factor is also quite chaotic, indicating a high dependence on the exact problem instance and weights for the $Q$-factor in these denser graphs.

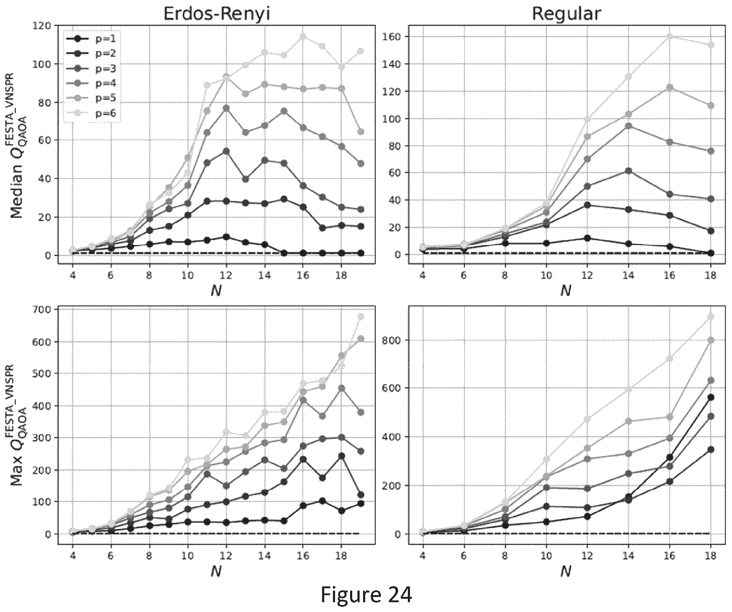

FIG. 24 shows the $Q$-factor from warm-starting the the FESTA2002VNSPR algorithm implemented in MQLib [15] for unweighted MaxCut with samples obtained using classical emulation of the QAOA algorithm using the 'balanced' approach for predicting angles for randomly generated Erdös-Rényi graphs (left) and regular graphs (right). Each point averages over 10 graphs for every edge probability between 0.1 and 0.9 for Erdös-Rényi graphs and every average degree between 1 and $N$ - 2 for random regular graphs. We plot the average $Q$-factor (top) and the maximum $Q$-factor over any graph of a given size (bottom). We see a similar qualitative behaviour to FIG. 21, with increasing $Q$-factor as $N$ increases and the number of layers p increases. There are larger $Q$-factors for FESTA2002VNSPR compared to PalubeckisMST1, which may be because FESTA2002VNSPR performs more iterations in general. The regular graphs also perform better than the Erdös-Rényi graphs, where we see a median $Q$-factor of up to 160 and maximum $Q$-factor of up to 900.

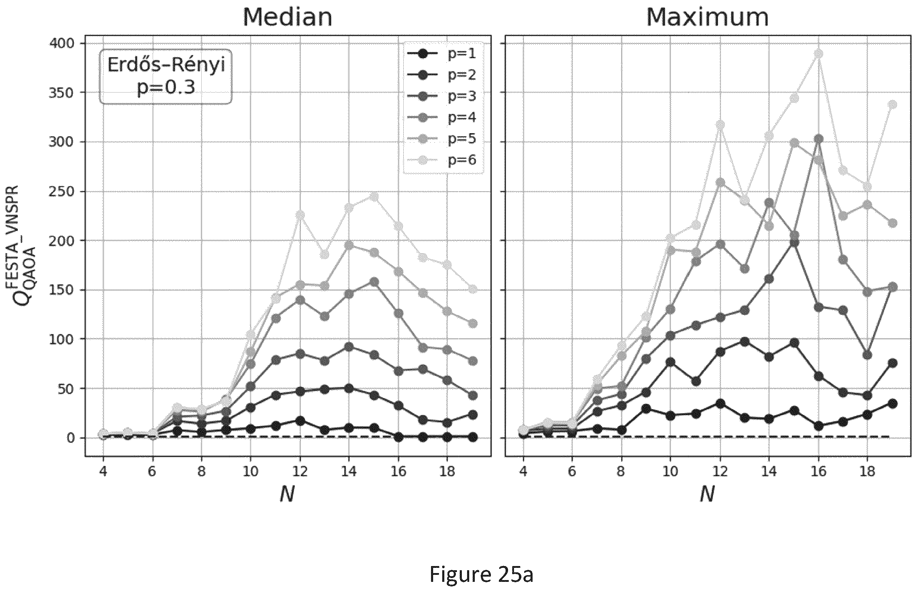

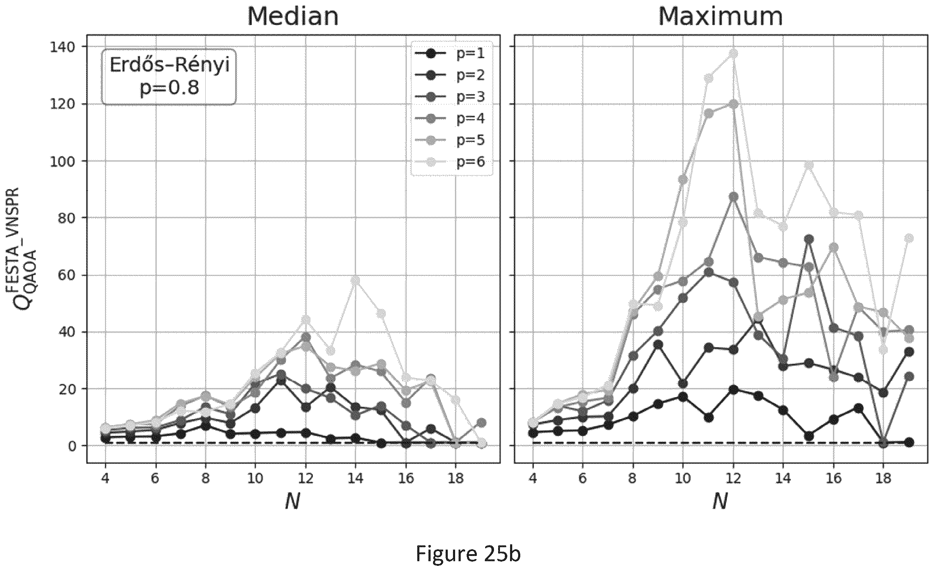

FIGs 25a and 25b show the $Q$-factor from warm-starting the the FESTA2002VNSPR algorithm implemented in MQLib [15] for unweighted MaxCut with samples obtained using classical emulation of the QAOA algorithm using the 'balanced' approach for predicting angles for 10 randomly generated Erdös-Rényi graphs with edge probability $p = 0.3$ (FIG. 25a) and 10 graphs with $p = 0.8$ (FIG. 25b). We see a much better performance in both the average and maximum cases for less dense graphs, where for $p = 6$ layers we can achieve median $Q$-factors of up to 250 for graphs with $p = 3$, whereas only up to 60 for graphs with $p = 0.8$. There is also a larger gap between the median and maximum $Q$-factors in the denser graphs, indicating the performance is more dependent on the problem instance and weights in these cases.

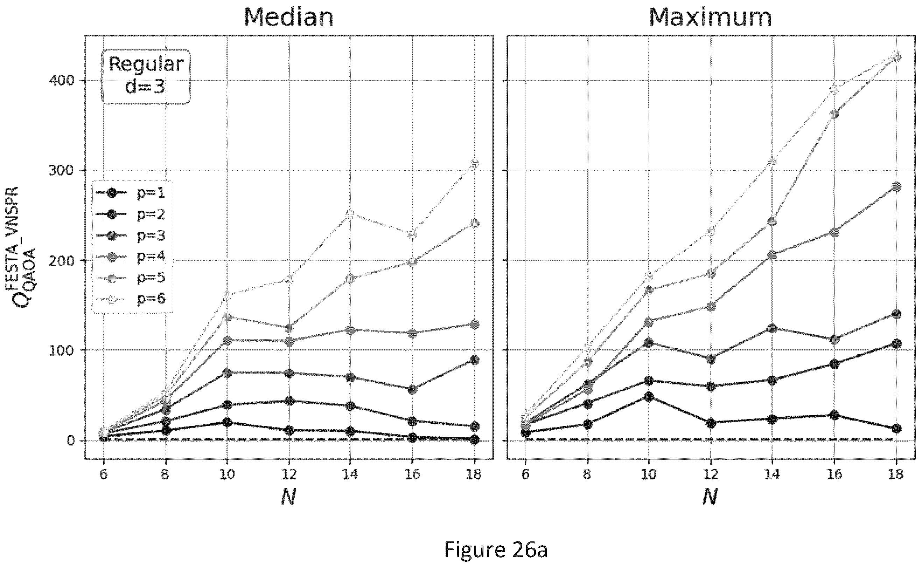

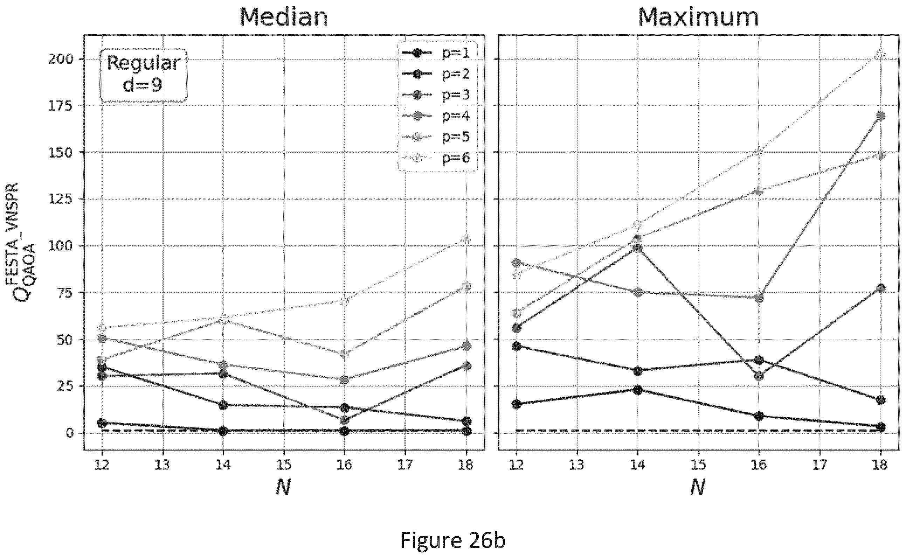

FIGs 26a and 26b show the $Q$-factor from warm-starting the the FESTA2002VNSPR algorithm implemented in MQLib [15] for unweighted MaxCut with samples obtained using classical emulation of the QAOA algorithm using the 'balanced' approach for predicting angles for 10 randomly generated random regular graphs with degree $d = 3$ (FIG. 26a) and 10 graphs with degree $d = 9$ (FIG. 26b). As in FIGs 25a and 25b, we see a much better performance in both the average and maximum cases for less dense graphs, where for $p = 6$ layers we can achieve median $Q$-factors of over 300 for graphs with $d = 3$, whereas just over to 100 for graphs with $d = 9$. The increase in $Q$-factor as the problem size increases is also higher for less dense graphs, indicating the warm-start is helping more for these instances.

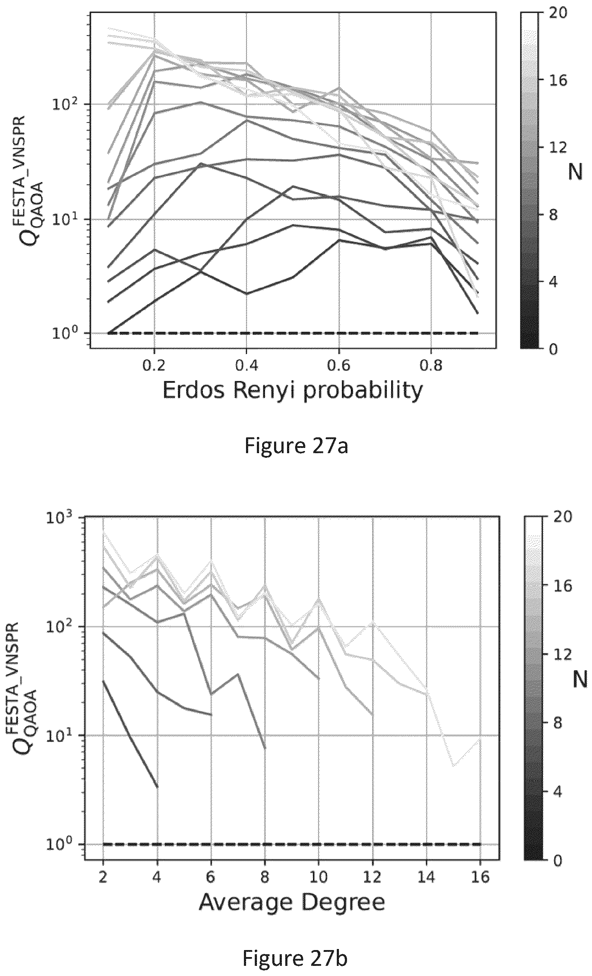

FIGs 27a and 27b shows the $Q$-factor from warm-starting the the FESTA2002VNSPR algorithm using classically emulated $p = 6$ QAOA with the same set of Erdös-Rényi graphs (FIG. 27a) and regular graphs (FIG. 27b) as FIG. 24, as a function of the density of the graph indicated by the probability of an edge and the average degree respectively. We see a very similar to behaviour to that of FIGs 22a and 22b, where as the graph gets more dense, the $Q$-factor decreases.

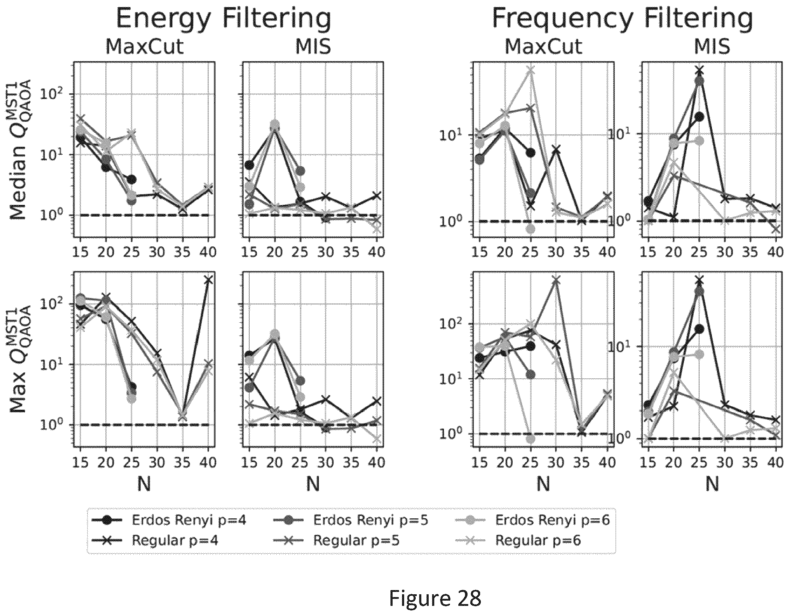

FIG. 28 shows the $Q$-factor from warm-starting the the PalubeckisMST1 algorithm implemented in MQLib [15] with samples obtained from running the QAOA algorithm with predicted parameters using the 'balanced' approach on the IBM ibm_torino chip, for MaxCut and MIS on randomly generated Erdös-Rényi graphs and regular graphs. Each point averages over graphs with edge probabilities between 0.1 and 0.4 for Erdös-Rényi graphs and average degrees between 2 and 5 for random regular graphs. We plot the median $Q$-factor (top) and the maximum $Q$-factor (bottom) for the graphs with a given number of vertices. We see a speedup of up to a factor of 600 using frequency filtering on a problem on $N = 30$ nodes and can still achieve a $Q$-factor of over 200 for a problem on $N = 40$ nodes. However, noise is starting to remove any speedup for larger graphs in the average case, and $p = 4$ starts to outperform $p = 5$ or $p = 6$ due to the lower circuit depth.

**Further Emulation Results**

We evaluated the performance of the quantum enhanced optimization algorithm on a large set of randomly generated unweighted graphs. We explored both randomly generated Erdös-Rényi graphs with edge probabilities between 0.1 and 0.9 and random regular graphs with average degrees between 1 and $N$ - 2 where $4 \leq N \leq 19$ is the number of nodes in the problem graph. For each parameter and graph size N we generate 10 random graphs. We use the 'balanced' approach to predict the QAOA parameters. We obtain 1000 samples from the classical emulator, and use these as a warm-start to either the PalubeckisMST1 or the FESTA2002VNSPR heuristics implemented in MQLib [15]. We chose these as they were some of the highest performing heuristics in MQLib (Table 1 in [15]) that use a random initial bitstring to start a local search, and so are amenable to a warm-start. Finally we estimate the speedup in FIG. 21 using the Q-factor from Eq. (14).

**PalubeckisMST1**

Averaging over all graphs of a given size, for the PalubeckisMST1 algorithm [13] we see a speedup of up to a factor of 35 on Erdös-Rényi graphs and up to 40 on random regular graphs in FIG. 21. When looking at the problem instance that provides the largest speedup, we can achieve a Q-factor of over 250 for a random regular graph with 18 vertices. We see a better performance with the random regular graphs as the balanced approach for predicting angles is based on graphs of constant degree. There is also a positive scaling as we increase both the number of vertices in the problem graph and increase the number of layers of QAOA. For small number of layers p, we begin to see a decrease in performance as N increases, especially for Erdös-Rényi graphs, likely because the ansatz is not expressive enough and so is not returning useful bitstrings to use as a warm-start.

The density of the graph in the problem instance is set by the edge probability for Erdös-Rényi graphs and degrees for random regular graphs. In FIGs 22a and 22b for $p = 6$ QAOA layers we see that as the density increases, the Q-factor decreases on average for both sets of problems. We also see this in FIGs 23a and 23b, where compared to FIGs 13a and 13b the performance is much worse and no longer significantly increases as the problem size increases. This could be due to a variety of reasons: the angle prediction methods may not perform as well for denser graphs, the quantum algorithm may require more layers to provide similar quality samples, or the classical heuristic may not benefit as much from a warm-start. The Q-factor is also much more chaotic for denser graphs, shown by the larger difference between the median and maximum Q-factors in FIGs

23a and 23b, indicating the performance is highly dependent on the structure of the problem graph or the weights of the problem instance. For small Erdös-Rényi graphs, there is a slight increase in performance as the density increases, which may be because small sparse problems are too easy for the classical heuristic to solve, and so warm-starting does not provide much benefit.

### FESTA2002VNSPR

As well as using our method on the PalubeckisMST1 algorithm [13] shown above , we also warm-started the FESTA2002VNSPR algorithm [63] implemented in MQLib [15]. These are built from a base local search algorithm, with the enhancements of variable neighbourhood search (VNS) and path relinking (PR) which are metaheuristics that aim to improve the bitstrings that are found in the local search. We used the same set of graphs and parameters as those for PalubeckisMST1, and compute the Q-factor $Q_{QAOA}^{FESTAV\ NSPR}$ . In FIG. 24 we see a greater speedup as we increase the number of vertices and the number of QAOA layers, similar to the results in FIG. 21. The quantitative values of the Q-factor are higher for FESTA2002VNSPR compared to PalubeckisMST1, which may be because the former uses a higher number but shorter iterations, so a warm start will cause the number of iterations to decrease more. Further experiments will need to be performed to determine the effect on the actual runtime of the algorithms as opposed to the number of iterations. We see a very similar picture for how the density of the graph affects the Q-factor in FIGs 25a to 27b. Again the denser the graph is, the smaller and more varied speedup we see over the problem instances.

### Further Hardware Results

We also ran our algorithm on random instances of MaxCut and MIS on Erdös-Rényi graphs and regular graphs on between 15 and 40 nodes, with edge weights uniformly picked in [1,-1] on IBM hardware using the ibm_torino chip. The edge probabilities range from 0.1 to 0.4, and the degrees range from 2 to 5. We use between 1 and 6 QAOA layers, stopping for transpiled circuits that would have a single and 2-qubit circuit depth above 1000, and the QAOA angles were predicted using the 'balanced' method. The problem graphs were mapped onto the hardware topology by using the quadratic assignment reduction for the initial qubit mapping and the A* routing method for the swap network construction. For each problem instance, we took 10,000 shots on the hardware and used the energy filtering and frequency filtering methods to extract the best bitstrings to use as a warm-start to the PalubeckisMST1 heuristic. In FIG. 28, we see the Q-factor obtained for these problem instances for $p = 4, 5, 6$; the speedup for $p < 4$ was much smaller as the ansatz is not expressive enough for these larger graphs. There is no data for the Erdös-Rényi graphs on problems with more than 30 nodes as the circuits were deeper than 1000 gates. In general, the MaxCut problems performed better than the MIS problems, achieving a Q-factor of over 100 in some cases. As the problem sizes get larger, we see noise from the device starting to take over as the circuit depth increases and we *see* $p = 4$ outperforming $p = 5$ and $p = 6$ in the average case for $N = 40$ instances. The frequency filter appears to outperform the energy filter above N = 20 nodes in the problem, and in the best instances can achieve a Q-factor of nearly 600 on a 30 vertex graph. We see that the performance of the quantum enhanced optimization algorithm highly depends on the problem instance and also the samples we get from the device, where the best instances can have a Q-factor 1 or even 2 orders of magnitude higher than the median case.

### Procedures for Calculating and Implementing the Innovation

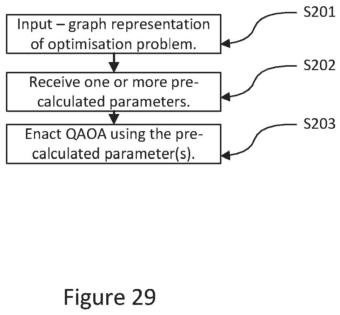

FIGs 29 to 31 illustrate some of the procedures for identifying and using the parameters, and for mapping the problem onto a quantum computer.

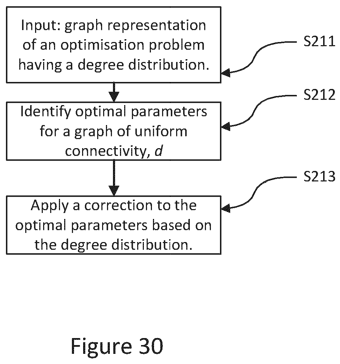

FIG. 29 shows a flow chart illustrating a use of the parameters calculated in accordance with the methods discussed herein (e.g. as set out above and in FIG. 30).

The method starts at step S201, where a problem is received in a graph representation This may be a MIS problem, a Max-Cut problem, a QUBO problem and so on.

Next, at step S202 one or more pre-calculated parameters, such as $\gamma$, $\beta$ are received. Different parameters may be received for each layer of QAOA to be implemented.

Finally at step S203, the received parameters are used in the execution of a QAOA. As described in detail above, the improved parameters lead to a genuine improvement in the reliability and efficiency of the QAOA process.

FIG. 30 illustrates an example of how to identify the parameters for use in QAOA. At step 211, the method starts by receiving an optimisation problem in graph representation. This has various parameters encoding features about the graph problem, for example the degree distribution. Next, at step S212 optimal parameters are identified for at least one graph of connectivity $d$. This is usually a graph where a simplification has been made, such as d-regularity, tree graph, complete graph, etc. The identification of the optimal parameters may be by consulting a pre-calculated parameter list, or by calculating the parameters in the manners discussed elsewhere. In any even the degree of the idealised graph will be related to the degree distribution of the problem graph (e.g. any connectivity for which a nonzero number of nodes have that connectivity may be used, the average connectivity, a weighted average connectivity, etc.).

Finally at step S213, a correction is made to the derived values, based on the degree distribution. The procedure for this is discussed in detail above, but in general, the procedure allows for the nuance encapsulated in the specific degree distribution to be captured in the correction applied to the parameters.

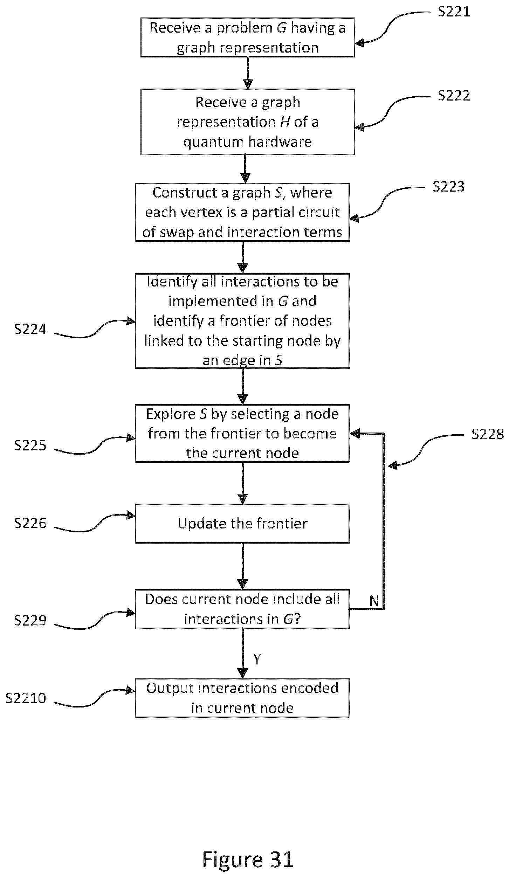

Turning now to FIG. 31, a method for encoding a graph representation problem onto a quantum hardware (also having a graph representation in terms of the qubits and their connectivity) is shown. The method starts at step S221, in which a graph representation problem $G$ is received in which vertices represent logical entities and edges represent logical interactions therebetween.

Next at step S222, a graph representation $H$ of the quantum hardware is received in which vertices represent a physical layout of qubits and edges represent connections between qubits.

At step S223 a graph $S(V,E)$ is constructed comprising a starting vertex $s$ representing each logical entity in $G$ mapped to a physical qubit in $H$. Each vertex $v \in V$ other than $s$ is a different partial circuit $C_i$ comprising one or more gates selected from: a swap interaction corresponding to a valid edge in $H$; and/or an interaction term representing a logical edge in $G$. Note that s is a special case of partial circuits representing no swap terms and optionally no interaction terms either, just a mapping between logical entities and physical qubits.

In the graph $S$ note that each edge, $E$, in $S$ joins pairs of partial circuits $(C_i, C_j)$ where $C_j$ includes the full ordered set of operations in $C_i$, followed by a set of disjoint swaps in H followed by one or more interaction terms from $G$.

Next at step S224, an identification is made of: a list of interactions, $L$, comprising every interaction term in $G$ and a frontier of vertices $\{n'\}$ (also called nodes) in $S$ wherein each vertex $n'$ is joined to $s$ by an edge $E$ in $S$.

Next at step S225, the graph $S$ is explored, by setting the starting vertex $s$ as a current vertex $n$, and selecting a vertex from the frontier of vertices $\{n'\}$ and setting that vertex as the current vertex $n$.

At step S226, the set of frontier vertices $\{n'\}$ is updated, for example by:

(a) removing the current vertex $n$ from the set $\{n'\}$; and

(b) adding all vertices joined to $n$ by an edge $E$ in $S$ to the set $\{n'\}$.

At step S229 the method considers whether the current node includes each interaction in $G$. If not, then step S228 is enacted and the method returns to step S225, starting from the current node and moving to a new node.

Alternatively, if he answer is yes, the current node does include each interaction in $G$, then the method terminates by outputting the circuit represented by the current node as a valid mapping, in that each interaction in $G$ is guaranteeably implementable with respect to the quantum hardware connectivity.

**Discussion of results**

The above demonstrations establish a framework for leveraging QAOA-generated samples to accelerate classical optimization. Our method demonstrates that even in the NISQ era, where quantum devices are constrained by noise and limited qubit connectivity, a quantum-assisted strategy can provide measurable performance benefits. Through a combination of novel parameter-setting techniques, hardware-aware circuit optimization and error-mitigation strategies, we have systematically improved the integration of QAOA within classical optimization pipelines. We demonstrated the effectiveness of our scheme both in emulation and by running on real noisy quantum hardware, showing that we can expect a speedup in the convergence time of classical heuristics even when using samples from deep circuits with over 1000 two-qubit gates.

Our experiments highlight several key findings. First: the introduction of quantum warm-starts significantly improves the performance of classical heuristics like **Tabu** Search in instances where classical optimization algorithms rely on random initializations. The speedup, as measured by the $Q$-factor, reaches values exceeding 1000 $\times$ in certain

cases, with performance gains persisting across different problem sizes. Second: despite the hardware constraints, we demonstrated that customized qubit mapping and routing strategies (e.g., A* heuristic and greedy approaches) reduce circuit depth, making QAOA implementations more feasible. Our SWAP-optimized graph encoding allowed us to extend the reach of QAOA on real quantum processors while maintaining low error rates. Third: the proposed parameter heuristics offer a scalable alternative to classical variational optimization, providing near-optimal QAOA parameters without computationally expensive training. The validity of these parameter-setting techniques was supported through their consistent performance across both Max-Cut and MIS instances. And finally, by integrating readout-error mitigation (LNF filter) and classical bit-string filtering techniques (energy-filtering, frequency-filtering, and Hamming filtering), we substantially improved the quality of QAOA samples with simple and very efficient classical post-processing techniques.

Several points should be made in the light of this. The first concerns itself with problem size: our study focused on problem sizes up to 41 qubits on IBM hardware. Nevertheless, the approaches are clearly applicable to larger-scale instances. Additionally, the approaches are applicable to denser and more complex combinatorial problems (e.g., industrial scheduling problems, protein folding, or financial portfolio optimization).

Secondly, our results indicate a substantial improvement over randomly initialized heuristics.

Finally, our results suggest that as hardware fidelity and qubit count increase, quantum-enhanced optimization could become increasingly viable. As gate errors decrease and coherence times improve, higher-depth QAOA circuits ($p > 6$) may become practical, potentially leading to an even more pronounced quantum speedup. Furthermore, larger problem instances will become accessible as higher-depth circuits will not suffer from as much decoherence. As hardware improves, the viability of quantum advantage using our scheme will improve with it.

To conclude, our results provide compelling evidence that even with today's noisy quantum processors, QAOA-generated samples can accelerate classical optimization. By leveraging structured quantum sampling, problem-aware circuit optimizations, and efficient parameter-setting techniques, we achieve significant speedups over traditional heuristics. This suggests that hybrid quantum-classical approaches can provide practical benefits long before fully fault-tolerant quantum computers become available.

With further improvements in quantum hardware and more sophisticated hybrid strategies, we anticipate that quantum-enhanced optimization will become an essential tool for tackling largescale combinatorial problems in various industries, from logistics and finance to power grid optimization.

**Claims**

1. A method for improving the efficiency of solving optimisation problems, the method comprising:

   (1) selecting an optimisation problem from a set of optimisation problems;
   (2) selecting a known algorithm for solving the selected optimisation problem from a list of known algorithms, where each known algorithm in the list is seeded with a starting input and iteratively converges toward an improved solution;
   (3) mapping the optimisation problem onto qubits of a quantum computer;
   (4) performing, using the quantum computer, operations to derive an approximate solution to the optimisation problem;
   (5) seeding the known algorithm using the approximate solution as the input and running the selected known algorithm to arrive at an improved solution.

2. The method of claim 1, wherein the set of known algorithms includes:

   local search algorithms;
   genetic algorithms; and/or
   simulated annealing.

3. The method of claim 1 or claim 2, wherein the operations performed on the quantum computer to derive an approximate solution include using the quantum approximate optimisation algorithm, QAOA.

4. The method of claim 3, wherein using the QAOA includes identifying parameters ($\beta, \gamma$) for use in the Quantum Approximate Optimisation Algorithm, QAOA, the method further comprising:

   receiving the optimisation problem to which QAOA is to be applied in a graph representation, the graph representation having a degree distribution representing the proportion of nodes $f_d$ having connectivity $d$ in the graph representation, where $d$ ranges from 1 to $d_{max}$;

identifying an optimal set of parameters ($\beta^{opt}[d], \gamma^{opt}[d]$) for graphs having uniform connectivity $d$ for one or more values of $d$ based on the degree distribution; and

applying a correction to the identified simplified optimal parameters, based at least in part on the degree distribution of the graph representation, to provide the output QAOA parameters ($\beta, \gamma$).

**5.** The method of claim 3 or claim 4, wherein the QAOA is applied to a Maximum Independent Set, MIS, optimisation problem, the method further comprising:

receiving a MIS problem;

receiving one or more values for a QAOA parameter y, the value(s) being derived by fitting a function to optimum values, $\gamma^*$, calculated for graphs of different average connectedness, $\langle d \rangle$; and

performing QAOA on the MIS problem, using the optimal $\gamma$ parameter(s).

**6.** The method of any one of the preceding claims, further comprising:

prior to the mapping step, splitting the optimisation problem into two or more sub-problems;

during the performing stage, solving each sub-problem using the quantum computer to derive approximate sub-solutions to each sub-problem and assembling each approximate sub-solution together to provide the approximate solution to the optimisation problem.

**7.** The method of any one of the preceding claims, wherein mapping the optimisation problem onto qubits of the quantum computer includes:

identifying fundamental entities of the optimisation problem; and

encoding information characterising each fundamental entity on a respective qubit of the quantum computer; optionally wherein the optimisation problem is a graph theory problem and the fundamental entities are vertices in a graph.

**8.** The method of claim 7, wherein a mapping between fundamental entities and their respective qubits is based on the connectivity between the fundamental entities and the connectivity of qubits in the quantum computer.

**9.** The method of any one of the preceding claims, wherein the performing step includes:

(a) identifying a set of quantum operations, $T$, to be performed between a plurality of qubits;

(b) identifying a graph distance, $d(T)$, between the qubits on the quantum hardware across which each of the quantum operations in the set are to be performed;

(c) identifying a subset of the quantum operations for which the graph distance between each of the qubits corresponding to that quantum operation is 1, implementing those quantum operations, and removing each such operation from the set of quantum operations;

(d) performing one or more swap operations; and

(e) repeating steps (b) to (d) until all quantum operations in the set have been implemented.

**10.** The method of claim 9, wherein step (d) includes:

(i) identifying all possible pairwise qubit swap operations;

(ii) for each possible pairwise qubit swap operation, computing a total graph distance D for all quantum operations in the set having implemented that pairwise qubit swap operation;

(iii) where a possible pairwise qubit swap operation reduces $D$, implementing a pairwise qubit swap operation which causes the greatest reduction in $D$; and

(iv) where no possible pairwise qubit swap operation reduces $D$, implementing a pairwise qubit swap operation which reduces a smallest graph distance d between a pair of qubits on the quantum hardware between which the quantum operations in the set are to be performed; optionally wherein D is calculated as:

$$D = \sum_{T} d(T)^q$$

wherein $q$ is a parameter selected to implement the optimisation problem, optionally wherein $q = 1$.

**11.** The method of any one of the preceding claims, wherein prior to step (3), an efficient mapping is identified by:

receiving the QAOA problem as a graph representation $G$ with vertices representing logical entities and edges representing logical interactions therebetween;

receiving a quantum hardware graph, $H$, with vertices representing a physical layout of qubits and edges representing connections between qubits;

constructing a graph $S(V, E)$ comprising a starting vertex $s$ representing each logical entity in $G$ mapped to a physical qubit in $H$; wherein:

each vertex $v \in V$ other than s is a different partial circuit $C_i$ comprising one or more gates selected from:

a swap interaction corresponding to a valid edge in $H$; and/or
an interaction term representing a logical edge in $G$; and wherein

each edge, $E$, in $S$ joins pairs of partial circuits $(C_i, C_j)$ where $C_j$ includes the full ordered set of operations in $C_i$, followed by a set of disjoint swaps in $H$ followed by one or more interaction terms from $G$;

identifying a list of interactions, $L$, comprising every interaction term in $G$;

initialising a set of frontier vertices {n'}, wherein each vertex $n'$ is joined to $s$ by an edge $E$ in $S$;

setting the starting vertex $s$ as a current vertex $n$, and exploring the graph $S$ by:

(i) selecting a vertex from the frontier of vertices {n'} and setting that vertex as the current vertex $n$;
(ii) updating the set of frontier vertices {n'} by:

(a) removing the current vertex $n$ from the set {n'}; and
(b) adding all vertices joined to $n$ by an edge $E$ in $S$ to the set {n'};

(iii) comparing the set of interactions from $G$ which are present in the partial circuit corresponding to the current vertex, $n$, with $L$; and, based on the comparison:

(a) in the event that there are interactions in the list $L$ which are not present in the set of interactions from $G$ which are present in the partial circuit corresponding to the current vertex, $n$, repeating steps (i) to (iii) from the current vertex, $n$; or
(b) in the event that every interaction in the list $L$ is present in the set of interactions from $G$ which are present in the partial circuit corresponding to the current vertex, $n$, ending the exploration of the graph, and outputting the partial circuits of the present vertex, $n$.

**12.** The method of any one of the preceding claims, wherein, having executed the method a first time, step (4) is repeated one or more additional times for the same optimisation problem and known algorithm to provide a plurality of approximate solutions forming a statistical sampling of a solution space for use in seeding the known algorithm; optionally wherein approximate solutions having a probability lower than a threshold value are discarded from the plurality of approximate solutions prior to use in seeding the known algorithm; optionally wherein the threshold is set as a fraction of the highest probability found in the statistical sampling, optionally wherein the fraction is 1/10; optionally wherein each of the plurality of approximate solutions is used to seed the known algorithm during further executions of step (5).

**13.** An apparatus for improving the efficiency of solutions to optimisation problems, the apparatus comprising:
a quantum computer, communicatively coupled to a classical computer, the apparatus configured to:

(1) receive an input at the classical computer, the input selecting an optimisation problem from a set of optimisation problems;
(2) receive, at the classical computer, a selection of a known algorithm for solving the selected optimisation problem from a list of known algorithms, where each known algorithm in the list is seeded with a starting input and iteratively converges toward an improved solution;
(3) map, using the classical computer, the optimisation problem onto qubits of the quantum computer;
(4) perform, using the quantum computer, operations to derive an approximate solution to the optimisation problem;
(5) extracting the approximate solution from the quantum computer and seeding, using the classical computer, the known algorithm using the approximate solution as the input and running the selected known algorithm to arrive at an improved solution.

14. The apparatus according to claim 13, further configured to enact the method steps of any of claims 2 to 12.

15. A non-transient computer readable medium comprising instructions which cause a computer to enact the method steps of any one of claims 1 to 12.

100

Select an optimisation problem from a set of optimisation problems.

110

Select a known algorithm for solving the selected optimisation problem from a list of known algorithms, where each known algorithm in the list is seeded with a starting input and iteratively converges toward an improved solution.

120

Map the optimisation problem onto qubits of a quantum computer.

130

Perform, using the quantum computer, operations to derive an approximate solution to the optimisation problem.

140

Seed the known algorithm using the approximate solution as the input and running the selected known algorithm to arrive at an improved solution.

150

FIG. 1

FIG. 2

FIG. 3

FIG. 4

FIG. 5

FIG. 6

FIG. 7

FIG. 8

EP 4 703 977 A1

FIG. 9

Figure 10a

Figure 10b

Figure 11

EP 4 703 977 A1

Figure 12

Figure 13a

Figure 13b

Figure 14

## Grid Connectivity

Figure 15a

## Heavy-hex Connectivity

Figure 15b

## Greedy routing

Figure 16a

## A* routing

Figure 16b

Figure 17a

Figure 17b

Figure 18a

Figure 18b

EP 4 703 977 A1

Figure 19

Figure 20

Figure 21

Figure 22a

Figure 22b

Figure 23a

Figure 23b

Figure 24

Figure 25a

Figure 25b

Figure 26a

Figure 26b

EP 4 703 977 A1

Figure 27a

Figure 27b

Figure 28

Input – graph representation of optimisation problem. — S201

Receive one or more pre-calculated parameters. — S202

Enact QAOA using the pre-calculated parameter(s). — S203

Figure 29

Input: graph representation of an optimisation problem having a degree distribution. — S211

Identify optimal parameters for a graph of uniform connectivity, $d$ — S212

Apply a correction to the optimal parameters based on the degree distribution. — S213

Figure 30

Receive a problem *G* having a
graph representation — S221

Receive a graph
representation *H* of a
quantum hardware — S222

Construct a graph *S*, where
each vertex is a partial circuit
of swap and interaction terms — S223

S224 — Identify all interactions to be
implemented in *G* and
identify a frontier of nodes
linked to the starting node by
an edge in *S*

S225 — Explore *S* by selecting a node
from the frontier to become
the current node — S228

S226 — Update the frontier

S229 — Does current node include all
interactions in *G*? N

Y

S2210 — Output interactions encoded
in current node

Figure 31

Europäisches
Patentamt

European
Patent Office

Office européen
des brevets

## EUROPEAN SEARCH REPORT

**Application Number**

EP 25 19 7755

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HA HUY PHUC NGUYEN ET AL: "Improve the Quantum Approximate Optimization Algorithm with Genetic Algorithm", PROCEEDINGS OF THE 15TH INTERNATIONAL CONFERENCE ON EDUCATION TECHNOLOGY AND COMPUTERS, ACMPUB27, NEW YORK, NY, USA, 7 December 2023 (2023-12-07), pages 655-662, XP098389343, DOI: 10.1145/3628797.3628818 ISBN: 979-8-4007-1673-7 | 1-3,7,8, 13-15 | INV. G06N5/01 G06N10/60  ADD. G06N3/126 |
| Y | * Abstract; Section 1; Section 2; Section 3; Section 5 * | 4,5,9-11 | |
| A | | 6,12 | |
| | ----- | | |
| X | MOUSSA CHARLES ET AL: "Tabu-Driven Quantum Neighborhood Samplers", 27 March 2021 (2021-03-27), SPRINGER, PAGE(S) 100 - 119, XP047587198, | 1-3,6-8, 12-15 | |
| Y | * Abstract; Section 1; Section 2; Section 3; Algorithm 1 * | 4,5,9-11 | |
| | ----- | | |
| Y | SHREE HARI SURESHBABU ET AL: "Parameter Setting in Quantum Approximate Optimization of Weighted Problems", ARXIV.ORG, CORNELL UNIVERSITY LIBRARY, 201 OLIN LIBRARY CORNELL UNIVERSITY ITHACA, NY 14853, 24 May 2023 (2023-05-24), XP091518434, | 4,5 | **TECHNICAL FIELDS SEARCHED (IPC)**  G06N |
| A | * Section III * | 1-3,6-15 | |
| | ----- | | |
| Y | LAURA CLINTON ET AL: "Towards near-term quantum simulation of materials", ARXIV.ORG, CORNELL UNIVERSITY LIBRARY, 201 OLIN LIBRARY CORNELL UNIVERSITY ITHACA, NY 14853, 30 May 2022 (2022-05-30), XP091235110, | 9,10 | |
| A | * page 40 - page 41 * | 1-8, 11-15 | |
| | ----- | | |
| | -/-- | | |

The present search report has been drawn up for all claims

| Place of search | Date of completion of the search | Examiner |
|---|---|---|
| The Hague | 27 November 2025 | Popa, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................
& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 25 19 7755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZULEHNER ALWIN ET AL: "An Efficient Methodology for Mapping Quantum Circuits to the IBM QX Architectures", IEEE TRANSACTIONS ON COMPUTER-AIDED DESIGN OF INTEGRATED CIRCUITS AND SYSTEMS, IEEE, USA, vol. 38, no. 7, 7 July 2019 (2019-07-07), pages 1226-1236, XP011730579, ISSN: 0278-0070, DOI: 10.1109/TCAD.2018.2846658 [retrieved on 2019-06-17] | 11 | |
| A | * Abstract; Section I, Section III, Section IV * | 1-10, 12-15 | |
| | ----- | | |

TECHNICAL FIELDS SEARCHED (IPC)

The present search report has been drawn up for all claims

| Place of search | Date of completion of the search | Examiner |
|---|---|---|
| The Hague | 27 November 2025 | Popa, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ..........................................................................

& : member of the same patent family, corresponding document

EPO FORM 1503 03.82 (P04C01)